# EUROPEAN PATENT SPECIFICATION

(11) **EP 3 800 099 B1**
(45) Date of publication and mention of the grant of the patent: **15.03.2023**
(21) Application number: 19814034.5
(22) Date of filing: 31.05.2019
(51) Int. Cl.: B60W 30/16, B60W 50/14, B62J 99/00, B62K 23/02, F02D 29/02

(54) **LEANING VEHICLE**
NEIGEFAHRZEUG
VÉHICULE INCLINABLE

(30) Priority: 04.06.2018 JP 2018106918
(43) Date of publication of application: 07.04.2021
(73) Proprietor: Yamaha Hatsudoki Kabushiki Kaisha, Iwata-shi, Shizuoka 438-8501 (JP)
(72) Inventor: FUJITO, Manabu, Iwata-shi, Shizuoka 438-8501 (JP)
(74) Representative: Zimmermann, Tankred Klaus
(86) International application number: PCT/JP2019/021852
(87) International publication number: WO 2019/235395

(56) References cited:
- WO-A1-2017/030131
- WO-A1-2017/030131
- JP-A- H10 338 057
- JP-A- H10 338 057
- JP-A- 2004 034 917
- JP-A- 2007 001 383
- JP-A- 2007 084 056
- JP-A- 2013 067 302
- JP-A- 2013 067 302
- KR-A- 20170 016 177
- SE-A1- 1 650 608
- US-A1- 2008 046 159
- US-A1- 2011 251 768
- US-A1- 2016 267 796

## Description

### [Technical Field]

The present invention relates to a leaning vehicle configured to control acceleration in a vehicle forward direction based on the distance between a preceding vehicle and a host vehicle in a vehicle front-rear direction.

### [Background Art]

As a type of control for assisting the driving of an automobile, inter-vehicle distance control of adjusting the vehicle speed so that the distance in the vehicle front-rear direction between a preceding vehicle and a host vehicle is not shorter than a target distance is known. To be more specific, for example, when the distance between the preceding vehicle and the host vehicle becomes shorter than the target distance, the vehicle speed is lowered. Meanwhile, when the distance between the preceding vehicle and the host vehicle becomes longer than the target distance, the vehicle speed is increased to the extent that the vehicle speed does not exceed a maximum speed set in advance.

Patent Literature 1 and Patent Literature 2 propose to apply this inter-vehicle distance control to a leaning vehicle such as a motorcycle. The leaning vehicle is a vehicle which includes a vehicle body frame structured to lean in a vehicle rightward direction when turning right and lean in a vehicle leftward direction when turning left. In Patent Literature 1 and Patent Literature 2, a lane on which a host vehicle runs is detected by a camera mounted on the leaning vehicle. Furthermore, a preceding vehicle is detected by using the camera or a radar mounted on the leaning vehicle. Then it is determined whether the detected preceding vehicle is running on the detected lane. When it is determined that the detected preceding vehicle is running on the detected lane, the inter-vehicle distance control is performed based on this preceding vehicle.

KR 2017 0016177 A discloses a vehicle comprising at least one sensor for obtaining driving information of the vehicle and external environment information of the vehicle and a control unit which receives traveling information of a first group. Vehicles belonging to the first group travel in a road including a plurality of lanes. The control unit determines a target position of the vehicle with respect to the first group based on at least one of the driving information of the vehicle, the external environmental information of the vehicle, and a traveling information of the first group, and controls the vehicle to execute at least one operation corresponding to the target position.

SE 1 650 608 A1 discloses a method in a vehicle for determining if a preceding vehicle is suitable for platooning. The method comprises measuring at least one parameter of a tail of the preceding vehicle with a first sensor, of a first type, measuring at least one parameter of the tail of the preceding vehicle with a second sensor of a second type, estimating a probability value of the preceding vehicle being suitable for platooning based on the measured at least one parameter, and determining that the preceding vehicle is suitable for platooning when the determined probability value exceeds a threshold value.

JP 2013 067302 A teaches follow travel control to the following object vehicle by obtaining the information of the vehicle in the periphery by vehicle-to-vehicle communications, and using the information obtained from the following object vehicle by the vehicle-to-vehicle communications. When the own vehicle and the following object vehicle are located in the road where a plurality of lanes of the same traveling direction exist, the follow travel control is performed to the following object vehicle located in the same traveling direction and another lane to the own vehicle while traveling in the same traveling direction and another lane with the following object vehicle.

US 2008/046159 A1 teaches a single-track vehicle comprising a brake control unit, wherein the brake control unit includes a means for actively assisting the driver by means of an active variation or limitation of a vehicle speed or of a quantity derived therefrom, in particular vehicle acceleration.

US 2016/267796 A1 discloses a convoy travel control apparatus including a communication portion, a travel control portion, and a joining control portion. If the communication portion has received, from an independent vehicle not incorporated in a group of convoy vehicles travelling in convoy, request information to incorporate the independent vehicle into the group of convoy vehicles, the joining control portion determines a positional relationship between a position of the group of convoy vehicles and a position of the independent vehicle. If the independent vehicle is travelling along a side of the group of convoy vehicles, then in order to incorporate the independent vehicle into the group of convoy vehicles, the joining control portion exercises control on the group of convoy vehicles via the communication portion.

US 2011/251768 A1 teaches a system for longitudinal and lateral control of a vehicle. The system includes a camera generating a plurality of images representative of a field of view in front of the vehicle, and a controller receiving the plurality of images. The controller detects an object in the plurality of images, extracts a plurality of features from the plurality of images, generates a reference feature depiction based on the plurality of features from one or more of the plurality of images, generates a comparison feature depiction based on the plurality of features from one of the plurality of images, compares the reference feature depiction and the comparison feature depiction, and determines a longitudinal position of the vehicle relative to the object based on differences between the reference feature depiction and the comparison feature depiction.

JP H10 338057 A discloses a travel controller controlling a throttle opening, a shift position and a brake of its own vehicle so as to maintain a constant inter-vehicle distance to a preceding vehicle on the basis of an output signal of a radar, which detects an inter-vehicle distance between its own vehicle and the preceding vehicle and a vehicle speed signal

### [Citation List]

### [Patent Literatures]

[Patent Literature 1] WO 2016/021607 A1
[Patent Literature 2] WO 2017/030131 A1

### [Summary]

### [Technical Problem]

In Patent Literature 1 and Patent Literature 2, when plural preceding vehicles are running in the detected lane, a controller automatically selects a preceding vehicle based on which the inter-vehicle distance control is performed, from among the plural detected preceding vehicles.

An object of the present invention is to provide a leaning vehicle which allows a rider to select a preceding vehicle based on which inter-vehicle distance control is performed in accordance with a running situation.

### [Solution to Problem]

The invention provides a leaning vehicle according to claim 1. Further developments of the invention are defined in the dependent claims.
(1) A leaning vehicle of the present invention includes: a front wheel unit which includes at least one front wheel; a rear wheel unit which includes at least one rear wheel and is disposed rearward of the front wheel unit in a vehicle front-rear direction; a vehicle body frame which supports the front wheel unit and the rear wheel unit, and is structured to lean in a vehicle rightward direction when turning right and lean in a vehicle leftward direction when turning left; a preceding vehicle detector which is configured to detect a preceding vehicle in a detectable range which is forward of the leaning vehicle in the vehicle front-rear direction; and a controller configured to control acceleration in a vehicle forward direction by controlling rotation of at least one of the front wheel unit and the rear wheel unit, the controller executing an inter-vehicle distance control which is a control of acceleration in the vehicle forward direction based on a distance in the vehicle front-rear direction between the preceding vehicle and the leaning vehicle detected by the preceding vehicle detector when an inter-vehicle distance control mode is on, and the controller not executing the inter-vehicle distance control when the inter-vehicle distance control mode is off.

The width of the leaning vehicle in a vehicle left-right direction when the vehicle body frame stands upright is half as long as or shorter than the width of a lane, the leaning vehicle is able to run at a rider's selected position in the vehicle left-right direction in the lane, and the leaning vehicle further includes a selection operation unit configured to receive a target preceding vehicle selection operation by which the rider is allowed to directly or indirectly select at least one target preceding vehicle from among preceding vehicles in the detectable range of the preceding vehicle detector, the number of the at least one target preceding vehicle being smaller than the number of the preceding vehicles in the detectable range.

In the inter-vehicle distance control, the controller is configured to control the acceleration of the leaning vehicle in the vehicle forward direction based on a distance in the vehicle front-rear direction between the leaning vehicle and each of the at least one target preceding vehicle which is directly or indirectly selected in the target preceding vehicle selection operation by the rider using the selection operation unit, from among the preceding vehicles in the detectable range of the preceding vehicle detector.

The selection operation unit is configured to receive at least one of:
(a) a first selection operation in which the rider directly selects a host vehicle fixed detection range from among options, the host vehicle fixed detection range being part of the detectable range of the preceding vehicle detector, the host vehicle fixed detection range being positionally fixed relative to the leaning vehicle, and the host vehicle fixed detection range being used for detecting at least one first selection operation target preceding vehicle which is equivalent to the at least one target preceding vehicle, and
(c) a third selection operation in which the rider selects a reference preceding vehicle from among the preceding vehicles detected in the detectable range of the preceding vehicle detector, the reference preceding vehicle being a reference for determining another vehicle fixed detection range which is part of the detectable range of the preceding vehicle detector, the other vehicle fixed detection range being positionally fixed in the vehicle left-right direction relative to the reference preceding vehicle, and the reference preceding vehicle being used for detecting at least one third selection operation target preceding vehicle equivalent to the at least one target preceding vehicle.

When the selection operation unit receives the first selection operation, the controller performs the inter-vehicle distance control based on the at least one first selection operation target preceding vehicle which is either automatically selected by the controller or directly selected by the rider using the selection operation unit in a fourth selection operation, from among at least one preceding vehicle detected in the host vehicle fixed detection range selected by the rider in the first selection operation.

When the selection operation unit receives the third selection operation, the controller sets the other vehicle fixed detection range based on a position of the reference preceding vehicle selected by the rider in the third selection operation and performs the inter-vehicle distance control based on the at least one third selection operation target preceding vehicle which is either automatically selected by the controller or directly selected by the rider using the selection operation unit in a fifth selection operation, from among at least one preceding vehicle detected in the other vehicle fixed detection range.

The target preceding vehicle selection operation, by which the rider is allowed to indirectly select the at least one target preceding vehicle from among the preceding vehicles in the detectable range of the preceding vehicle detector, is any one of the first selection operation, a combination of the first selection operation and the fourth selection operation, the third selection operation, or a combination of the third selection operation and the fifth selection operation.

The leaning vehicle of the present invention includes a front wheel unit, a rear wheel unit, a vehicle body frame, a preceding vehicle detector, a controller, and a selection operation unit. The front wheel unit includes at least one front wheel and is supported by a vehicle body frame. The rear wheel unit includes at least one rear wheel and is supported by the vehicle body frame. The leaning vehicle body frame leans in the vehicle rightward direction when turning right and leans in the vehicle leftward direction when turning left. The width in the vehicle left-right direction of the leaning vehicle in which the vehicle body frame stands upright is equal to or less than a half of the width of the lane. The leaning vehicle is therefore narrower than an automobile (e.g., passenger vehicle) in the vehicle left-right direction. The preceding vehicle detector is configured to detect a preceding vehicle in a detectable range which is forward of the host vehicle in the vehicle front-rear direction. The controller is configured to control the acceleration of the leaning vehicle in the vehicle forward direction by controlling the rotation of at least one of the front wheel unit or the rear wheel unit. The controller is configured to perform inter-vehicle distance control when an inter-vehicle distance control mode is on. The inter-vehicle distance control is control of the acceleration in the vehicle forward direction based on the distance in the vehicle front-rear direction between at least one preceding vehicle detected by the preceding vehicle detector and the host vehicle. The controller does not perform the inter-vehicle distance control when the inter-vehicle distance control mode is off.

The selection operation unit is configured to receive a target preceding vehicle selection operation by which a rider is allowed to directly or indirectly select at least one target preceding vehicle from among preceding vehicles in the detectable range of the preceding vehicle detector. The controller executes the inter-vehicle distance control based on at least one target preceding vehicle directly or indirectly selected by the rider by using the selection operation unit from among preceding vehicles in the detectable range of the preceding vehicle detector. In other words, in the inter-vehicle distance control, the controller controls the acceleration of the host vehicle in the vehicle forward direction based on the distance in the vehicle front-rear direction between the host vehicle and each of the at least one target preceding vehicle directly or indirectly selected by the rider.

The leaning vehicle is narrower than an automobile (e.g., passenger vehicle) in the vehicle left-right direction. For this reason, in the lane, the leaning vehicle is able to run at a rider's selected position in the vehicle left-right direction. To put it differently, the rider of the leaning vehicle has a high degree of freedom in the selection of a traveling line of the leaning vehicle in the lane. In a lane in which the host vehicle (leaning vehicle) runs, plural leaning vehicles (preceding vehicles) may run at positions forward of the host vehicle.

In the above-described technologies of Patent Literature 1 and Patent Literature 2, a preceding vehicle based on which the inter-vehicle distance control is performed, is automatically selected from among preceding vehicles which are determined to be running in a lane detected by a camera, regardless of the position of the host vehicle (leaning vehicle) in the vehicle left-right direction in the lane.

Meanwhile, the leaning vehicle of the present invention allows the rider to directly or indirectly select the target preceding vehicle based on which the inter-vehicle distance control is performed. This allows the rider to select, in accordance with a running situation, the target preceding vehicle based on which the inter-vehicle distance control is performed, while maintaining the degree of freedom in the traveling line of the leaning vehicle in the lane. For example, the rider of the leaning vehicle may directly or indirectly select the target preceding vehicle based on which the inter-vehicle distance control is performed, in consideration of the position in the vehicle left-right direction of the host vehicle in the lane.

In addition to the above, because the rider directly or indirectly selects the target preceding vehicle, the target preceding vehicle running in the same lane as the host vehicle can be selected as a vehicle based on which the inter-vehicle distance control is performed, without using information of the position of the host vehicle running in the lane. For this reason, even if the leaning vehicle does not have a means for detecting the position of the lane, it is possible to perform the inter-vehicle distance control based on the target preceding vehicle running in the same lane as the host vehicle. Furthermore, even when the running situation does not allow the camera to detect the lane, it is possible to perform the inter-vehicle distance control based on the target preceding vehicle running in the same lane as the host vehicle. The running situation which does not allow the camera to detect the lane is, for example, a situation in which a mark (e.g. a white line) indicating an edge of the lane is not provided.

(2) According to an aspect of the present invention, the leaning vehicle of the present invention preferably includes the following arrangement.

The preceding vehicle detector is configured to emit an electromagnetic wave or an acoustic wave, and to detect a preceding vehicle in the detectable range by using the electromagnetic wave or the acoustic wave, without using a photographed image.

According to this arrangement, the preceding vehicle detector is able to detect a preceding vehicle in the detectable range without using a photographed image. In other words, the preceding vehicle detector is not a camera. As described above, in the leaning vehicle of the present invention, because the rider indirectly selects the target preceding vehicle, it is possible to perform the inter-vehicle distance control based on the target preceding vehicle running in the same lane as the host vehicle, without having a means for detecting the position of the lane. In other words, the leaning vehicle of the present invention may not include a camera for detecting the position of the lane. Furthermore, the preceding vehicle detector is not a camera. Therefore the leaning vehicle may not include a camera. When the leaning vehicle does not include a camera, processing of photographed images is unnecessary. Computation for the inter-vehicle distance control is therefore simplified.

(3) According to an aspect of the present invention, the leaning vehicle of the present invention preferably includes the following arrangement.

The controller is configured to control, in the inter-vehicle distance control, the acceleration in the vehicle forward direction based on both distance in the vehicle front-rear direction and distance in a vehicle left-right direction between the leaning vehicle and each of the at least one target preceding vehicle which is directly or indirectly selected in the target preceding vehicle selection operation by the rider using the selection operation unit, from among the preceding vehicles in the detectable range of the preceding vehicle detector.

The width in the vehicle left-right direction of the leaning vehicle in which the vehicle body frame is in an upright state is equal to or less than a half of the width of the lane. On this account, for example, there is a situation in which the host vehicle runs at a left portion of the lane while a motorcycle forward of the host vehicle runs at a right portion of the lane. When the distance in the vehicle left-right direction between the preceding vehicle and the host vehicle is long in this manner, the required distance in the vehicle front-rear direction between the preceding vehicle and the host vehicle is short. Meanwhile, when the distance in the vehicle left-right direction between the preceding vehicle and the host vehicle is short, the required distance in the vehicle front-rear direction between the preceding vehicle and the host vehicle is long. On this account, the distance which is a preferable distance in the vehicle front-rear direction between the target preceding vehicle and the host vehicle is different from the distance in the vehicle left-right direction between the target preceding vehicle and the host vehicle. In the inter-vehicle distance control, it is therefore possible to perform suitable inter-vehicle distance control in accordance with the position of the target preceding vehicle relative to the host vehicle by controlling the acceleration in the vehicle forward direction based on both the distance in the vehicle front-rear direction between the target preceding vehicle and the host vehicle and the distance in the vehicle left-right direction between the target preceding vehicle and the host vehicle.

(4) According to an aspect of the present invention, the leaning vehicle of the present invention preferably includes the following arrangement.

The selection operation unit is configured to receive at least one of (a) the first selection operation and (c) the third selection operation and is configured to receive (b) a second selection operation in which the rider directly selects at least one second selection operation target preceding vehicle which is equivalent to the at least one target preceding vehicle from among the preceding vehicles detected in the detectable range of the preceding vehicle detector, wherein, when the selection operation unit receives the second selection operation, the controller performs the inter-vehicle distance control based on the at least one second selection operation target preceding vehicle which is directly selected by the rider in the second selection operation, the target preceding vehicle selection operation, by which the rider is allowed to directly or indirectly select the at least one target preceding vehicle from among the preceding vehicles in the detectable range of the preceding vehicle detector is any one of the first selection operation, a combination of the first selection operation and the fourth selection operation, the second selection operation, the third selection operation, or a combination of the third selection operation and the fifth selection operation.

The first selection operation is an operation in which the rider selects, from plural options, a host vehicle fixed detection range. The host vehicle fixed detection range is part of the detectable range of the preceding vehicle detector and is used for detecting at least one target preceding vehicle (first selection operation target preceding vehicle). The position of the host vehicle fixed detection range relative to the host vehicle is fixed. On this account, the position of the host vehicle fixed detection range in the vehicle left-right direction relative to the host vehicle is unchanged even if the position in the vehicle left-right direction of the target preceding vehicle relative to the host vehicle is changed while running. When the selection operation unit receives the first selection operation, there are two methods to determine at least one first selection operation target preceding vehicle.

According to the first method, the controller automatically selects (determines) at least one first selection operation target preceding vehicle from among at least one preceding vehicle detected in the host vehicle fixed detection range. The controller performs the inter-vehicle distance control based on the at least one first selection operation target preceding vehicle selected by the controller. In the first method, the first selection operation target preceding vehicle is a preceding vehicle indirectly selected by the rider in the first selection operation from among preceding vehicles in the detectable range of the preceding vehicle detector.

In the second method, the rider selects, in the fourth selection operation and by using the selection operation unit, at least one first selection operation target preceding vehicle from among at least one preceding vehicle detected in the host vehicle fixed detection range. The controller performs the inter-vehicle distance control based on the at least one first selection operation target preceding vehicle directly selected by the rider in the fourth selection operation. In the second method, the first selection operation target preceding vehicle is a preceding vehicle directly selected by the rider in the first selection operation and in the fourth selection operation, from among preceding vehicles in the detectable range of the preceding vehicle detector.

The second selection operation is an operation in which the rider directly selects at least one target preceding vehicle (second selection operation target preceding vehicle) from among preceding vehicles detected in the detectable range of the preceding vehicle detector. When the selection operation unit receives the second selection operation, the controller performs the inter-vehicle distance control based on the at least one second selection operation target preceding vehicle which is directly selected by the rider.

The third selection operation is an operation in which the rider selects one reference preceding vehicle from among preceding vehicles detected in the detectable range of the preceding vehicle detector. The reference preceding vehicle is used as a reference of the other vehicle fixed detection range. When the selection operation unit receives the third selection operation, the controller sets the other vehicle fixed detection range based on the rider's selected position of the reference preceding vehicle. The other vehicle fixed detection range is part of the detectable range of the preceding vehicle detector and is used for detecting at least one target preceding vehicle (third selection operation target preceding vehicle). The position of the other vehicle fixed detection range relative to the reference preceding vehicle which is another vehicle is fixed in the vehicle left-right direction. On this account, the position of the other vehicle fixed detection range in the vehicle left-right direction relative to the reference preceding vehicle is unchanged even if the position in the vehicle left-right direction of the host vehicle relative to the reference preceding vehicle is changed while running. The width in the vehicle left-right direction of the other vehicle fixed detection range may be set in advance. When the selection operation unit receives the third selection operation, there are two methods to determine at least one third selection operation target preceding vehicle.

According to the first method, the controller automatically selects (determines) at least one third selection operation target preceding vehicle from among at least one preceding vehicle detected in the other vehicle fixed detection range. The controller performs the inter-vehicle distance control based on the at least one third selection operation target preceding vehicle selected by the controller. In the first method, the third selection operation target preceding vehicle is a preceding vehicle indirectly selected by the rider in the third selection operation from among preceding vehicles in the detectable range of the preceding vehicle detector.

In the second method, the rider selects, in the fifth selection operation, by using the selection operation unit, at least one third selection operation target preceding vehicle from among at least one preceding vehicle detected in the other vehicle fixed detection range selected by the rider in the third selection operation. The controller performs the inter-vehicle distance control based on the at least one third selection operation target preceding vehicle directly selected by the rider in the fifth selection operation. In the second method, the third selection operation target preceding vehicle is a preceding vehicle directly selected by the rider in the third selection operation and the fifth selection operation, from among preceding vehicles in the detectable range of the preceding vehicle detector.

As such, as the target preceding vehicle selection operation, the selection operation unit of the present invention is configured to receive at least one of the first selection operation, a combination of the first selection operation and the fourth selection operation, the second selection operation, the third selection operation, or a combination of the third selection operation and the fifth selection operation. The leaning vehicle of the present invention allows the rider to indirectly select the target preceding vehicle based on which the inter-vehicle distance control is performed, by only the first selection operation or only the third selection operation. The leaning vehicle of the present invention allows the rider to directly select the target preceding vehicle based on which the inter-vehicle distance control is performed, by a combination of the first selection operation and the fourth selection operation, only the second selection operation, or a combination of the third selection operation and the fifth selection operation. This allows the rider to select, in accordance with a running situation, the target preceding vehicle based on which the inter-vehicle distance control is performed, while maintaining the degree of freedom in the traveling line of the leaning vehicle in the lane.

(5) According to an aspect of the present invention, the leaning vehicle of the present invention preferably includes the following arrangement.

The selection operation unit is configured to receive the first selection operation, and the options in the first selection operation include (i) a reference detection range at a central portion in the vehicle left-right direction of the detectable range, (ii) at least one of: a right shifted detection range in which, in the vehicle left-right direction, a right end is rightward of a right end of the reference detection range and a left end is rightward of a left end of the reference detection range; a right enlarged detection range in which, in the vehicle left-right direction, a right end is rightward of the right end of the reference detection range and a left end is identical in position with the left end of the reference detection range; or a right detection range in which, in the vehicle left-right direction, a right end is identical in position with the right end of the reference detection range and a left end is rightward of the left end of the reference detection range, and (iii) at least one of: a left shifted detection range in which, in the vehicle left-right direction, a left end is leftward of the left end of the reference detection range and a right end is leftward of the right end of the reference detection range; a left enlarged detection range in which, in the vehicle left-right direction, a left end is leftward of the left end of the reference detection range and a right end is identical in position with the right end of the reference detection range; or a left detection range in which, in the vehicle left-right direction, a left end is identical in position with the left end of the reference detection range and a right end is leftward of the right end of the reference detection range.

According to this arrangement, the host vehicle fixed detection range is selected from options which are different from one another in the positions of the ends in the vehicle left-right direction. There is a case, for example, where the leaning vehicle runs at a left portion of the lane. In this case, because the right shifted detection range or the right enlarged detection range is selected as the host vehicle fixed detection range, the right end of the host vehicle fixed detection range in the lane is close to the right end of the lane as compared to a case where the reference detection range is selected. It is therefore possible to perform the inter-vehicle distance control based on a preceding vehicle running at around the right end of the lane in which the host vehicle runs. In this way, the rider is allowed to select, in accordance with the running situation, a target preceding vehicle based on which the inter-vehicle distance control is performed, while maintaining the degree of freedom in the traveling line in the lane in which the leaning vehicle runs. Furthermore, even if the leaning vehicle does not include a means for detecting the lane or the leaning vehicle runs in a running situation in which the lane cannot be detected by a camera, the inter-vehicle distance control can be performed precisely.

Meanwhile, because the right shifted detection range or the right detection range is selected as the host vehicle fixed detection range, it is possible to suppress the host vehicle fixed detection range from bulging out from the left end of the lane in which the host vehicle runs, as compared to a case where the reference detection range is selected. It is therefore possible to prevent a preceding vehicle running in a lane which is directly to the left of the lane in which the host vehicle runs from being selected as the first selection operation target preceding vehicle. As a result, even if the leaning vehicle does not include a means for detecting the lane or the leaning vehicle runs in a running situation in which the lane cannot be detected by a camera, the inter-vehicle distance control can be performed precisely. When the leaning vehicle runs at a right portion of the lane, the effect similar to the above can be achieved as the left shifted detection range, the left enlarged detection range, or the left detection range is selected.

(6) According to an aspect of the present invention, the leaning vehicle of the present invention preferably includes the following arrangement, in addition to the arrangement of the feature (5).

The options in the first selection operation further include (iv) at least one of: a left-right decreased detection range in which, in the vehicle left-right direction, a right end is leftward of the right end of the reference detection range and a left end is rightward of the left end of the reference detection range; or a left-right enlarged detection range in which, in the vehicle left-right direction, a right end is rightward of the right end of the reference detection range and a left end is leftward of the left end of the reference detection range.

According to this arrangement, when the leaning vehicle runs at a central portion of a lane, the rider is able to select either the reference detection range or the left-right enlarged detection range, or either the reference detection range or the left-right decreased detection range as the host vehicle fixed detection range, in accordance with the width of the lane. For example, the left-right decreased detection range is selected as the host vehicle fixed detection range when the vehicle runs in a narrow lane, whereas the reference detection range is selected as the host vehicle fixed detection range when the vehicle runs in a wide lane. Alternatively, for example, the reference detection range is selected when the vehicle runs in a narrow lane, whereas the left-right enlarged detection range is selected when the vehicle runs in a wide lane. As the host vehicle fixed detection range is selected in accordance with the width of the lane, it is possible to cause the both ends in the vehicle left-right direction of the host vehicle fixed detection range to be close to the respective ends of the lane, while suppressing the host vehicle fixed detection range Ra from bulging out from the lane in which the host vehicle runs. It is therefore possible to prevent a vehicle running in a lane which is next to the lane in which the host vehicle runs from being selected as the first selection operation target preceding vehicle. Furthermore, it is possible to perform the inter-vehicle distance control based on a preceding vehicle running close to an end of the lane in which the host vehicle runs. In this way, the rider is allowed to select, in accordance with the running situation, a target preceding vehicle based on which the inter-vehicle distance control is performed, while maintaining the degree of freedom in the traveling line in the lane in which the leaning vehicle runs. Furthermore, even if the leaning vehicle does not include a means for detecting the lane or the leaning vehicle runs in a running situation in which the lane cannot be detected by a camera, the inter-vehicle distance control can be performed precisely.

Even if the width of the lane remains the same, either the reference detection range or the left-right decreased detection range or either the reference detection range or the left-right enlarged detection range may be selected depending on the running situation. For example, when the position in the vehicle left-right direction in the lane will be frequently changed, the left-right decreased detection range may be selected, or when the vehicle will continuously run at the central portion of the lane, the reference detection range may be selected. Alternatively, for example, when the position in the vehicle left-right direction in the lane will frequently be changed, the reference detection range may be selected, or when the vehicle will continuously run at the central portion of the lane, the left-right enlarged detection range may be selected. By performing the selection in this way, it is possible to suppress the host vehicle fixed detection range from bulging out from the lane in which the host vehicle runs. It is therefore possible to prevent a vehicle running in a lane which is next to the lane in which the host vehicle runs from being selected as the first selection operation target preceding vehicle. As a result, even if the leaning vehicle does not include a means for detecting the lane or the leaning vehicle runs in a running situation in which the lane cannot be detected by a camera, the inter-vehicle distance control can be performed precisely.

(7) According to an aspect of the present invention, the leaning vehicle of the present invention preferably includes the following arrangement, in addition to the arrangement of any one of the features (4) to (6).

The selection operation unit is configured to receive the first selection operation, and the first selection operation is an operation to select the host vehicle fixed detection range, which is achieved by one of: a rider's selection of at least one preceding vehicle not to be included in the host vehicle fixed detection range, from among the preceding vehicles detected in the detectable range of the preceding vehicle detector; a rider's selection of at least one preceding vehicle to be included in the host vehicle fixed detection range, from among the preceding vehicles detected in the detectable range of the preceding vehicle detector; or rider' selection of both at least one preceding vehicle not to be included in the host vehicle fixed detection range and at least one preceding vehicle to be included in the host vehicle fixed detection range, from among the preceding vehicles detected in the detectable range of the preceding vehicle detector.

When the first selection operation is an operation in which the host vehicle fixed detection range is selected by selecting at least one preceding vehicle not to be included in the host vehicle fixed detection range, from among preceding vehicles detected in the detectable range, the following effect can be achieved. A preceding vehicle running in the lane next to the lane in which the host vehicle runs is selectable as a preceding vehicle not to be included in the host vehicle fixed detection range. This makes it possible to suppress the host vehicle fixed detection range from bulging out from the lane in which the host vehicle runs. It is therefore possible to prevent a preceding vehicle running in a lane which is next to the lane in which the host vehicle runs from being selected as the first selection operation target preceding vehicle. As a result, even if the leaning vehicle does not include a means for detecting the lane or the leaning vehicle runs in a running situation in which the lane cannot be detected by a camera, the inter-vehicle distance control can be performed precisely.

When the first selection operation is an operation in which the host vehicle fixed detection range is selected by the rider by selecting at least one preceding vehicle to be included in the host vehicle fixed detection range, from among preceding vehicles detected in the detectable range, the following effect can be achieved. When a motorcycle (preceding vehicle) which is not the host vehicle runs at around an edge of the lane in which the host vehicle runs, this motorcycle can be selected as a vehicle to be included in the host vehicle fixed detection range. This makes it possible to cause an end in the vehicle left-right direction of the host vehicle fixed detection range to be close to an end of the lane. It is therefore possible to perform the inter-vehicle distance control based on a preceding vehicle running at around an end of the lane in which the host vehicle runs. In this way, the rider is allowed to select, in accordance with the running situation, a target preceding vehicle based on which the inter-vehicle distance control is performed, while maintaining the degree of freedom in the traveling line in the lane in which the leaning vehicle runs. Furthermore, even if the leaning vehicle does not include a means for detecting the lane or the leaning vehicle runs in a running situation in which the lane cannot be detected by a camera, the inter-vehicle distance control can be performed precisely.

When the first selection operation is an operation to select the host vehicle fixed detection range by selecting both at least one preceding vehicle not to be included in the host vehicle fixed detection range and at least one preceding vehicle to be included in the host vehicle fixed detection range, from among preceding vehicles detected in the detectable range, both of the above-described effects are achieved.

(8) According to an aspect of the present invention, the leaning vehicle of the present invention preferably includes the following arrangement, in addition to the arrangement of any one of the features (4) to (7).

When the selection operation unit receives the first selection operation, the controller selects, as one of the at least one first selection operation target preceding vehicle, (I) a preceding vehicle closest to the leaning vehicle in the vehicle front-rear direction, (II) a preceding vehicle closest to the leaning vehicle in the vehicle left-right direction, or (III) a preceding vehicle closest to the center of the host vehicle fixed detection range in the vehicle left-right direction, from among the preceding vehicles detected in the host vehicle fixed detection range selected by the rider in the first selection operation.

When the selection operation unit receives the third selection operation, the controller sets the other vehicle fixed detection range based on a position of the reference preceding vehicle selected by the rider in the third selection operation and selects, as one of the at least one third selection operation target preceding vehicle, (I) a preceding vehicle closest to the leaning vehicle in the vehicle front-rear direction, (II) a preceding vehicle closest to the leaning vehicle in the vehicle left-right direction, or (III) a preceding vehicle closest to the center of the other vehicle fixed detection range in the vehicle left-right direction, from among the preceding vehicles detected in the other vehicle fixed detection range.

Depending on the running situation, the preceding vehicle closest to the host vehicle in the vehicle front-rear direction is preferably set as the target preceding vehicle. In another running situation, the preceding vehicle closest to the host vehicle in the vehicle left-right direction is preferably set as the target preceding vehicle. In a further running situation, the preceding vehicle closest to the center of the detection range (the host vehicle fixed detection range or the other vehicle fixed detection range) in the vehicle left-right direction is preferably set as the target preceding vehicle. The controller selects, as the first selection operation target preceding vehicle or the third selection operation target preceding vehicle, (I) a preceding vehicle closest to the host vehicle in the vehicle front-rear direction, (II) a preceding vehicle closest to the host vehicle in the vehicle left-right direction, or (III) a preceding vehicle closest to the center of the detection range in the vehicle left-right direction, from among the preceding vehicles detected in the detection range (the host vehicle fixed detection range or the other vehicle fixed detection range). It is therefore possible to perform the inter-vehicle distance control suitable for the running situation.

(9) According to an aspect of the present invention, the leaning vehicle of the present invention preferably includes the following arrangement, in addition to the arrangement of any one of the features (4) to (8).

The selection operation unit is configured to receive the first selection operation, and the controller is configured to control, in the inter-vehicle distance control, the acceleration in the vehicle forward direction based on both distance in the vehicle front-rear direction and distance in the vehicle left-right direction between the leaning vehicle and each of two first selection operation target preceding vehicles which are either automatically selected by the controller or directly selected by the rider, using the selection operation unit in the fourth selection operation, from among preceding vehicles detected in the host vehicle fixed detection range selected by the rider in the first selection operation.

According to this arrangement, the inter-vehicle distance control is performed based simultaneously on two first selection operation target preceding vehicles. Hereinafter, one of the two first selection operation target preceding vehicles is denoted as a first target preceding vehicle, whereas the other one of the two target preceding vehicles is denoted as a second target preceding vehicle. For example, there is a case where a first target preceding vehicle is a motorcycle running at a position obliquely forward of the host vehicle and a second target preceding vehicle runs at a position directly in front of the host vehicle. The required distance in the vehicle front-rear direction between the preceding vehicle obliquely forward of the host vehicle and the host vehicle is shorter than the required distance in the vehicle front-rear direction between the preceding vehicle directly in front of the host vehicle and the host vehicle. For this reason, when the distance in the vehicle front-rear direction between the first target preceding vehicle obliquely forward of the host vehicle and the host vehicle is at the minimum distance, the distance in the vehicle front-rear direction between the second target preceding vehicle directly in front of the host vehicle and the host vehicle may be insufficient. In this regard, in the inter-vehicle distance control, the controller of the present invention controls the acceleration of the host vehicle based on the distance in the vehicle front-rear direction between the first target preceding vehicle and the host vehicle, the distance in the vehicle left-right direction between the first target preceding vehicle and the host vehicle, the distance in the vehicle front-rear direction between the second target preceding vehicle and the host vehicle, and the distance in the vehicle left-right direction between the second target preceding vehicle and the host vehicle. On this account, for example, when the first target preceding vehicle runs at a position obliquely forward of the host vehicle and the second target preceding vehicle runs at a position directly in front of the host vehicle, it is possible to perform the inter-vehicle distance control so that the required distance in the vehicle front-rear direction between the first target preceding vehicle and the host vehicle is secured and at the same time the required distance in the vehicle front-rear direction between the second target preceding vehicle and the host vehicle is also secured. In this way, the inter-vehicle distance control can be suitably performed in accordance with the positions of the first target preceding vehicle and the second target preceding vehicle relative to the host vehicle.

(10) According to an aspect of the present invention, the leaning vehicle of the present invention preferably includes the following arrangement, in addition to the arrangement of any one of the features (4) to (9).

The selection operation unit is configured to receive the second selection operation, and the second selection operation is an operation in which the rider is allowed to directly select two second selection operation target preceding vehicles from among the preceding vehicles detected in the detectable range of the preceding vehicle detector.

The controller is configured to control, in the inter-vehicle distance control, the acceleration in the vehicle forward direction based on both distance in the vehicle front-rear direction and distance in the vehicle left-right direction between the leaning vehicle and each of the two second selection operation target preceding vehicles directly selected by the rider in the second selection operation.

According to this arrangement, the inter-vehicle distance control is performed based simultaneously on two second selection operation target preceding vehicles. Hereinafter, one of the two second selection operation target preceding vehicles is denoted as a first target preceding vehicle, whereas the other one of the two second selection operation target preceding vehicles is denoted as a second target preceding vehicle. For example, there is a case where a first target preceding vehicle is a motorcycle running at a position obliquely forward of the host vehicle and a second target preceding vehicle runs at a position directly in front of the host vehicle. The required distance in the vehicle front-rear direction between the preceding vehicle obliquely forward of the host vehicle and the host vehicle is shorter than the required distance in the vehicle front-rear direction between the preceding vehicle directly in front of the host vehicle and the host vehicle. For this reason, when the distance in the vehicle front-rear direction between the first target preceding vehicle obliquely forward of the host vehicle and the host vehicle is at the minimum distance, the distance in the vehicle front-rear direction between the second target preceding vehicle directly in front of the host vehicle and the host vehicle may be insufficient. In this regard, in the inter-vehicle distance control, the controller of the present invention controls the acceleration of the host vehicle based on the distance in the vehicle front-rear direction between the first target preceding vehicle and the host vehicle, the distance in the vehicle left-right direction between the first target preceding vehicle and the host vehicle, the distance in the vehicle front-rear direction between the second target preceding vehicle and the host vehicle, and the distance in the vehicle left-right direction between the second target preceding vehicle and the host vehicle. On this account, for example, when the first target preceding vehicle runs at a position obliquely forward of the host vehicle and the second target preceding vehicle runs at a position directly in front of the host vehicle, it is possible to perform the inter-vehicle distance control so that the required distance in the vehicle front-rear direction between the first target preceding vehicle and the host vehicle is secured and at the same time the required distance in the vehicle front-rear direction between the second target preceding vehicle and the host vehicle is also secured. In this way, the inter-vehicle distance control can be suitably performed in accordance with the positions of the first target preceding vehicle and the second target preceding vehicle relative to the host vehicle.

(11) According to an aspect of the present invention, the leaning vehicle of the present invention preferably includes the following arrangement in addition to the arrangement of any one of the features (4) to (9).

The selection operation unit is configured to receive the third selection operation, the controller is configured to set the other vehicle fixed detection range based on a position of the reference preceding vehicle selected by the rider in the third selection operation, and the controller is configured to control, in the inter-vehicle distance control, the acceleration in the vehicle forward direction based on both distance in the vehicle front-rear direction and distance in the vehicle left-right direction between the leaning vehicle and each of two third selection operation target preceding vehicles which are either automatically selected by the controller from among the preceding vehicles detected in the other vehicle fixed detection range or directly selected by the rider using the selection operation unit in the fifth selection operation.

According to this arrangement, the inter-vehicle distance control is performed based simultaneously on two third selection operation target preceding vehicles. Hereinafter, one of the two third selection operation target preceding vehicles is denoted as a first target preceding vehicle, whereas the other one of the two third selection operation target preceding vehicles is denoted as a second target preceding vehicle. For example, there is a case where a first target preceding vehicle is a motorcycle running at a position obliquely forward of the host vehicle and a second target preceding vehicle runs at a position directly in front of the host vehicle. The required distance in the vehicle front-rear direction between the preceding vehicle obliquely forward of the host vehicle and the host vehicle is shorter than the required distance in the vehicle front-rear direction between the preceding vehicle directly in front of the host vehicle and the host vehicle. For this reason, when the distance in the vehicle front-rear direction between the first target preceding vehicle obliquely forward of the host vehicle and the host vehicle is at the minimum distance, the distance in the vehicle front-rear direction between the second target preceding vehicle directly in front of the host vehicle and the host vehicle may be insufficient. In this regard, in the inter-vehicle distance control, the controller of the present invention controls the acceleration of the host vehicle based on the distance in the vehicle front-rear direction between the first target preceding vehicle and the host vehicle, the distance in the vehicle left-right direction between the first target preceding vehicle and the host vehicle, the distance in the vehicle front-rear direction between the second target preceding vehicle and the host vehicle, and the distance in the vehicle left-right direction between the second target preceding vehicle and the host vehicle. On this account, for example, when the first target preceding vehicle runs at a position obliquely forward of the host vehicle and the second target preceding vehicle runs at a position directly in front of the host vehicle, it is possible to perform the inter-vehicle distance control so that the required distance in the vehicle front-rear direction between the first target preceding vehicle and the host vehicle is secured and at the same time the required distance in the vehicle front-rear direction between the second target preceding vehicle and the host vehicle is also secured. In this way, the inter-vehicle distance control can be suitably performed in accordance with the positions of the first target preceding vehicle and the second target preceding vehicle relative to the host vehicle.

(12) According to an aspect of the present invention, the leaning vehicle of the present invention preferably includes the following arrangement.

The selection operation unit is configured to receive the second selection operation, the controller is configured to set a target preceding vehicle monitoring range which is part of the detectable range of the preceding vehicle detector and is fixed in position relative to the leaning vehicle, based on a position of the at least one second selection operation target preceding vehicle when the at least one second selection operation target preceding vehicle is selected in the second selection operation, and when at least one of the at least one second selection operation target preceding vehicle selected in the second selection operation goes out from the target preceding vehicle monitoring range, the controller stops the inter-vehicle distance control based on the second selection operation target preceding vehicle which goes out from the target preceding vehicle monitoring range.

When a second selection operation target preceding vehicle selected by the rider moves to a lane next to the lane in which the host vehicle runs, the second selection operation target preceding vehicle may be still in the detectable range but out of the target preceding vehicle monitoring range. When the second selection operation target preceding vehicle goes out from the target preceding vehicle monitoring range, the controller stops the inter-vehicle distance control based on this second selection operation target preceding vehicle. As a result, even if the leaning vehicle does not include a means for detecting the lane or the leaning vehicle runs in a running situation in which the lane cannot be detected by a camera, the inter-vehicle distance control can be further performed precisely.

(13) According to an aspect of the present invention, the leaning vehicle of the present invention preferably includes the following arrangement, in addition to the arrangement of the feature (12).

The selection operation unit is configured to receive the second selection operation, and when receiving the second selection operation, the selection operation unit is able to receive at least one of: an operation to select at least one preceding vehicle not to be included in the target preceding vehicle monitoring range, from among the preceding vehicles detected in the detectable range of the preceding vehicle detector; an operation to select at least one preceding vehicle which is not the at least one second selection operation target preceding vehicle and is to be included in the target preceding vehicle monitoring range, from among the preceding vehicles detected in the detectable range of the preceding vehicle detector; or an operation to select at least one preceding vehicle not to be included in the target preceding vehicle monitoring range and at least one preceding vehicle which is not the at least one second selection operation target preceding vehicle and is to be included in the target preceding vehicle monitoring range, from among the preceding vehicles detected in the detectable range of the preceding vehicle detector.

When the selection operation unit receives the operation to select the at least one preceding vehicle not to be included in the target preceding vehicle monitoring range together with the second selection operation, the controller sets the target preceding vehicle monitoring range based on a position of the at least one second selection operation target preceding vehicle when the at least one second selection operation target preceding vehicle is selected and a position at the time of the selection of the at least one preceding vehicle not to be included in the target preceding vehicle monitoring range.

When the selection operation unit receives the operation to select the at least one preceding vehicle which is not the at least one second selection operation target preceding vehicle and is to be included in the target preceding vehicle monitoring range together with the second selection operation, the controller sets the target preceding vehicle monitoring range based on a position at the time of the selection of the at least one second selection operation target preceding vehicle and a position at the time of the selection of the a least one preceding vehicle to be included in the target preceding vehicle monitoring range.

When the selection operation unit receives the operation to select at the least one preceding vehicle not to be included in the target preceding vehicle monitoring range and the at least one preceding vehicle which is not the at least one second selection operation target preceding vehicle and is to be included in the target preceding vehicle monitoring range, together with the second selection operation, the controller sets the target preceding vehicle monitoring range based on a position at the time of the selection of the at least one second selection operation target preceding vehicle, a position at the time of the selection of the at least one preceding vehicle not to be included in the target preceding vehicle monitoring range, and a position at the time of the selection of the at least one preceding vehicle to be included in the target preceding vehicle monitoring range.

According to this arrangement, it is possible to cause both ends in the vehicle left-right direction of the target preceding vehicle monitoring range to be close to the respective ends of the lane, while suppressing the target preceding vehicle monitoring range from bulging out from the lane in which the host vehicle runs. As a result, even if the leaning vehicle does not include a means for detecting the lane or the leaning vehicle runs in a running situation in which the lane cannot be detected by a camera, the inter-vehicle distance control can be further performed precisely.

(14) According to an aspect of the present invention, the leaning vehicle of the present invention preferably includes the following arrangement.

The leaning vehicle includes a handle unit having two grips. The selection operation unit includes a switch which is operable by a finger of a hand holding one of the two grips.

According to this arrangement, the rider is able to operate the selection operation unit not only when the leaning vehicle is not running but also when the leaning vehicle is running.

(15) According to an aspect of the present invention, the leaning vehicle of the present invention preferably includes the following arrangement.

The selection operation unit includes a touch panel configured to receive the target preceding vehicle selection operation when the leaning vehicle is not running.

According to this arrangement, the rider is able to make an input to the touch panel while seeing the touch panel. This allows the rider to easily make an input.

(16) According to an aspect of the present invention, the leaning vehicle of the present invention preferably includes the following arrangement in addition to the arrangement of any one of the features (4) to (13).

The selection operation unit includes a touch panel configured to receive the first selection operation when the leaning vehicle is not running.

(17) According to an aspect of the present invention, the leaning vehicle of the present invention preferably includes the following arrangement in addition to the arrangement of the feature (14).

The leaning vehicle includes a display which is viewable by the rider and displays options which are selectable by the using the switch.

According to this arrangement, the rider is able to perform the target preceding vehicle selection operation by means of the switch with reference to the information on the display. This helps the rider to perform the target preceding vehicle selection operation.

(18) According to an aspect of the present invention, the leaning vehicle of the present invention preferably includes the following arrangement, in addition to the arrangement of any one of the features (4) to (13).

The leaning vehicle includes a handle unit having two grips. The selection operation unit includes a switch which is operable by a finger of a hand holding one of the two grips. While the leaning vehicle is running, the switch is configured to receive at least one of the first selection operation, the second selection operation, the third selection operation, the fourth selection operation, or the fifth selection operation.

### <<Definitions of Terms>>

In the present invention, a preceding vehicle is a vehicle which runs at a position forward of a host vehicle, in the same or substantially same running direction as the host vehicle. The preceding vehicle may run in the same lane as the host vehicle or may run in a lane next to the lane in which the host vehicle runs. When the preceding vehicle runs in the same lane as the host vehicle, the preceding vehicle and the host vehicle are identical or substantially identical with each other in the running direction. When the preceding vehicle runs in a lane next to the lane in which the host vehicle runs, the preceding vehicle and the host vehicle are identical or substantially identical with each other in the running direction, on condition that the two lanes are identical with each other in a vehicle flow direction.

A target preceding vehicle selection operation in the present invention is an operation to directly or indirectly select at least one target preceding vehicle from among plural preceding vehicles in a detectable range of a preceding vehicle detector. The preceding vehicle detector may not actually detect all preceding vehicles in the detectable range. The preceding vehicles are only required to be in the detectable range of the preceding vehicle detector.

The target preceding vehicle selection operation of the present invention may be an operation performed by a rider to indirectly select one preceding vehicle from among plural preceding vehicles in a detectable range. The indirect selection of one target preceding vehicle by the rider from among the preceding vehicles in the detectable range is not a direct selection of a target preceding vehicle by the rider but an operation of narrowing down the preceding vehicles in the detectable range into at least one preceding vehicle which may be set as a target preceding vehicle. The definition of the indirect selection of at least one target preceding vehicle from among the preceding vehicles in the detectable range by the rider is almost identical with the above except the number of the target preceding vehicles.

The target preceding vehicle selection operation of the present invention is a selection from among plural selectable options by a selection operation unit. The target preceding vehicle selection operation of the present invention includes at least one execution of the selection from among plural selectable options by the selection operation unit. The target preceding vehicle selection operation may include only one execution of the selection from among plural selectable options by the selection operation unit, or may include two or more executions of the selection. By executing the selection from among plural selectable options by the selection operation unit at least once, the rider directly or indirectly selects at least one target preceding vehicle from among the preceding vehicles in the detectable range of the preceding vehicle detector. Options in a first selection operation are options for selecting a host vehicle fixed detectable range. Options in a fourth selection operation are preceding vehicles detected in a host vehicle fixed detection range. Options in a second selection operation are preceding vehicles detected in the detectable range of the preceding vehicle detector. Options in a third selection operation are preceding vehicles detected in the detectable range of the preceding vehicle detector. Options in a fifth selection operation are preceding vehicles detected in another vehicle fixed detection range.

The target preceding vehicle selection operation of the present invention may additionally function as an operation of switching an inter-vehicle distance control mode from off to on. The target preceding vehicle selection operation of the present invention may not additionally function as the operation of switching the inter-vehicle distance control mode from off to on. The target preceding vehicle selection operation of the present invention is not an operation solely for switching the inter-vehicle distance control mode from off to on. When the target preceding vehicle selection operation of the present invention does not additionally function as the operation of switching the inter-vehicle distance control mode from off to on, a target preceding vehicle selection operation unit is configured to receive a selection operation while the inter-vehicle distance control mode is maintained to be on or off. The target preceding vehicle selection operation unit may be configured to receive a selection input while the inter-vehicle distance control mode is maintained to be on, and may be configured to receive a selection operation while the inter-vehicle distance control mode is maintained to be off. The target preceding vehicle selection operation unit may be configured to receive a selection input while the inter-vehicle distance control mode is maintained to be on, and may not be configured to receive a selection operation while the inter-vehicle distance control mode is maintained to be off. The target preceding vehicle selection operation unit may not be configured to receive a selection input while the inter-vehicle distance control mode is maintained to be on, and may be configured to receive a selection operation while the inter-vehicle distance control mode is maintained to be off.

In the present invention, a state in which the inter-vehicle distance control mode is turned on may or may not be restricted to a state in which the inter-vehicle distance control is under way. For example, when the inter-vehicle distance control mode cannot be turned on only after the target preceding vehicle is determined, the state in which the inter-vehicle distance control mode is turned on is restricted to the state in which the inter-vehicle distance control mode is under way. Meanwhile, for example, when the target preceding vehicle can be determined after the inter-vehicle distance control mode is turned on, the state in which the inter-vehicle distance control mode is turned on is not restricted to the state in which the inter-vehicle distance control mode is under way. From the turn on of the inter-vehicle distance control mode to the determination of the target preceding vehicle, the vehicle speed of the leaning vehicle may be controlled to be constant.

In the present invention, selection of the host vehicle fixed detection range by the rider does not encompass determination of the host vehicle fixed detection range by the controller based on an operation which is performed by the rider for a purpose different from the selection of the host vehicle fixed detection range.

In the present invention, a vehicle body frame is a member which mainly receives stress in the vehicle. The vehicle body frame may be a frame formed by combining a plurality of components, or may be an integrally-molded frame. At least part of the vehicle body frame may have a monocoque structure in which a plate member receives stress. The monocoque structure is also known as a frameless structure.

In the present invention, a vehicle left-right direction is the left-right direction for the rider seated on the leaning vehicle. When the leaning vehicle is provided on a horizontal plane, the vehicle left-right direction is a horizontal direction. The vehicle left-right direction is unchanged depending on the inclination of the vehicle body frame in the vehicle left-right direction. A vehicle front-rear direction is the front-rear direction for the rider seated on the leaning vehicle. To be more specific, a vehicle forward direction is a direction in which the leaning vehicle with the vehicle body frame standing upright linearly moves on a horizontal plane. When the leaning vehicle is provided on the horizontal plane, the vehicle front-rear direction is a parallel direction. The vehicle left-right direction and the vehicle front-rear direction are orthogonal to each other.

In the present invention, when the vehicle body frame leans in the vehicle rightward direction, the vehicle body frame leans in the vehicle rightward direction with respect to the vehicle up-down direction. When the vehicle body frame leans in the vehicle rightward direction, the vehicle body frame leans in the vehicle rightward direction with respect to a grounding point of the vehicle. In other words, when the vehicle body frame leans in the vehicle rightward direction, an upper portion of the vehicle body frame moves in the vehicle rightward direction relative to a lower portion of the leaning vehicle body frame.

Rotation in this specification is not limited to a rotation of 360 degrees or more. The rotation in this specification encompasses rotation in less than 360 degrees. Swing in this specification indicates a rotation in less than 360 degrees.

In this specification, an expression "an entity A is provided forward of an entity B" indicates the following state, unless otherwise specified. The entire entity A is provided in a front space among two spaces on the respective sides of a plane which passes through the front-most end of the entity B and is orthogonal to the front-rear direction. The rear end of the entity A may be on the plane which passes through the front-most end of the entity B and is orthogonal to the front-rear direction. In this connection, the entities A and B may or may not be lined up in the front-rear direction. The same applies to an expression "an entity A is provided rearward of an entity B" under the same condition with regard to the entity B. Furthermore, the same applies to expressions "an entity A is provided above or below an entity B", and "an entity A is provided rightward of or leftward of an entity B" in the same condition with regard to the entity B.

In this specification, the center in the left-right direction of a region indicates the central line in the left-right direction of that region and its surroundings.

In this specification, a linear line along the A direction is not limited to a linear line in parallel to the A direction. Unless otherwise specified, the linear line along the A direction includes a linear line which intersects with the A direction at an angle which falls within the range from -45 degrees to 45 degrees. The same definition applies to other expressions using "along". The other expressions using "along" are, for example, "direction along the A direction", "plural B are lined up along the A direction", and "a single B is provided along the A direction". The direction A does not indicate any specific direction. The direction A may be the horizontal direction or the front-rear direction.

In this specification, at least one of plural options encompasses all conceivable combinations of the options. At least one of plural options may be one of the options, some of the options, or all of the options. For example, at least one of A, B, or C indicates only A, only B, only C, A and B, A and C, B and C, or A, B, and C.

In the present application, the terms "mounted", "connected", "coupled", and "supported" are used in broad sense. Furthermore, the terms "connected" and "coupled" do not merely indicate physical or mechanical connection and coupling. These terms encompass direct or indirect electric connection and coupling.

Unless otherwise defined, all terms (technical and scientific terms) used in this specification indicate meanings typically understood by a person with ordinary skill in the art in the technical field to which the present invention belongs. Terms defined in typical dictionaries indicate meanings used in related technologies and in the context of the present invention. The terms are not interpreted ideally or excessively formally.

In this specification, the term "preferable" is non-exclusive. The term "preferable" means "preferable but not limited to". In this specification, an arrangement which is "preferable" exerts at least the above-described effects of the arrangement of claim 1. In this specification, the term "may" is non-exclusive. The term "may" indicate "may but not must". In this specification, an arrangement which is explained by using the term "may" exerts at least the above-described effects of the arrangement of claim 1.

In the present invention, the preferred arrangements of the different aspects described above may be variously combined. Before an embodiment of the present invention is detailed, it is informed that the present invention is not limited to the configurations and layout of elements described below and/or shown in drawings. The present invention may be implemented as an embodiment other than the below-described embodiment. The present invention may be implemented as an embodiment other than the below-described embodiment. Furthermore, the present invention may be implemented by suitably combining below-described embodiments and modifications.

### [Advantageous Effects]

The present invention allows a rider to select, in accordance with a running situation, a target preceding vehicle based on which inter-vehicle distance control is performed, while maintaining the degree of freedom in a traveling line in a lane in which a leaning vehicle runs.

### [Brief Description of Drawings]

FIG. 1 illustrates an example of a running situation of a leaning vehicle of an embodiment.
FIG. 2 is a left side view of a leaning vehicle of Specific Example 1 of the embodiment.
FIG. 3 is a front view of the leaning vehicle of Specific Example 1 of the embodiment, when the leaning vehicle is turning.
FIG. 4 is a control block diagram of the leaning vehicle of Specific Example 1 of the embodiment.
FIG. 5(a) to FIG. 5(d) are plan views showing options of a host vehicle fixed detection range. FIG. 5(e) to FIG. 5(h) show images on a display when the options shown in FIG. 5(a) to FIG. 5(d) are selected, respectively.
FIG. 6 shows an example of a running situation when inter-vehicle distance control is performed based on one target preceding vehicle.
FIG. 7(a) shows an example of a running situation when the inter-vehicle distance control is performed based on one target preceding vehicle. FIG. 7(b) shows an example of a running situation when the inter-vehicle distance control is performed based on two target preceding vehicles.
FIG. 8 is a flow chart of an example of steps of the inter-vehicle distance control of Specific Example 1 of the embodiment.
FIG. 9(a) shows an example of a running situation of the leaning vehicle when a left-right enlarged detection range is selected. FIG. 9(b) shows an example of a running situation of the leaning vehicle when a right enlarged detection range is selected.
FIG. 10(a) shows an example of a running situation of the leaning vehicle when a reference detection range is selected.
FIG. 10(b) shows an example of a running situation of the leaning vehicle when the left-right enlarged detection range is selected.
FIG. 11(a) to FIG. 11(c) show modifications of the options of the host vehicle fixed detection range.
FIG. 12(a) shows an example of a running situation of the leaning vehicle in Specific Example 2 and Specific Example 3 of the embodiment. FIG. 12(b) shows an example of an image displayed on the display of the leaning vehicle shown in FIG. 12(a).
FIG. 13 is a flow chart of an example of steps of inter-vehicle distance control of Specific Example 2 of the embodiment.
FIG. 14(a) shows an example of a running situation of the leaning vehicle in Specific Example 3 of the embodiment.
FIG. 14(b) shows an example of an image displayed on the display of the leaning vehicle shown in FIG. 14(a).
FIG. 15 is a flow chart of an example of steps of inter-vehicle distance control of Specific Example 3 of the embodiment.
FIG. 16 is a left side view of a leaning vehicle of a modification.
FIG. 17 is a front view of the leaning vehicle shown in FIG. 16.
FIG. 18 is a plan view of a part of the leaning vehicle shown in FIG. 16.
FIG. 19 is a front view of the leaning vehicle shown in FIG. 16, when the leaning vehicle is turning.

### [Description of Embodiments]

### <<Embodiment of Present Invention>>

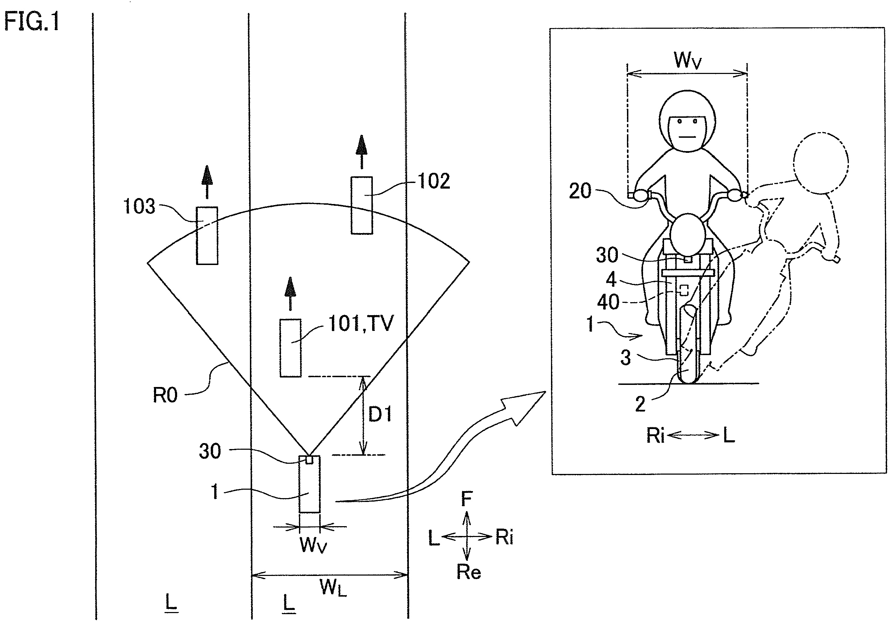

The following will describe a leaning vehicle 1 of an embodiment of the present invention with reference to FIG. 1. Arrows F and Re in FIG. 1 indicate a vehicle forward direction and a vehicle rearward direction, respectively, whereas arrows L and Ri indicate a vehicle leftward direction and a vehicle rightward direction, respectively.

The leaning vehicle 1 includes a front wheel unit 2, a rear wheel unit 3, a vehicle body frame 4, a preceding vehicle detector 30, a controller 40, and a selection operation unit 20.

The front wheel unit 2 includes at least one front wheel and is supported by a vehicle body frame 4. The rear wheel unit 3 includes at least one rear wheel and is supported by the vehicle body frame 4. FIG. 1 shows a case where the number of front wheels in the front wheel unit 2 is one and the number of rear wheels in the rear wheel unit 3 is one. The leaning vehicle 1 shown in FIG. 1 is therefore a motorcycle.

The leaning vehicle body frame 4 leans in the vehicle rightward direction (Ri direction) when turning right and leans in the vehicle leftward direction (L direction) when turning left. The width WV in the vehicle left-right direction of the leaning vehicle 1 when the vehicle body frame 4 stands upright is equal to or shorter than a half of the width WL of a lane L.

The preceding vehicle detector 30 is configured to detect a preceding vehicle in a detectable range R0 which is forward of the host vehicle 1 in the vehicle front-rear direction. In FIG. 1, three preceding vehicles 101, 102, and 103 exist in the detectable range R0.

The controller 40 is able to control the acceleration of the leaning vehicle 1 in the vehicle forward direction by controlling the rotation of at least one of the front wheel unit 2 or the rear wheel unit 3. The controller 40 is able to perform inter-vehicle distance control when an inter-vehicle distance control mode is on. The inter-vehicle distance control is control of the acceleration in the vehicle forward direction based on the distance in the vehicle front-rear direction between at least one preceding vehicle TV detected by the preceding vehicle detector 30 and the host vehicle 1. The controller 40 does not perform the inter-vehicle distance control when the inter-vehicle distance control mode is off. In FIG. 1, the target preceding vehicle TV is a preceding vehicle 101.

The selection operation unit 20 is configured to receive a target preceding vehicle selection operation by which a rider is able to directly or indirectly select at least one target preceding vehicle TV from among preceding vehicles in the detectable range R0 of the preceding vehicle detector 30.

The controller 40 executes the inter-vehicle distance control based on at least one target preceding vehicle TV directly or indirectly selected by the rider by using the selection operation unit 20 from among preceding vehicles in the detectable range of the preceding vehicle detector 30. In other words, in the inter-vehicle distance control, the controller 40 controls the acceleration of the host vehicle 1 in the vehicle forward direction based on the distance in the vehicle front-rear direction between the host vehicle 1 and each of the at least one target preceding vehicle TV directly or indirectly selected by the rider.

The leaning vehicle 1 is narrower than a passenger vehicle in the vehicle left-right direction. For this reason, in the lane L, the leaning vehicle 1 is able to run at a position in the lane L in the vehicle left-right direction, which is selected by the rider. To put it differently, the rider of the leaning vehicle 1 has a high degree of freedom in selection of a traveling line of the leaning vehicle 1 in the lane L. In a lane in which the host vehicle 1 (leaning vehicle) runs, plural leaning vehicles (preceding vehicles) may run at positions forward of the host vehicle.

In the above-described technologies of Patent Literature 1 and Patent Literature 2, a preceding vehicle based on which the inter-vehicle distance control is performed is automatically selected from among preceding vehicles which are determined to be running in a lane detected by a camera, regardless of the position of the host vehicle (leaning vehicle) in the vehicle left-right direction in the lane.

Meanwhile, the leaning vehicle 1 of the present embodiment allows the rider to directly or indirectly select the target preceding vehicle TV based on which the inter-vehicle distance control is performed. This allows the rider to select, in accordance with a running situation, the target preceding vehicle TV based on which the inter-vehicle distance control is performed, while maintaining the degree of freedom in the traveling line of the leaning vehicle 1 in the lane. For example, the rider of the leaning vehicle 1 may directly or indirectly select the target preceding vehicle TV based on which the inter-vehicle distance control is performed, in consideration of the position in the vehicle left-right direction of the host vehicle 1 in the lane L.

In addition to the above, because the rider directly or indirectly selects the target preceding vehicle TV, the target preceding vehicle TV running in the same lane L as the host vehicle 1 can be selected as a vehicle based on which the inter-vehicle distance control is performed, without using information of the position of the host vehicle 1 running in the lane L. For this reason, even if the leaning vehicle 1 does not have a means for detecting the position of the lane L, it is possible to perform the inter-vehicle distance control based on the target preceding vehicle TV running in the same lane L as the host vehicle 1. Furthermore, even when the running situation does not allow the camera to detect the lane L, it is possible to perform the inter-vehicle distance control based on the target preceding vehicle TV running in the same lane L as the host vehicle. The running situation which does not allow the camera to detect the lane L is, for example, a situation in which a mark (e.g. a white line) indicating an edge of the lane L is not provided.

### «Specific Example 1 of Embodiment»

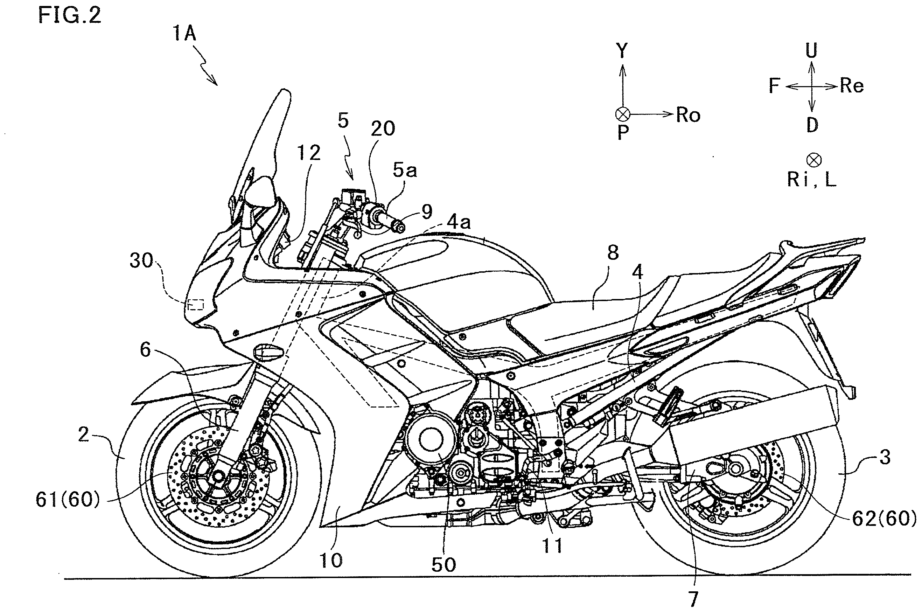

The following will describe Specific Example 1 of the embodiment with reference to FIG. 2 to FIG. 10. Basically, a leaning vehicle 1A of Specific Example 1 includes all features of the above-described leaning vehicle 1 of the embodiment of the present invention. Members identical with those in the above-described embodiment of the present invention are not explained again.

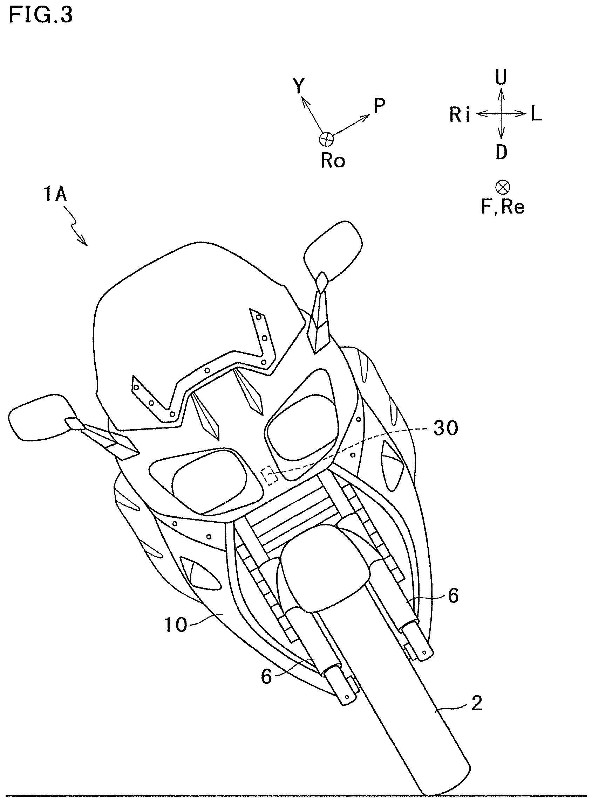

Arrows U and D in FIG. 2 and FIG. 3 indicate a vehicle upward direction and a vehicle downward direction, respectively. The vehicle up-down direction is perpendicular to a road surface. The arrows F, Re, L, and Ri have been defined as above. Hereinafter, a front-rear direction is a vehicle front-rear direction of the leaning vehicle 1A, unless otherwise stated. Hereinafter, a left-right direction is a vehicle left-right direction of the leaning vehicle 1A, unless otherwise stated. Hereinafter, an up-down direction is a vehicle up-down direction of the leaning vehicle 1A, unless otherwise stated. The vehicle left-right direction, the vehicle front-rear direction, and the vehicle up-down direction are orthogonal to one another. FIG. 2 is a left side view of the leaning vehicle 1A in which the vehicle body frame 4 stands upright. FIG. 3 is a front view of the leaning vehicle 1A in which the vehicle body frame 4 leans. In both FIG. 2 and FIG. 3, the road surface is horizontal. The leaning vehicle 1A is a motorcycle. Hereinafter, the leaning vehicle 1A is termed a motorcycle 1A.

As shown in FIG. 2, the motorcycle 1A includes a front wheel unit 2, a rear wheel unit 3, and a vehicle body frame 4. The vehicle body frame 4 is at least partially covered with a vehicle body cover 10. As shown in FIG. 3, the vehicle body frame 4 of the motorcycle 1A leans in the vehicle rightward direction when turning right. The vehicle body frame 4 of the motorcycle 1A leans in the vehicle leftward direction when turning left. Therefore, the width in the vehicle left-right direction of the motorcycle 1A in which the vehicle body frame 4 leans is longer than the width WV (see FIG. 1) in the vehicle left-right direction of the motorcycle 1A in which the vehicle body frame 4 stands upright. The width WV in the vehicle left-right direction of the motorcycle 1A in which the vehicle body frame 4 stands upright is equal to or shorter than a half of the width WL of the lane (see FIG. 1). In Japan, the width of a lane is equal to or longer than 2 meters. In Japan, the width of a lane is about 3.5 meters in highways. The width WV in the vehicle left-right direction of the motorcycle 1A in which the vehicle body frame 4 stands upright may be equal to or shorter than 1 meter.

As shown in FIG. 2, the vehicle body frame 4 has a head pipe 4a provided at a front portion. A steering shaft (not illustrated) is rotatably inserted into the head pipe 4a. An upper end portion of the steering shaft is connected to a handle unit 5. The handle unit 5 is connected to upper end portions of paired left and right front forks 6 so as not to be rotatable. The front forks 6 constitute a so-called telescopic cushioning mechanism. The lower end portions of the pair of front forks 6 support the front wheel unit 2. The front wheel unit 2 is therefore indirectly supported by the vehicle body frame 4. The front wheel unit 2 is composed of one front wheel. The front wheel includes a tire and a wheel. When the rider rotates the handle unit 5, a plane which passes through the center in the width direction of the front wheel and is perpendicular to the axle shaft leans with respect to the vehicle front-rear direction (FRe direction) of the motorcycle 1A.

As shown in FIG. 2, a front end portion of a swingarm 7 is swingably supported by a rear portion of the vehicle body frame 4. The rear end portion of the swingarm 7 supports the rear wheel unit 3. The rear wheel unit 3 is therefore indirectly supported by the vehicle body frame 4. The rear wheel unit 3 is composed of one rear wheel. In the same manner as the front wheel, the rear wheel includes a tire and a wheel.

The motorcycle 1A includes a driving device 50. The driving device 50 is supported by the vehicle body frame 4. The driving device 50 includes a driving source and a torque transmission mechanism. The driving source generates driving source torque. The torque transmission mechanism is arranged to be able to transmit at least part of the driving source torque generated by the driving source to at least one of the front wheel unit 2 or the rear wheel unit 3. In Specific Example 1, the driving source of the driving device 50 is an engine. In Specific Example 1, the torque transmission mechanism of the driving device 50 is arranged to be able to transmit at least part of the driving source torque generated by the engine to the rear wheel unit 3. The engine is not limited to any particular type. The engine may be a 4-stroke engine or a 2-stroke engine. The engine may be a gasoline engine or a diesel engine. The engine may be a single-cylinder engine or a multi-cylinder engine. The torque transmission mechanism includes a transmission and a clutch. In Specific Example 1, the transmission is a stepped transmission. The transmission may be a continuously variable transmission.

The motorcycle 1A includes a braking device 60. The braking device 60 includes a front brake 61 and a rear brake 62. The front brake 61 is provided at the front wheel unit 2. The front brake 61 is arranged to be able to apply braking force to the front wheel unit 2. The rear brake 62 is provided at the rear wheel unit 3. The rear brake 62 is arranged to be able to apply braking force to the rear wheel unit 3. Each of the front brake 61 and the rear brake 62 is, for example, a hydraulic brake. Each of the front brake 61 and the rear brake 62 is, for example, a hydraulic disc brake. The front brake 61 may be a known brake different from these types. The front brake 61 may be, for example, a hydraulic drum brake. The rear brake 62 may be, for example, a hydraulic drum brake. The front brake 61 and the rear brake 62 may be of different types.

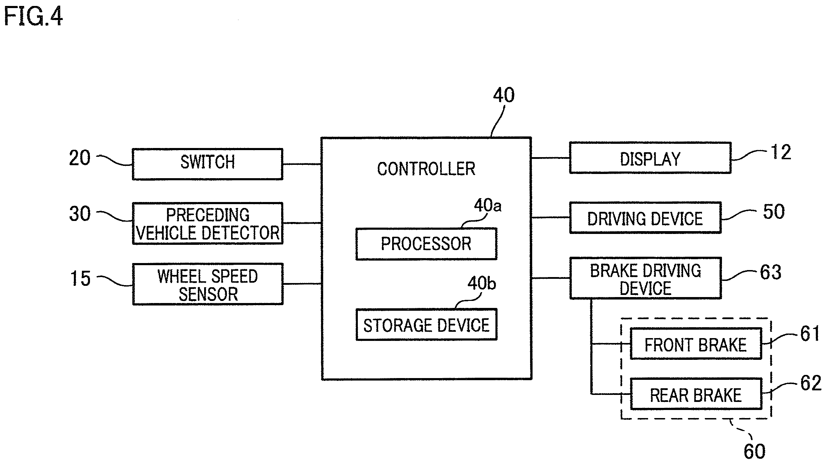

As shown in FIG. 2, the motorcycle 1A includes a seat 8. The seat 8 is supported by the vehicle body frame 4. The rider is seated on the seat 8. The front wheel unit 2 is at least partially forward of the seat 8. The rear wheel unit 3 is at least partially forward of the seat 8. The motorcycle 1A includes a battery (not illustrated) and a controller 40 (see FIG. 4). The battery supplies electric power to electronic devices such as the controller 40 and sensors.

The handle unit 5 is provided with a left grip 5a (see FIG. 2) and a right grip (not illustrated). The right grip is an accelerator grip. As the rider operates the accelerator grip, the driving torque generated by the engine of the driving device 50 is adjusted. In this regard, the controller 40 is able to adjust the driving source torque generated by the engine of the driving device 50 even when the accelerator grip is not operated.

A clutch lever 9 (see FIG. 2) is provided at a left portion of the handle unit 5. As the rider operates the clutch lever 9, the clutch of the driving device 50 is switched to a state in which at least part of the power is not transmitted. In this regard, the controller 40 is able to control the clutch even when the clutch lever 9 is not operated. The clutch lever 9 may not be provided when the transmission in the driving device 50 is a continuously variable transmission. In this case, the clutch of the driving device 50 may be a centrifugal clutch. The centrifugal clutch is arranged so that a power transmission state is automatically switched in accordance with the vehicle speed.

A front brake operator (not illustrated) is provided at a right portion of the handle unit 5. The front brake operator is a lever operated by a hand of the rider. As the rider operates the front brake operator, braking force is applied from the front brake 61 to the front wheel unit 2. In this regard, the controller 40 is able to control the front brake 61 even when the front brake operator is not operated.

As shown in FIG. 2, a shift pedal 11 is provided at a lower left portion of the motorcycle 1A. As the rider operates the shift pedal 11, the gear ratio of the stepped transmission of the driving device 50 is changed. In this regard, the controller 40 is able to change the gear ratio of the stepped transmission even when the shift pedal 11 is not operated. The shift pedal 11 is not provided when the transmission in the driving device 50 is a continuously variable transmission.

A rear brake operator (not illustrated) is provided at a lower right portion of the motorcycle 1A. The rear brake operator is a pedal operated by a foot of the rider. As the rider operates the rear brake operator, braking force is applied from the rear brake 62 to the rear wheel unit 3. In this regard, the controller 40 is able to control the rear brake 62 even when the rear brake operator is not operated. Alternatively, the rear brake operator may be a lever operated by a hand of the rider.

The front brake operator is connected to a front brake cylinder (not illustrated) whereas the rear brake operator is connected to a rear brake cylinder (not illustrated). The front brake cylinder and the rear brake cylinder are connected to the front brake 61 and the rear brake 62 through a brake driving device 63 (see FIG. 4). The brake driving device 63 includes members such as valves, a reserve tank, a pump, and an accumulator. The valves of the brake driving device 63 are controlled by the controller 40. When the front brake operator is operated, the liquid pressure in the front brake 61 increases and braking force is applied from the front brake 61 to the front wheel unit 2. When the rear brake operator is operated, the liquid pressure in the rear brake 62 increases and braking force is applied from the rear brake 62 to the rear wheel unit 3. By controlling the valves, the controller 40 is able to increase the liquid pressure of the front brake 61 even when the front brake operator is not operated. By controlling the valves, the controller 40 is able to increase the liquid pressure of the rear brake 62 even when the rear brake operator is not operated.

The motorcycle 1A may include a wireless communication device (not illustrated). The wireless communication device may be configured to receive a GNSS (Global Navigation Satellite System) signal. The wireless communication device may be configured to perform at least one of vehicle-to-vehicle communication or road-to-vehicle communication. The vehicle-to-vehicle communication is communication which is performed between on-board communication apparatuses. The road-to-vehicle communication is communication performed between a roadside communication apparatus mounted on a road and an on-board communication apparatus. The wireless communication device may be configured to receive information regarding a preceding vehicle wirelessly.

As shown in FIG. 4, the motorcycle 1A includes a wheel speed sensor 15. The wheel speed sensor 15 is provided at the front wheel unit 2 or the rear wheel unit 3. The wheel speed sensor 15 is configured to detect the rotation speed of the front wheel unit 2 or the rear wheel unit 3. The controller 40 detects the speed of the motorcycle 1A in the traveling direction based on a signal from the wheel speed sensor 15. When the handle unit 5 is being operated, the traveling direction of the motorcycle 1A is not identical with the vehicle forward direction. Furthermore, the traveling direction of the motorcycle 1A which is turning may not be identical with the vehicle forward direction.

The motorcycle 1A may include a front-rear direction speed information sensor which is configured to detect the speed and/or acceleration in the vehicle front-rear direction of the motorcycle 1A. The front-rear direction speed information sensor detects the speed and/or acceleration in the vehicle front-rear direction based on, for example, changes in the location information of the host vehicle 1A acquired by wireless communication. Instead of the front-rear direction speed information sensor, the speed and/or acceleration in the vehicle front-rear direction may be detected based on the location information of the host vehicle 1A obtained from the wireless communication device by the controller 40. The motorcycle 1A may include a left-right direction speed information sensor which is configured to detect the speed and/or acceleration in the vehicle left-right direction of the motorcycle 1A. The left-right direction speed information sensor detects the speed and/or acceleration in the vehicle left-right direction based on, for example, changes in the location information of the host vehicle 1A acquired wirelessly. Instead of the left-right direction speed information sensor, the speed and/or acceleration in the vehicle left-right direction may be detected based on the location information of the host vehicle 1A obtained from the wireless communication device by the controller 40.

The motorcycle 1A includes a steering angle sensor (not illustrated) configured to detect the steering angle of the handle unit 5. The steering angle of the handle unit 5 is the rotational angle of the steering shaft. The motorcycle 1A includes a roll gyro sensor which is configured to detect at least one of the roll angle, the roll rate (roll angular speed), or the roll angular acceleration of the vehicle body frame 4. The roll angle of the vehicle body frame 4 is a rotational angle about a roll axis Ro (see FIG. 2 and FIG. 3) of the vehicle body frame 4. The motorcycle 1A may include a yaw gyro sensor which is configured to detect at least one of the yaw angle, the yaw rate (yaw angular speed), or the yaw angular acceleration of the vehicle body frame 4. The yaw angle of the vehicle body frame 4 is a rotational angle about a yaw axis Y (see FIG. 2 and FIG. 3) of the vehicle body frame 4. The yaw axis Y is parallel to the vehicle up-down direction when the motorcycle 1A stands upright on a horizontal road surface. The yaw axis Y may slightly lean with respect to the vehicle up-down direction when the motorcycle 1A stands upright on a horizontal road surface. For example, the yaw axis Y may be parallel to the steering shaft. The motorcycle 1A may include a pitch gyro sensor which is configured to detect at least one of the pitch angle, the pitch rate (pitch angular speed), or the pitch angular acceleration of the vehicle body frame 4. The pitch angle of the vehicle body frame 4 is a rotational angle about a pitch axis P (see FIG. 2 and FIG. 3) of the vehicle body frame 4. The motorcycle 1A may include an inertial measurement unit (IMU). The IMU functions as the roll gyro sensor, the yar gyro sensor, and the pitch gyro sensor.

As shown in FIG. 2 and FIG. 3, the motorcycle 1A includes the preceding vehicle detector 30. The preceding vehicle detector 30 is configured to detect an object forward of the motorcycle 1A. The preceding vehicle detector 30 is therefore able to detect a preceding vehicle which is running at a position forward of the motorcycle 1A. The installation location of the preceding vehicle detector 30 may be different from the location shown in FIG. 2 and FIG. 3. The preceding vehicle detector 30 is configured to detect the shortest distance between an object and the preceding vehicle detector 30 and detect information regarding a position and a direction of the object relative to the preceding vehicle detector 30.

FIG. 1 shows a detectable range R0 of the preceding vehicle detector 30. To be more specific, the detectable range R0 shown in FIG. 1 is a detectable range R0 when the motorcycle 1A is viewed downward from above. The angle of the detectable range R0 when the motorcycle 1A is viewed downward from above is not limited to the angle shown in FIG. 1. The angle of the detectable range R0 is less than 180 degrees. The angle of the detectable range R0 may be less than 90 degrees.

The preceding vehicle detector 30 is configured to detect an object by using an electromagnetic wave or an acoustic wave (sound wave). The preceding vehicle detector 30 does not photograph an image. The preceding vehicle detector 30 is configured to detect an object without using a photographed image. In other words, the preceding vehicle detector 30 is not a camera. The motorcycle 1A does not have a camera which photographs an image of an object forward of the motorcycle 1A.

The preceding vehicle detector 30 is configured to emit an electromagnetic wave or an acoustic wave (sound wave) and receive a reflected wave from an object. Examples of the preceding vehicle detector 30 configured to detect an object by emitting an electromagnetic wave include a laser radar, a microwave radar, a millimeter wave radar, an infrared sensor, and a radio wave sensor. The laser radar is configured to emit laser light. The microwave radar, the millimeter wave radar, the infrared sensor, and the radio wave sensor emit the respective types of electromagnetic waves. The preceding vehicle detector 30 configured to detect an object by emitting an acoustic wave (sound wave) is, for example, an ultrasonic sensor configured to emit an ultrasonic wave. The preceding vehicle detector 30 may emit an electromagnetic wave or an acoustic wave (sound wave) to form a substantially quadrangular pyramid shape, a conical shape, or another shape. The emission direction of the preceding vehicle detector 30 is fixed. The preceding vehicle detector 30 may be arranged such that the emission direction is swingable in the vehicle left-right direction.

As shown in FIG. 2, the motorcycle 1A includes a display 12. The display 12 is provided forward of the handle unit 5. The display 12 may be provided at any position as long as the rider seated on the seat 8 is able to see the display 12. The display 12 is configured to display, for example, vehicle speed (speed in the traveling direction), a driving mode, warnings, and the like. The display 12 includes, for example, a liquid crystal display.

The handle unit 5 is provided with plural switches. These switches include a switch 20 shown in FIG. 2. The switches include a switch by which an operation to start or stop power supply from a battery to electric equipment can be received. The switches include a switch by which an operation to start or stop the engine (driving source) can be received.

The switches of the handle unit 5 include a switch by which an operation to select at least one driving mode from among plural driving modes and set the selected driving mode can be received. The switches can be operated by a finger of a hand holding the right grip 5a or the left grip. The driving modes include a manual driving mode and plural driving assist modes. The manual driving mode is a mode in which the motorcycle 1A is manually driven by the rider. Each driving assist mode is a mode in which the motorcycle 1A is manually driven by the rider and at the same time the driving by the rider is assisted. Depending on the types of the driving assist modes, two or more driving assist modes may be simultaneously set. The driving assist mode may be automatically set in accordance with the running situation, even if the setting of the mode is not performed by using the switch.

The driving assist modes include an inter-vehicle distance control mode in which the inter-vehicle distance control is performed. In the inter-vehicle distance control, the vehicle speed (speed in the traveling direction) is adjusted so that the distance in the vehicle front-rear direction between the host vehicle 1A and at least one preceding vehicle detected by the preceding vehicle detector 30 is not to be shorter than a target distance. This preceding vehicle based on which the inter-vehicle distance control is performed is termed a target preceding vehicle TV. The number of target preceding vehicles TV based on which the inter-vehicle distance control is performed may be limited to one. The inter-vehicle distance control may be performed based on one or two target preceding vehicles TV. In this specification, a preceding vehicle is a vehicle which runs at a position forward of the host vehicle 1A, in the same or substantially same running direction as the host vehicle 1A. In this specification, a preceding vehicle may or may not run in the same lane as the host vehicle. Control of the vehicle speed such that the distance in the vehicle front-rear direction between a preceding vehicle and the host vehicle is maintained at a target distance is typically termed Adaptive Cruise Control (ACC), Auto Cruise Control, or Active Cruise Control. The inter-vehicle distance control is preferably used in highways and roads exclusive for motor vehicles. In this connection, the roads exclusive for motor vehicles are roads without pedestrians. Motorcycles are allowed to run the roads exclusive for motor vehicles.

The driving assist modes may include a cruise control mode in which the vehicle speed is maintained to be constant. The driving assist modes may include an automatic brake mode in which an obstacle or a human body is detected and the brake is automatically activated.

A first selection operation by the rider can be received through the switch 20. A fourth selection operation by the rider may be received through the switch 20. The switch 20 is an example of the selection operation unit 20 of the embodiment of the present invention. The switch 20 can be operated by a finger of a hand holding the right grip 5a or the left grip. The switch 20 may function as the switch for selecting the driving mode.

The first selection operation is an operation in which the rider selects, from plural options, a host vehicle fixed detection range Ra for detecting one or two target preceding vehicles TV. The host vehicle fixed detection range Ra is part of the detectable range R0 of the preceding vehicle detector 30. In the host vehicle fixed detection range Ra, a position relative to the host vehicle 1A is fixed. In other words, the position of the host vehicle fixed detection range Ra relative to the detectable range R0 is fixed. The options of the host vehicle fixed detection range Ra are different from one another in terms of the position relative to the detectable range R0. In other words, the options of the host vehicle fixed detection range Ra are different from one another in terms of the positions of the ends in the vehicle left-right direction. The rider may select the host vehicle fixed detection range Ra from plural options based on, for example, a position in the lane in the vehicle left-right direction, where the rider plans to run. The width in the vehicle left-right direction of the host vehicle fixed detection range Ra is shorter than the width WL (see fig, 1) of a typical lane. The maximum width in the vehicle left-right direction of the host vehicle fixed detection range Ra is, for example, about 2.0 meters.

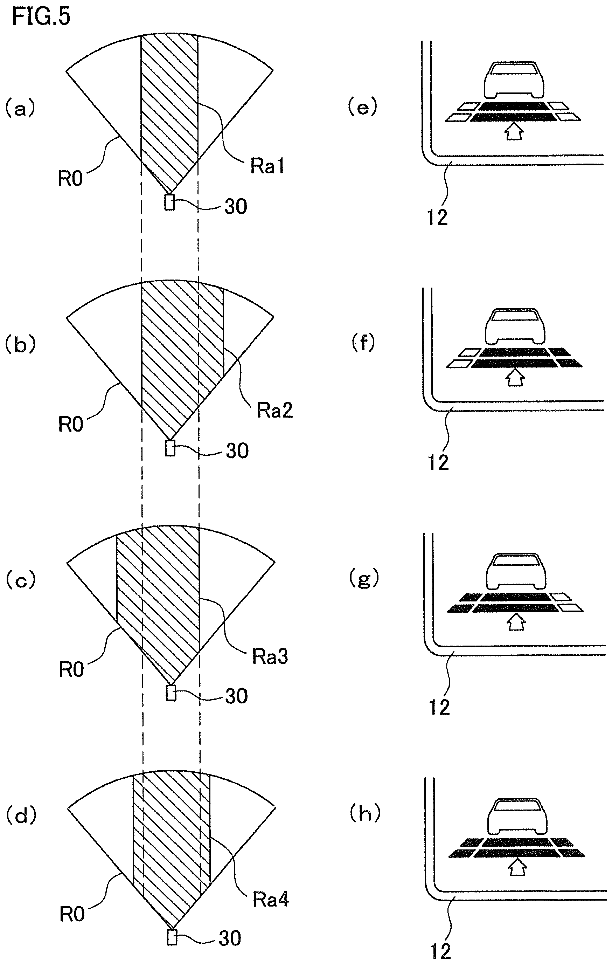

FIG. 5(a) to FIG. 5(d) show four options selectable in the first selection operation. The four options are a reference detection range Ra1, a right enlarged detection range Ra2, a left enlarged detection range Ra3, and a left-right enlarged detection range Ra4. The reference detection range Ra1 is at a central portion in the vehicle left-right direction of the detectable range R0. To put it differently, the center in the vehicle left-right direction of the reference detection range Ra1 is identical with the center in the vehicle left-right direction of the detectable range R0. In the vehicle left-right direction, the right end of the right enlarged detection range Ra2 is rightward of the right end of the reference detection range Ra1, and the left end of the range Ra2 is at the same position as the left end of the reference detection range Ra1. In the vehicle left-right direction, the left end of the left enlarged detection range Ra3 is leftward of the left end of the reference detection range Ra1, and the right end of the range Ra3 is at the same position as the right end of the reference detection range Ra1. The left enlarged detection range Ra3 is in line symmetry with the right enlarged detection range Ra2 about the center in the vehicle left-right direction of the detectable range R0. In the vehicle left-right direction, the right end of the left-right enlarged detection range Ra4 is rightward of the right end of the reference detection range Ra1 and the left end of the range Ra4 is leftward of the left end of the reference detection range Ra1. The length in the vehicle left-right direction of the left-right enlarged detection range Ra4 is identical with the length in the vehicle left-right direction of each of the right enlarged detection range Ra2 and the left enlarged detection range Ra3. The left-right enlarged detection range Ra4 is equivalent to a left-right enlarged detection range of the present invention. The left-right enlarged detection range Ra4 is equivalent to a reference detection range of the present invention, too. In this case, the reference detection range Ra1, the right enlarged detection range Ra2, and the left enlarged detection range Ra3 are equivalent to a left-right decreased detection range, a right shifted detection range, and a left shifted detection range of the present invention, respectively.

As shown in, for example, FIG. 5(a) to FIG. 5(h), the display 12 displays the option (host vehicle fixed detection range Ra) selected in the first selection operation. FIG. 5(a) to FIG. 5(h) show examples of images displayed on the display 12. FIG. 5(e) shows part of an image on the display 12 when the reference detection range Ra1 is selected. FIG. 5(f) shows part of an image on the display 12 when the right enlarged detection range Ra2 is selected. FIG. 5(g) shows part of an image on the display 12 when the left enlarged detection range Ra3 is selected. FIG. 5(h) shows part of an image on the display 12 when the left-right enlarged detection range Ra4 is selected. In FIG. 5(a) to FIG. 5(h), a mark indicating the backside of a vehicle is displayed in each image on the display 12. Below this mark, plural quadrangles are lined up in the left-right direction and the up-down direction of the plane of each figure. The length in the plane left-right direction of at least one quadrangle painted in black indicates the width in the vehicle left-right direction of the host vehicle fixed detection range Ra. The number of the quadrangles lined up in the plane up-down direction indicates the length of the target distance. The larger the number of black quadrangles lined up in the plane up-down direction, the longer the target distance is. While the number of the quadrangles lined up in the plane up-down direction is two in FIG. 5(e) to FIG. 5(h), the number may be three or more. While the number of the black quadrangles lined up in the plane up-down direction is two in FIG. 5(e) to FIG. 5(h), the number may be one, or may be three or more.

The display 12 may indicate a selected host vehicle fixed detection range Ra by a text or a character. For example, "1" may be displayed when the reference detection range Ra1 is selected and "R" may be displayed when the right enlarged detection range Ra2 is selected. The rider is able to perform the first selection operation by means of the switch 20 with reference to the information on the display 12. This helps the rider to perform the first selection operation. The display 12 may display all selectable options in the first selection operation.

Different images are displayed on the display 12 in accordance with the way of operating the switch 20. For example, the options of the first selection operation may be selected one by one each time the switch 20 is rotated at a predetermined angle or pressed once. In accordance with this operation of the switch 20, the display 12 switches the image indicating the selected option (host vehicle fixed detection range Ra). The selection of the option may be confirmed by using a switch different from the switch 20. The selection of the option may be confirmed by an operation input by the switch 20, which is different from the operation of the selection of the host vehicle fixed detection range Ra.

No matter whether the inter-vehicle distance control mode is on or off, the switch 20 may be able to receive the first selection operation. Only when the inter-vehicle distance control mode is on, the switch 20 may be able to receive the first selection operation. The controller 40 may automatically switch the inter-vehicle distance control mode from off to on when the switch 20 receives the first selection operation while the vehicle is running. Only when the inter-vehicle distance control mode is off, the switch 20 may be able to receive the first selection operation. The switch 20 may be able to receive the first selection operation both when the motorcycle 1A is running and when the motorcycle 1A is not running. The switch 20 may be able to receive the first selection operation only when the motorcycle 1A is not running. In this case, when the inter-vehicle distance control mode is turned on while the vehicle is running, the inter-vehicle distance control starts based on the host vehicle fixed detection range Ra selected when the vehicle was not running.

As shown in FIG. 4, the motorcycle 1A includes the controller 40 which is configured to control operations of parts of the motorcycle 1A. The controller 40 receives signals from sensors. The controller 40 is connected to the display 12 and the switches. The controller 40 is configured to control the driving device 50 and the braking device 60. The controller 40 may be composed of plural devices which are configured to communicate with one another by wire or wirelessly. For example, the controller 40 may include a device for controlling the driving device 50 and a device for controlling the braking device 60.

As shown in FIG. 4, the controller 40 includes a processor 40a and a storage device (storage) 40b. The processor 40a is, for example, a CPU (Central Processing Unit), a GPU (Graphics Processing Unit), a microcontroller, a micro processing unit, an application specific integrated circuit (ASIC), a programmable logic circuit (PLC), or a field programmable gate array (FPGA). The processor 40a may include a register. The storage device 40b stores data. The storage device 40b stores information necessary for processes executed by the processor 40a. The storage device 40b may include a ROM (Read Only Memory) and a RAM (Random Access Memory), for example. The RAM temporarily stores data when the processor 40a executes a program. The ROM stores a program executed by the processor 40a. The processor 40a is configured or programmed to execute driving assist control including inter-vehicle distance control. The controller 40 may include plural processors. The controller may include plural storage devices.

The controller 40 is able to calculate the distance in the vehicle front-rear direction between the motorcycle 1A and an object detected in the detectable range R0, based on a signal from the preceding vehicle detector 30. The controller 40 is able to calculate the distance in the vehicle left-right direction between the motorcycle 1A and an object detected in the detectable range R0, based on a signal from the preceding vehicle detector 30. The distance in the vehicle left-right direction between the motorcycle 1A and the object may be calculated based on a signal from the roll gyro sensor, in addition to the signal from the preceding vehicle detector 30.

The controller 40 is able to calculate the speed in the vehicle front-rear direction of an object detected in the detectable range R0 relative to the motorcycle 1A, based on a signal from the preceding vehicle detector 30. The controller 40 is able to calculate the speed in the vehicle left-right direction of an object detected in the detectable range R0 relative to the motorcycle 1A, based on a signal from the preceding vehicle detector 30. The speed in the vehicle left-right direction of the object relative to the motorcycle 1A may be calculated based on a signal from the roll gyro sensor, in addition to the signal from the preceding vehicle detector 30.

The controller 40 is able to determine if an object detected in the detectable range R0 is a preceding vehicle, an oncoming vehicle, or a still object, based on a signal from the preceding vehicle detector 30 and a signal from either the wheel speed sensor 15 or the front-rear direction speed information sensor. As described above, the preceding vehicle is a vehicle which runs at a position forward of the host vehicle 1A, in the same or substantially same running direction as the host vehicle 1A. The oncoming vehicle is a vehicle running in the opposite direction to the host vehicle 1A. The determination of if an object detected by the preceding vehicle detector 30 is a preceding vehicle, an oncoming vehicle, or a still object is made based on the speed of the object relative to the motorcycle 1A, the moving direction of the object relative to the motorcycle 1A, the traveling direction or the speed in the vehicle forward direction of the motorcycle 1A, etc.

The following will describe the operation of the controller 40 when the inter-vehicle distance control mode is on.

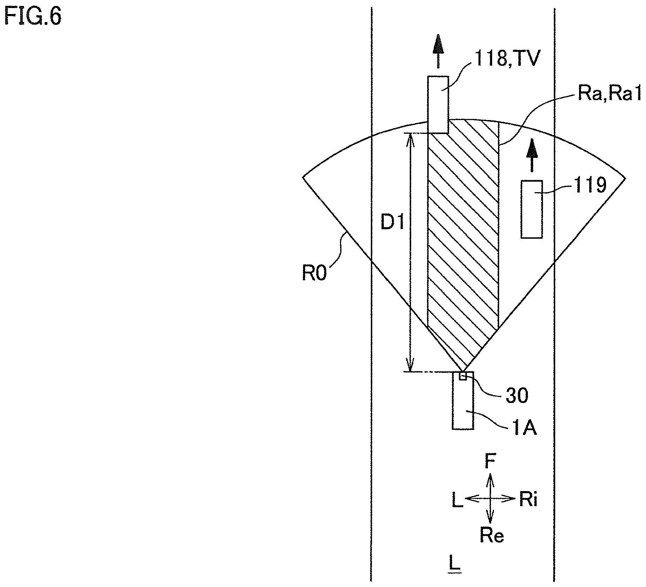

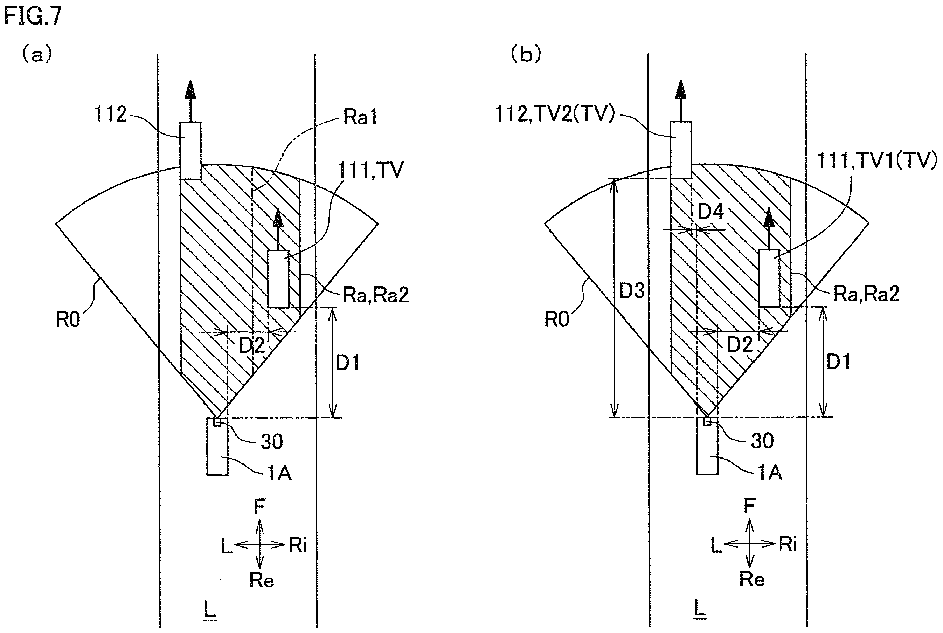

The controller 40 acquires, from the switch 20, the host vehicle fixed detection range Ra selected by the rider. To put it differently, the controller 40 sets the host vehicle fixed detection range Ra based on a signal sent from the switch 20. For example, FIG. 6 shows a case where the host vehicle fixed detection range Ra selected by the rider is the reference detection range Ra1. For example, FIG. 7(a) and FIG. 7(b) show a case where the host vehicle fixed detection range Ra selected by the rider is the right enlarged detection range Ra2.

The same host vehicle fixed detection range Ra may be continuously set unless the controller 40 acquires a new host vehicle fixed detection range Ra from the switch 20. The host vehicle fixed detection range Ra may be reset each time the motorcycle 1A stops running. For example, the host vehicle fixed detection range Ra may be reset to the reference detection range Ra1 each time the motorcycle 1A stops running. In other words, after the motorcycle 1A stops running, the reference detection range Ra1 is automatically set as the host vehicle fixed detection range Ra if a new host vehicle fixed detection range Ra is not sent from the switch 20.

The controller 40 selects a preceding vehicle from objects detected in the host vehicle fixed detection range Ra by the preceding vehicle detector 30. The controller 40 automatically selects one or two target preceding vehicles TV (first selection operation target preceding vehicle) based on which the inter-vehicle distance control is performed, from among the at least one preceding vehicle detected in the host vehicle fixed detection range Ra. The controller 40 may select only one target preceding vehicle TV or two target preceding vehicles TV, from among the at least one preceding vehicle detected in the host vehicle fixed detection range Ra. The one or two target preceding vehicles TV based on which the inter-vehicle distance control is performed is a preceding vehicle indirectly selected by the first selection operation performed by the rider using the switch 20, from among plural preceding vehicles in the detectable range R0 of the preceding vehicle detector 30.

To begin with, the following will describe a case where the controller 40 selects only one target preceding vehicle TV.

When the number of preceding vehicles detected in the host vehicle fixed detection range Ra is one, the controller 40 selects this preceding vehicle as the target preceding vehicle TV. For example, in FIG. 6, a preceding vehicle TV 118 is selected as the target preceding vehicle TV from among two preceding vehicles 118 and 119 in the detectable range R0, because only the preceding vehicle 118 is in the host vehicle fixed detection range Ra. When the number of preceding vehicles detected in the host vehicle fixed detection range Ra is more than one, the controller 40 selects the target preceding vehicle TV from among those preceding vehicles. The controller 40 may select, as the target preceding vehicle TV, the preceding vehicle closest to the host vehicle 1A in the vehicle front-rear direction from among the preceding vehicles detected in the host vehicle fixed detection range Ra. Depending on the running situation, the preceding vehicle closest to the host vehicle 1A in the vehicle front-rear direction is preferably set as the target preceding vehicle TV. It is therefore possible to perform the inter-vehicle distance control suitable for the running situation. For example, FIG. 7(a) shows a situation in which a preceding vehicle 111 has been selected as the target preceding vehicle TV from among two preceding vehicles 111 and 112 detected in the host vehicle fixed detection range Ra.

The controller 40 calculates the distance D1 in the vehicle front-rear direction between the host vehicle 1A and the selected one target preceding vehicle TV. The controller 40 may calculate the distance D2 in the vehicle left-right direction between the host vehicle 1A and the selected one target preceding vehicle TV.

The controller 40 controls the acceleration in the vehicle forward direction based on the distance D1 in the vehicle front-rear direction between the host vehicle 1A and the selected one target preceding vehicle TV. This control is the inter-vehicle distance control. The controller 40 controls the acceleration in the vehicle forward direction so that the distance D1 in the vehicle front-rear direction between the host vehicle 1A and the selected one target preceding vehicle TV is maintained at a target distance. When the distance D1 in the vehicle front-rear direction between the host vehicle 1A and the target preceding vehicle TV is shorter than the target distance, the controller 40 decreases the acceleration in the vehicle forward direction. When the distance D1 in the vehicle front-rear direction between the host vehicle 1A and the target preceding vehicle TV is longer than the target distance, the controller 40 increases the acceleration in the vehicle forward direction on condition that the acceleration does not exceed maximum speed set in advance. The target distance is set based on the speed of the motorcycle 1A in the vehicle front-rear direction, etc. There may be plural levels of the target distance, and the rider may be able to select one of the levels by using, for example, the switch 20. Even though the level is selected, the target distance is changed in accordance with the speed of the motorcycle 1A in the vehicle front-rear direction.

In the inter-vehicle distance control, the controller 40 may control the acceleration in the vehicle forward direction based on the distance D1 in the vehicle front-rear direction between one target preceding vehicle TV and the host vehicle 1A and the distance D2 in the vehicle left-right direction between the target preceding vehicle TV and the host vehicle 1A. To be more specific, for example, the controller 40 determines a target distance of the distance D1 in the vehicle front-rear direction between the target preceding vehicle TV and the host vehicle 1A based on the distance D2 in the vehicle left-right direction between the target preceding vehicle TV and the host vehicle 1A. The longer the distance D2 in the vehicle left-right direction between the target preceding vehicle TV and the host vehicle 1A, the shorter the target distance of the distance D1 in the vehicle front-rear direction between the target preceding vehicle TV and the host vehicle 1A is. Likewise, the shorter the distance D2 in the vehicle left-right direction between the target preceding vehicle TV and the host vehicle 1A is, the longer the target distance of the distance D1 in the vehicle front-rear direction between the target preceding vehicle TV and the host vehicle 1A is. The controller 40 controls the acceleration in the vehicle forward direction so that the distance D1 in the vehicle front-rear direction between the target preceding vehicle TV and the host vehicle 1A is maintained at the target distance.

In the inter-vehicle distance control, the controller 40 may control the acceleration in the vehicle forward direction based on the distance D1 in the vehicle front-rear direction between one target preceding vehicle TV and the host vehicle 1A and the relative speed between the target preceding vehicle TV and the host vehicle 1A. In the inter-vehicle distance control, the controller 40 may control the acceleration in the vehicle forward direction based on the distance D1 in the vehicle front-rear direction between the target preceding vehicle TV and the host vehicle 1A and the speed in the vehicle forward direction of the host vehicle 1A. In the inter-vehicle distance control, the controller 40 may control the acceleration in the vehicle forward direction based on a combination of the above-described parameters. In the inter-vehicle distance control, the controller 40 may control the acceleration in the vehicle forward direction based on a parameter different from the above-described parameters.

In the inter-vehicle distance control, the controller 40 controls the acceleration in the vehicle forward direction and the acceleration in the traveling direction of the host vehicle 1A by controlling the rotation of at least one of the front wheel unit 2 or the rear wheel unit 3. To be more specific, in the inter-vehicle distance control, the controller 40 controls the acceleration in the vehicle forward direction and the acceleration in the traveling direction of the host vehicle 1A by controlling the driving device 50 and the braking device 60. For example, the controller 40 increases or decreases the driving force applied to the rear wheel unit 3 by controlling the driving torque generated by the engine of the driving device 50. As a result of this, the acceleration in the vehicle forward direction and the acceleration in the traveling direction are increased or decreased. For example, the controller 40 may increase or decrease the driving force applied to the rear wheel unit 3 by controlling the clutch or the transmission of the torque transmission mechanism of the driving device 50. For example, the controller 40 applies braking force to the front wheel unit 2 by activating the front brake 61. As a result of this, the acceleration in the vehicle forward direction and the acceleration in the traveling direction are decreased. The controller 40 activates the rear brake 62 to apply braking force to the rear wheel unit 3. As a result of this, the acceleration in the vehicle forward direction and the acceleration in the traveling direction are decreased. In the inter-vehicle distance control, the controller 40 may control the acceleration in the vehicle forward direction and the acceleration in the traveling direction of the host vehicle 1A by controlling only the driving device 50, without controlling the braking device 60.

When the target preceding vehicle TV goes out from the host vehicle fixed detection range Ra during the inter-vehicle distance control, the controller 40 stops the inter-vehicle distance control based on this target preceding vehicle TV. The controller 40 then newly selects one or two target preceding vehicles TV from among at least one preceding vehicle detected in the host vehicle fixed detection range Ra, and performs the inter-vehicle distance control. When the target preceding vehicle TV becomes not the vehicle closest to the host vehicle 1A in the vehicle front-rear direction during the inter-vehicle distance control, the controller 40 stops the inter-vehicle distance control based on this target preceding vehicle TV. The controller 40 then newly selects a target preceding vehicle TV from among at least one preceding vehicle detected in the host vehicle fixed detection range Ra, and performs the inter-vehicle distance control.

Subsequent to the above, the following will describe a case where the controller 40 selects two target preceding vehicles TV. One of the two target preceding vehicles TV is denoted as a first target preceding vehicle TV1, whereas the other one of the two target preceding vehicles TV is denoted as a second target preceding vehicle TV2.

The controller 40 automatically selects the first target preceding vehicle TV1 and the second target preceding vehicle TV2 from among plural preceding vehicles detected in the host vehicle fixed detection range Ra.

When two preceding vehicles are detected in the host vehicle fixed detection range Ra, the controller 40 may select these two preceding vehicles as the target preceding vehicles TV. When the number of preceding vehicles detected in the host vehicle fixed detection range Ra is three or more, the controller 40 selects the two target preceding vehicles TV1 and TV2 from among those three or more preceding vehicles. The controller 40 may select, as the first target preceding vehicle TV1, the preceding vehicle closest to the host vehicle 1A in the vehicle front-rear direction from among the three or more preceding vehicles detected in the host vehicle fixed detection range Ra. The controller 40 may select, as the second target preceding vehicle TV2, the preceding vehicle second closest to the host vehicle 1A in the vehicle front-rear direction from among the preceding vehicles detected in the host vehicle fixed detection range Ra. The controller 40 may select, as the second target preceding vehicle TV2, the preceding vehicle closest to the host vehicle 1A in the vehicle left-right direction from among the preceding vehicles detected in the host vehicle fixed detection range Ra. The controller 40 may select, as the second target preceding vehicle TV2, the preceding vehicle closest to the center in the vehicle left-right direction of the host vehicle fixed detection range Ra, from among the preceding vehicles detected in the host vehicle fixed detection range Ra. For example, FIG. 7(b) shows a situation in which a preceding vehicle 111 has been selected as the first target preceding vehicle TV 1 and a preceding vehicle 112 has been selected as the second target preceding vehicle TV2.

The controller 40 calculates the distance D1 in the vehicle front-rear direction between the first target preceding vehicle TV1 and the host vehicle 1A and the distance D3 in the vehicle front-rear direction between the second target preceding vehicle TV2 and the host vehicle 1A. The controller 40 calculates the distance D2 in the vehicle left-right direction between the first target preceding vehicle TV1 and the host vehicle 1A and the distance D4 in the vehicle left-right direction between the second target preceding vehicle TV2 and the host vehicle 1A.

The controller 40 controls the acceleration in the vehicle forward direction based on the distance D1 in the vehicle front-rear direction between the first target preceding vehicle TV1 and the host vehicle 1A, the distance D2 in the vehicle left-right direction between the first target preceding vehicle TV1 and the host vehicle 1A, the distance D3 in the vehicle front-rear direction between the second target preceding vehicle TV2 and the host vehicle 1A, and the distance D4 in the vehicle left-right direction between the second target preceding vehicle TV2 and the host vehicle 1A. This control is the inter-vehicle distance control, too.

For example, the controller 40 controls the acceleration in the vehicle forward direction so that the distance D1 in the vehicle front-rear direction between the first target preceding vehicle TV1 and the host vehicle 1A is not shorter than a target distance and the distance D3 in the vehicle front-rear direction between the second target preceding vehicle TV2 and the host vehicle 1A is not shorter than a limit distance. When the distance D3 in the vehicle front-rear direction between the second target preceding vehicle TV2 and the host vehicle 1A is longer than the predetermined limit distance, the controller 40 controls the acceleration in the vehicle forward direction so that the distance D1 in the vehicle front-rear direction between the first target preceding vehicle TV1 and the host vehicle 1A is maintained at the target distance. The target distance is set based on the distance D2 in the vehicle left-right direction between the first target preceding vehicle TV1 and the host vehicle 1A. The longer the distance D2 in the vehicle left-right direction between the first target preceding vehicle TV1 and the host vehicle 1A is, the shorter the target distance is. The limit distance is set based on the distance D4 in the vehicle left-right direction between the second target preceding vehicle TV2 and the host vehicle 1A. The longer the distance D4 in the vehicle left-right direction between the second target preceding vehicle TV2 and the host vehicle 1A is, the shorter the limit distance is.

In the inter-vehicle distance control, the controller 40 may control the acceleration in the vehicle forward direction based on the distances D1 to D4 and the relative speed between the first target preceding vehicle TV1 and the host vehicle 1A. In the inter-vehicle distance control, the controller 40 may control the acceleration in the vehicle forward direction based on the distances D1 to D4 and the relative speed between the second target preceding vehicle TV2 and the host vehicle 1A. In the inter-vehicle distance control, the controller 40 may control the acceleration in the vehicle forward direction based on the distances D1 to D4 and the speed in the vehicle forward direction of the host vehicle 1A. In the inter-vehicle distance control, the controller 40 may control the acceleration in the vehicle forward direction based on a combination of the above-described parameters. In the inter-vehicle distance control, the controller 40 may control the acceleration in the vehicle forward direction based on a paragraph different from the above-described parameters.

When one of the two target preceding vehicles TV goes out from the host vehicle fixed detection range Ra during the inter-vehicle distance control, the controller 40 may perform the inter-vehicle distance control based on only the other target preceding vehicle TV. In this case, the controller 40 may newly select one target preceding vehicle TV from among at least one preceding vehicle detected in the host vehicle fixed detection range Ra, and perform the inter-vehicle distance control based on the two target preceding vehicles TV. When at least one of the two target preceding vehicles TV goes out from the host vehicle fixed detection range Ra during the inter-vehicle distance control, the controller 40 may stop the inter-vehicle distance control based on the two target preceding vehicles TV. In this case, the controller 40 may newly select one or two target preceding vehicles TV from among at least one preceding vehicle detected in the host vehicle fixed detection range Ra, and perform the inter-vehicle distance control based on the one or two target preceding vehicles TV. When both of the two target preceding vehicles TV go out from the host vehicle fixed detection range Ra during the inter-vehicle distance control, the controller 40 stops the inter-vehicle distance control based on the two target preceding vehicles TV. In this case, the controller 40 may newly select one or two target preceding vehicles TV from among at least one preceding vehicle detected in the host vehicle fixed detection range Ra, and perform the inter-vehicle distance control based on the one or two target preceding vehicles TV.

When the inter-vehicle distance control mode is on, depending on the running situation, the controller 40 may automatically change the detection range for detecting one or two target preceding vehicles TV from the host vehicle fixed detection range Ra having been selected by the rider. In this case, for example, by means of the display 12, the rider may be notified of the change of the detection range for detecting one or two target preceding vehicles TV. For example, assume that the controller 40 determines that a vehicle detected in a right region in the host vehicle fixed detection range Ra is an oncoming vehicle. In this case, the controller 40 may set a left region in the host vehicle fixed detection range Ra as the detection range for detecting one or two target preceding vehicles TV. Further assume that the right enlarged detection range Ra2 has been selected as the host vehicle fixed detection range Ra by the rider. In this situation, when a particular running condition is satisfied, the controller 40 may change the detection range for detecting one or two target preceding vehicles TV from the right enlarged detection range Ra2 to the reference detection range Ra1.

Depending on the running situation, the controller 40 may automatically switch the inter-vehicle distance control mode from on to off. In this case, for example, by means of the display 12, the rider may be notified of the switch-off of the inter-vehicle distance control mode.

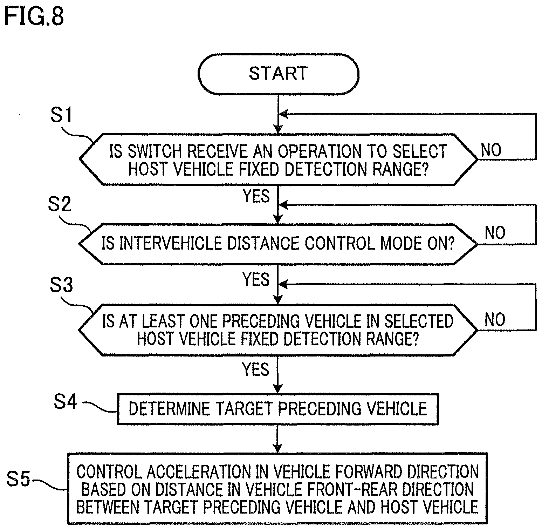

The following will describe an example of steps of the inter-vehicle distance control by the controller 40, with reference to a flow chart shown in FIG. 8. FIG. 8 is a flow chart when the inter-vehicle distance control is performed based on one target preceding vehicle TV.

When the switch 20 receives an operation to select the host vehicle fixed detection range Ra, whether the inter-vehicle distance control mode is on is determined (the step S1: Yes, the step S2). When the inter-vehicle distance control mode is on, the controller 40 determines whether at least one preceding vehicle has been detected in the selected host vehicle fixed detection range Ra (the step S2: Yes, the step S3). When at least one preceding vehicle has been detected in the host vehicle fixed detection range Ra, the controller 40 selects one target preceding vehicle TV from among the at least one preceding vehicle (the step S3: Yes, the step S4). The controller 40 then controls the acceleration in the vehicle forward direction based on the distance D1 in the vehicle front-rear direction between the selected target preceding vehicle TV and the host vehicle 1A (step S5).

In the step S5, the acceleration in the vehicle forward direction may be controlled based on the distance D1 in the vehicle front-rear direction and the distance D2 in the vehicle left-right direction between the target preceding vehicle TV and the host vehicle 1A. In the step S4, the controller 40 may select two target preceding vehicles TV1 and TV2 from among the preceding vehicles detected in the host vehicle fixed detection range Ra. In this case, in the step S5, the controller 40 controls the acceleration in the vehicle forward direction based on the distance D1 in the vehicle front-rear direction and the distance D2 in the vehicle left-right direction between the first target preceding vehicle TV1 and the host vehicle 1A and the distance D3 in the vehicle front-rear direction and the distance D4 in the vehicle left-right direction between the second target preceding vehicle TV2 and the host vehicle 1A.

Being similar to the above-described embodiment of the present invention, Specific Example 1 of the embodiment allows the rider to select, in accordance with a running situation, the target preceding vehicle TV based on which the inter-vehicle distance control is performed, while maintaining the degree of freedom in the traveling line of the motorcycle 1A in the lane.

The preceding vehicle detector 30 is able to detect a preceding vehicle in the detectable range R0 without using a photographed image. In other words, the preceding vehicle detector 30 is not a camera. In the motorcycle 1A, because the rider indirectly selects the target preceding vehicle TV, it is possible to perform the inter-vehicle distance control based on the target preceding vehicle TV running in the same lane L as the host vehicle 1A, without having a means for detecting the position of the lane L. In other words, the motorcycle 1A may not include a camera for detecting the position of the lane L. Furthermore, the preceding vehicle detector 30 is not a camera. Therefore the motorcycle 1A may not include a camera. When the motorcycle 1A does not include a camera, processing of photographed images is unnecessary. Computation for the inter-vehicle distance control is therefore simplified.

In FIG. 6, the motorcycle 1A runs substantially at a central portion of the lane L. The preceding vehicle 118 also runs substantially at the central portion of the lane L, and the preceding vehicle 119 runs at a right portion of the lane L. Depending on the running situation of the host vehicle 1A, the rider may not wish to set a preceding vehicle running in the same lane as the host vehicle 1A, as a target based on which the inter-vehicle distance control is performed. Because the reference detection range Ra1 has been selected as the host vehicle fixed detection range Ra, the preceding vehicle 119 is not selected as the target preceding vehicle. In this way, the rider is allowed to select, in accordance with the running situation, at least one target preceding vehicle based on which the inter-vehicle distance control is performed, while maintaining the degree of freedom in the traveling line in the lane in which the motorcycle 1A runs.

In FIG. 7(a), the motorcycle 1A runs at a left portion of the lane L. FIG. 7(a) indicates both ends in the vehicle left-right direction of the right enlarged detection range Ra2 by full lines. FIG. 7 indicates the right end of the reference detection range Ra1 by a two-dot chain line. As described above, the left end of the reference detection range Ra1 is identical with the left end of the right enlarged detection range Ra2.

Because the right enlarged detection range Ra2 indicated by the full lines in FIG. 7(a) has been selected as the host vehicle fixed detection range Ra, the right end of the host vehicle fixed detection range Ra is close to the right end of the lane L when compared to a case where the reference detection range Ra1 is selected as indicated by the two-dot chain lines in FIG. 7(a). It is therefore possible to perform the inter-vehicle distance control based on a preceding vehicle running at around the right end of the lane L1 in which the host vehicle 1A runs. To be more specific, as shown in fig, 7(a), when a preceding vehicle 111, which is a motorcycle, runs at a right portion of the lane L in which the host vehicle 1A runs, this preceding vehicle 111 can be selected as the target preceding vehicle TV. In this way, the rider is allowed to select, in accordance with the running situation, a target preceding vehicle based on which the inter-vehicle distance control is performed, while maintaining the degree of freedom in the traveling line in the lane in which the motorcycle 1A runs. Furthermore, even if the motorcycle 1A does not include a means for detecting the lane or the motorcycle 1A runs in a running situation in which the lane cannot be detected by a camera, the inter-vehicle distance control can be performed precisely.

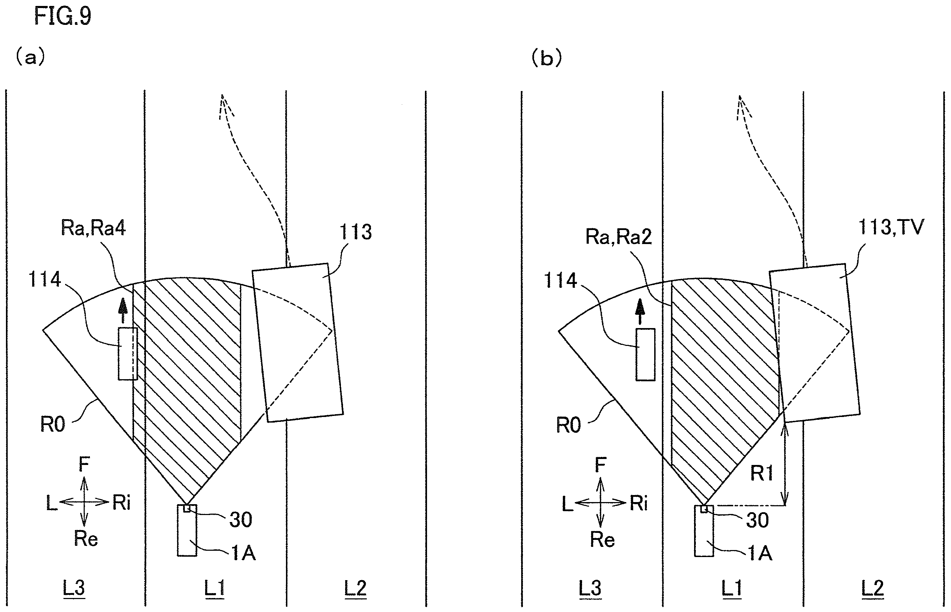

FIG. 9(a) and FIG. 9(b) show examples in which different host vehicle fixed detection ranges Ra are set in the same running situation. In FIG. 9(a) and FIG. 9(b), the motorcycle 1A runs in a left portion of the lane L1. FIG. 9(a) shows a case where the left-right enlarged detection range Ra4 has been selected as the host vehicle fixed detection range Ra, whereas FIG. 9(b) shows a case where the right enlarged detection range Ra2 has been selected as the host vehicle fixed detection range Ra. As described above, the left-right enlarged detection range Ra4 is equivalent to the reference detection range of the present invention, and the right enlarged detection range Ra2 is equivalent to the right shifted detection range of the present invention.

Because the right enlarged detection range Ra2 (right shifted detection range) has been selected as the host vehicle fixed detection range Ra as shown in FIG. 9(b), the right end of the host vehicle fixed detection range Ra in the lane L1 is close to the right end of the lane L1 as compared to a case where the left-right enlarged detection range Ra4 (reference detection range) is selected as shown in FIG. 9(a). It is therefore possible to perform the inter-vehicle distance control based on a preceding vehicle running at around the right end of the lane L1 in which the host vehicle 1A runs. To be more specific, as shown in FIG. 9(b), a preceding vehicle 113 coming from a lane L2 which is immediately to the right of the lane L1 swiftly enters the host vehicle fixed detection range Ra. It is therefore possible to swiftly start the inter-vehicle distance control based on this preceding vehicle 113 as the target preceding vehicle TV. As a result, even if the motorcycle 1A does not include a means for detecting the lane or the motorcycle 1A runs in a running situation in which the lane cannot be detected by a camera, the inter-vehicle distance control can be performed precisely.

Because the right enlarged detection range Ra2 (right shifted detection range) has been selected as the host vehicle fixed detection range Ra as shown in FIG. 9(b), it is possible to suppress the host vehicle fixed detection range Ra from bulging out from the left end of the lane L1 in which the host vehicle 1A runs, as compared to a case where the left-right enlarged detection range Ra4 (reference detection range) is selected as shown in FIG. 9(a). It is therefore possible to prevent a preceding vehicle 114 running in a lane L3 which is immediately to the left of the lane L1 in which the host vehicle 1A runs from being selected as a target preceding vehicle TV. As a result, even if the motorcycle 1A does not include a means for detecting the lane or the motorcycle 1A runs in a running situation in which the lane cannot be detected by a camera, the inter-vehicle distance control can be performed precisely.

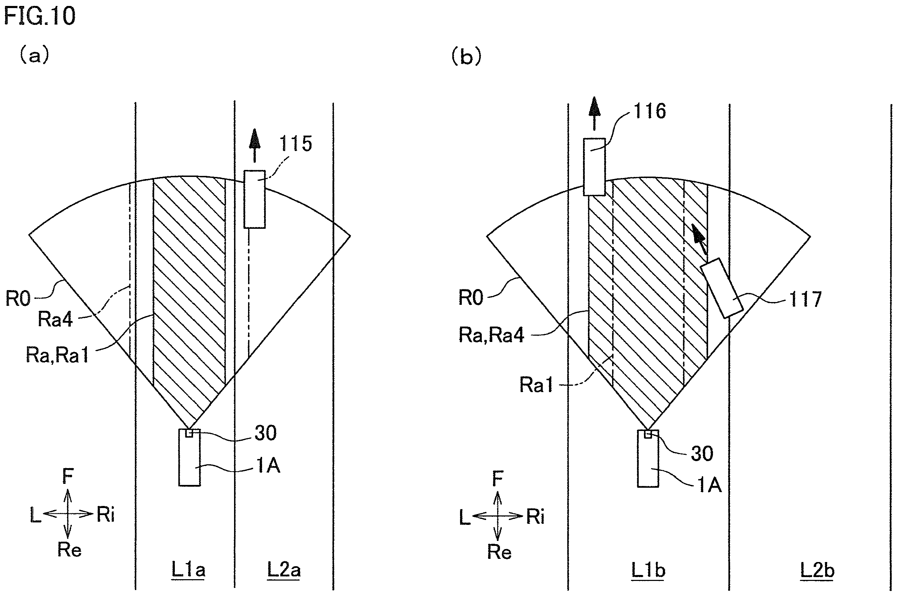

FIG. 10(a) and FIG. 10(b) show situations in which the vehicle runs in lanes which are different in width. The lane L1a shown in FIG. 10(a) is narrower than the lane 11b shown in FIG. 10(b). FIG. 10(a) shows a case where the reference detection range Ra1 has been selected as the host vehicle fixed detection range Ra, whereas FIG. 10(b) shows a case where the left-right enlarged detection range Ra4 has been selected as the host vehicle fixed detection range Ra. As described above, the reference detection range Ra1 is equivalent to the left-right decreased detection range of the present invention, and the left-right enlarged detection range Ra4 is equivalent to the reference detection range of the present invention.

When the motorcycle 1A runs at a central portion of a lane, the rider is able to select the reference detection range Ra1 or the left-right enlarged detection range Ra4 as the host vehicle fixed detection range Ra, in accordance with the width of the lane. For example, the reference detection range Ra1 (left-right decreased detection range) is selected as the host vehicle fixed detection range Ra when the vehicle runs in the narrow lane L1a, whereas the left-right enlarged detection range Ra4 (reference detection range) is selected as the host vehicle fixed detection range Ra when the vehicle runs in the wide lane L2a. As the host vehicle fixed detection range Ra is selected in accordance with the width of the lane, it is possible to cause the both ends in the vehicle left-right direction of the host vehicle fixed detection range Ra to be close to the respective ends of the lane, while suppressing the host vehicle fixed detection range Ra from bulging out from the lane in which the host vehicle 1A runs.

As the bulging of the host vehicle fixed detection range Ra out from lane in which the host vehicle 1A runs is suppressed, it is possible to prevent, for example, a preceding vehicle 115 running in a lane L2a next to the lane L1a in which the host vehicle 1A runs from becoming the target preceding vehicle TV, as shown in FIG. 10(a). As a result, even if the motorcycle 1A does not include a means for detecting the lane or the motorcycle 1A runs in a running situation in which the lane cannot be detected by a camera, the inter-vehicle distance control can be performed precisely.

Because the both ends in the vehicle left-right direction of the host vehicle fixed detection range Ra in the lane are close to the respective ends of the lane, it is possible to perform the inter-vehicle distance control based on a preceding vehicle running at around an edge of the lane in which the host vehicle 1A runs. To be more specific, as shown in FIG. 10(b), for example, a motorcycle 116 which runs at around an edge of the lane 11b in which the host vehicle 1A runs can be determined or selected as the target preceding vehicle TV. In another example, as shown in FIG. 10(b), a preceding vehicle 117 coming from a lane L2b immediately to the right of the lane L1b swiftly enters the host vehicle fixed detection range Ra. It is therefore possible to swiftly start the inter-vehicle distance control based on this preceding vehicle 117 as the target preceding vehicle TV. As a result, even if the motorcycle 1A does not include a means for detecting the lane or the motorcycle 1A runs in a running situation in which the lane cannot be detected by a camera, the inter-vehicle distance control can be performed precisely.

Even if the width of the lane remains the same, either the reference detection range Ra1 or the left-right enlarged detection range Ra4 may be selected as the host vehicle fixed detection range Ra, depending on the running situation. For example, when the position in the vehicle left-right direction in the lane will be frequently changed, the reference detection range Ra1 (left-right decreased detection range) may be selected as the host vehicle fixed detection range Ra, or when the vehicle will continuously run at the central portion of the lane, the left-right enlarged detection range Ra4 (reference detection range) may be selected as the host vehicle fixed detection range Ra. By performing the selection in this way, it is possible to suppress the host vehicle fixed detection range Ra from bulging out from the lane in which the host vehicle 1A runs. It is therefore possible to prevent a preceding vehicle running in a lane which is next to the lane in which the host vehicle 1A runs from being selected as a target preceding vehicle. As a result, even if the motorcycle 1A does not include a means for detecting the lane or the motorcycle 1A runs in a running situation in which the lane cannot be detected by a camera, the inter-vehicle distance control can be performed precisely.

The following effect is achieved when the controller 40 controls the acceleration in the vehicle forward direction based on the distance D1 in the vehicle front-rear direction and the distance D2 in the vehicle left-right direction between the target preceding vehicle TV and the host vehicle 1A. The width WV (see FIG. 1) in the vehicle left-right direction of the motorcycle 1A in which the vehicle body frame 4 is in an upright state is equal to or shorter than a half of the width WL (see FIG. 1) of the lane. On this account, as shown in FIG. 7(a), for example, there is a situation in which the host vehicle 1A runs at a left portion of the lane while a motorcycle 111 forward of the host vehicle 1A runs at a right portion of the lane. When the distance in the vehicle left-right direction between the preceding vehicle and the host vehicle 1A is long in this manner, the required distance in the vehicle front-rear direction between the preceding vehicle 111 and the host vehicle 1A is short. On this account, the distance D1 which is a preferable distance in the vehicle front-rear direction between the target preceding vehicle TV and the host vehicle 1A is different from the distance D2 in the vehicle left-right direction between the target preceding vehicle TV and the host vehicle 1A. In the inter-vehicle distance control, it is therefore possible to perform suitable inter-vehicle distance control in accordance with the position of the target preceding vehicle TV relative to the host vehicle 1A by controlling the acceleration in the vehicle forward direction based on both the distance D1 in the vehicle front-rear direction and the distance D2 in the vehicle left-right direction between the target preceding vehicle TV and the host vehicle 1A.

When the controller 40 performs the inter-vehicle distance control based on two target preceding vehicles, the following effect is achieved. For example, as shown in FIG. 7(b), there is a case where a first target preceding vehicle TV1 is a motorcycle running at a position obliquely forward of the host vehicle 1A and a second target preceding vehicle TV2 runs at a position substantially in front of the host vehicle 1A. The required distance in the vehicle front-rear direction between the preceding vehicle obliquely forward of the host vehicle 1A and the host vehicle 1A is shorter than the required distance in the vehicle front-rear direction between the preceding vehicle directly in front of or substantially in front of the host vehicle 1A and the host vehicle 1A. For this reason, when the distance D1 in the vehicle front-rear direction between the first target preceding vehicle TV 1 obliquely forward of the host vehicle 1A and the host vehicle 1A is at the minimum distance, the distance D3 in the vehicle front-rear direction between the second target preceding vehicle TV2 substantially in front of the host vehicle 1A and the host vehicle 1A may be insufficient. In the inter-vehicle distance control, the controller 40 controls the acceleration of the host vehicle 1A based on the distance D1 in the vehicle front-rear direction and the distance D2 in the vehicle left-right direction between the first target preceding vehicle TV1 and the host vehicle 1A and the distance D3 in the vehicle front-rear direction and the distance D4 in the vehicle left-right direction between the second target preceding vehicle TV2 and the host vehicle 1A. On this account, when the first target preceding vehicle TV 1 runs at a position obliquely forward of the host vehicle 1A and the second target preceding vehicle TV2 runs at a position substantially in front of the host vehicle 1A, it is possible to perform the inter-vehicle distance control so that the required distance D1 in the vehicle front-rear direction between the first target preceding vehicle TV1 and the host vehicle 1A is secured and at the same time the required distance D3 in the vehicle front-rear direction between the second target preceding vehicle TV2 and the host vehicle 1A is also secured. In this way, the inter-vehicle distance control can be suitably performed in accordance with the positions of the first target preceding vehicle TV1 and the second target preceding vehicle TV2 relative to the host vehicle 1A.

### <<Modifications of Specific Example 1 of Embodiment>>

The following will describe modifications of Specific Example 1 of the embodiment.

### <Modification of Selection Operation Unit>

In Specific Example 1 of the embodiment, the switch 20 is equivalent to the selection operation unit of the present invention. Alternatively, in the present invention, the selection operation unit which is able to receive the target preceding vehicle selection operation may be a touch panel, or may be both of a switch and a touch panel. The touch panel is a device which allows a user to input a command by touching the screen. The touch panel is allowed to receive the target preceding vehicle selection operation only when the leaning vehicle is not running. The touch panel may be able to receive the first selection operation when the leaning vehicle is not running. The rider is able to make an input to the touch panel while seeing the touch panel. This allows the rider to easily make an input. In the present invention, the selection operation unit which receives the target preceding vehicle selection operation may be a multifunction mobile terminal. The multifunction mobile terminal is detachably attached to the leaning vehicle. The multifunction mobile terminal is, for example, a smartphone. The multifunction mobile terminal has a touch panel function. The multifunction mobile terminal sends information regarding the target preceding vehicle selection operation input by the rider to the controller by wireless communication.

### <Modification 1 of Options of First Selection Operation>

In Specific Example 1 of the embodiment, the length in the vehicle left-right direction of the left-right enlarged detection range Ra4 is identical with the length in the vehicle left-right direction of each of the right enlarged detection range Ra2 and the left enlarged detection range Ra3. In this regard, the length in the vehicle left-right direction of the left-right enlarged detection range Ra4 may be longer than or shorter than the length in the vehicle left-right direction of each of the right enlarged detection range Ra2 and the left enlarged detection range Ra3. Preferably, in the vehicle left-right direction, the right end of the right enlarged detection range Ra2 is rightward of the right end of the left-right enlarged detection range Ra4, and the left end of the right enlarged detection range Ra2 is rightward of the left end of the left-right enlarged detection range Ra4. Preferably, in the vehicle left-right direction, the left end of the left enlarged detection range Ra3 is leftward of the left end of the left-right enlarged detection range Ra4, and the right end of the left enlarged detection range Ra3 is leftward of the right end of the left-right enlarged detection range Ra4. Also in this case, in the same manner as in Specific Example 1 of the embodiment, the left-right enlarged detection range Ra4 is equivalent to the left-right enlarged detection range of the present invention and equivalent to the reference detection range of the present invention.

### <Modification 2 of Options of First Selection Operation>

The options of the first selection operation in Specific Example 1 of the embodiment are four options, i.e., the reference detection range Ra1, the right enlarged detection range Ra2, the left enlarged detection range Ra3, and the left-right enlarged detection range Ra4. Alternatively, the options of the first selection operation may be only the reference detection range Ra1, the right enlarged detection range Ra2, and the left enlarged detection range Ra3. The options of the first selection operation may be only the right enlarged detection range Ra2, the left enlarged detection range Ra3, and the left-right enlarged detection range Ra4. Also in this case, in the same manner as in Specific Example 1 of the embodiment, the left-right enlarged detection range Ra4 is equivalent to the left-right enlarged detection range of the present invention and equivalent to the reference detection range of the present invention.

### <Modification 3 of Options of First Selection Operation>

In the present invention, the width in the vehicle left-right direction of the right shifted detection range may be identical with, shorter than, or longer than the width in the vehicle left-right direction of the reference detection range. In the present invention, the options of the first selection operation may include plural right shifted detection ranges which are different from one another in width in the vehicle left-right direction. The options of the first selection operation may include both a right shifted detection range which is wider in the vehicle left-right direction than the reference detection range and a right shifted detection range which is narrower in the vehicle left-right direction than the reference detection range. The options of the first selection operation may not include a right shifted detection range which is narrower in the vehicle left-right direction than the reference detection range and may include a right shifted detection range which is identical with or longer than the reference detection range in width in length in the vehicle left-right direction. The options of the first selection operation may not include a right shifted detection range which is wider in the vehicle left-right direction than the reference detection range and may include a right shifted detection range which is identical with or shorter than the reference detection range in width in length in the vehicle left-right direction. A specific example of the left shifted detection range is identical with the specific example of the right shifted detection range described above. The left shifted detection range may be in line symmetry with the right shifted detection range about the center in the vehicle left-right direction of the vehicle detected by the preceding vehicle detector.

### <Modification 4 of Options of First Selection Operation>

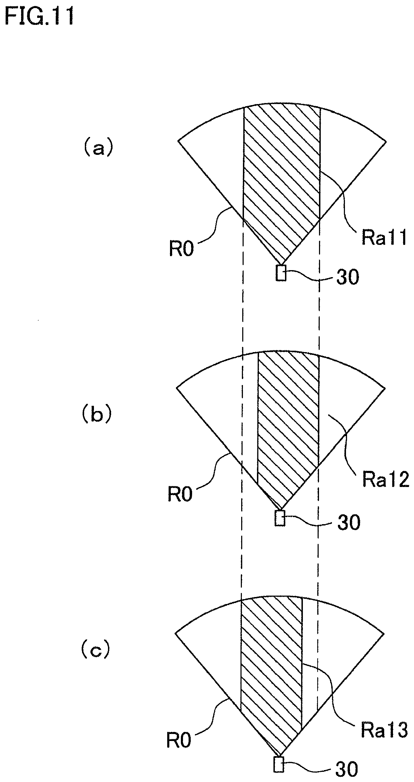

The options of the first selection operation may include a reference detection range Ra11, a right detection range Ra12, and a left detection range Ra13 shown in FIG. 11(a) to FIG. 1 1(c). In the vehicle left-right direction, the right end of the right detection range Ra12 is at the same position as the right end of the reference detection range Rail, and the left end of the range Ra12 is rightward of the left end of the reference detection range Ra11. In the vehicle left-right direction, the left end of the left detection range Ra13 is at the same position as the left end of the reference detection range Ra11, and the right end of the range Ra13 is leftward of the right end of the reference detection range Ra11. In the present invention, when the options of the first selection operation include the right detection range, the options of the first selection operation may include neither the right shifted detection range nor the right enlarged detection range. When the options of the first selection operation include the left detection range, the options of the first selection operation may include neither the left shifted detection range nor the left enlarged detection range.

### <Modification 5 of Options of First Selection Operation>

In the present invention, the options of the first selection operation may include the reference detection range, the right enlarged detection range, the left enlarged detection range, and the left-right decreased detection range. The options of the first selection operation may include the reference detection range, the right shifted detection range, the left shifted detection range, and the left-right enlarged detection range. The options of the first selection operation may include the reference detection range, the right detection range, the left detection range, and the left-right enlarged detection range. The options of the first selection operation may include the reference detection range, the right detection range, the left detection range, and the left-right decreased detection range.

### <Modification 6 of Options of First Selection Operation>

In Specific Example 1 of the embodiment, in the first selection operation, the host vehicle fixed detection range Ra is selected from plural types of detection ranges. The first selection operation of the present invention, however, is not limited to this. The first selection operation of the present invention may be one of the following three examples.

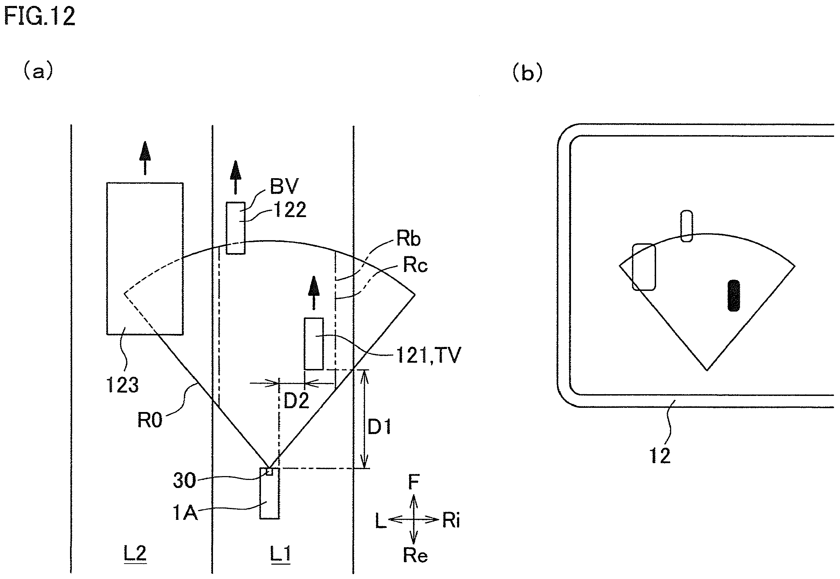

The first selection operation of a first example is an operation in which the host vehicle fixed detection range is selected by selecting at least one preceding vehicle not to be included in the host vehicle fixed detection range, from among preceding vehicles detected in the detectable range. For example, in a running situation shown in FIG. 12(a), a preceding vehicle 123 may be selected as a preceding vehicle not to be included in the host vehicle fixed detection range, from among preceding vehicles 121, 122, and 123 detected in the detectable range R0. The preceding vehicles 121 and 122 are preceding vehicles running in the same lane L1 as the host vehicle, whereas the preceding vehicle 123 is a preceding vehicle running in a lane L2 which is next to the lane L1. The controller sets the host vehicle fixed detection range so that the position of a selected preceding vehicle at the time of the selection is not included in the host vehicle fixed detection range. According to this arrangement, a preceding vehicle or an oncoming vehicle running in the lane next to the lane in which the host vehicle runs is selectable as a preceding vehicle not to be included in the host vehicle fixed detection range. This makes it possible to suppress the host vehicle fixed detection range from bulging out from the lane in which the host vehicle runs. It is therefore possible to prevent a preceding vehicle running in a lane which is next to the lane in which the host vehicle runs from being selected as a target preceding vehicle. As a result, even if the leaning vehicle does not include a means for detecting the lane or the leaning vehicle runs in a running situation in which the lane cannot be detected by a camera, the inter-vehicle distance control can be performed precisely.

The first selection operation of a second example is an operation in which the host vehicle fixed detection range is selected by selecting at least one preceding vehicle to be included in the host vehicle fixed detection range, from among preceding vehicles detected in the detectable range. For example, in a running situation shown in FIG. 12(a), preceding vehicles 121 and 122 may be selected as preceding vehicles to be included in the host vehicle fixed detection range, from among preceding vehicles 121, 122, and 123 detected in the detectable range R0. The preceding vehicles 121, 122, and 123 have already been described in the first example. The controller sets the host vehicle fixed detection range so that the position of a selected preceding vehicle at the time of the selection is included in the host vehicle fixed detection range. According to this arrangement, when a motorcycle (preceding vehicle) which is not the host vehicle runs at around an edge of the lane in which the host vehicle runs, this motorcycle can be selected as a preceding vehicle to be included in the host vehicle fixed detection range. This makes it possible to cause an end in the vehicle left-right direction of the host vehicle fixed detection range to be close to an end of the lane. It is therefore possible to perform the inter-vehicle distance control based on a preceding vehicle running at around an end of the lane in which the host vehicle runs. In this way, the rider is allowed to select, in accordance with the running situation, a target preceding vehicle based on which the inter-vehicle distance control is performed, while maintaining the degree of freedom in the traveling line in the lane in which the leaning vehicle runs. As a result, even if the leaning vehicle does not include a means for detecting the lane or the leaning vehicle runs in a running situation in which the lane cannot be detected by a camera, the inter-vehicle distance control can be performed precisely.

The first selection operation of a third example is a combination of the first selection operation of the first example and the first selection operation of the second example. To put it differently, the first selection operation of the third example is an operation to select the host vehicle fixed detection range by selecting both at least one preceding vehicle not to be included in the host vehicle fixed detection range and at least one preceding vehicle to be included in the host vehicle fixed detection range, from among preceding vehicles detected in the detectable range. The way of setting the host vehicle fixed detection range by the controller is a combination of the two cases described above. According to this arrangement, both the effect of the first example and the effect of the second example are achieved.

### <Modification 7 of Options of First Selection Operation>

The first selection operation of the present invention may be an operation to select the host vehicle fixed detection range by a method different from those of Specific Example 1 of the embodiment and the above-described modifications 1 to 6. For example, it may be an operation that the rider selects the position of the center in the vehicle left-right direction of the host vehicle fixed detection range and the length in the vehicle left-right direction of the host vehicle fixed detection range in the detectable range of the preceding vehicle detector.

### <Modification 1 of Method of Selecting Target Preceding Vehicle>

In Specific Example 1 of the embodiment, when only one target preceding vehicle TV is selected (determined) from preceding vehicles detected in the host vehicle fixed detection range Ra, the controller 40 selects the preceding vehicle closest to the host vehicle 1A in the vehicle front-rear direction as the target preceding vehicle TV, from among the preceding vehicles.

Alternatively, the controller of the present invention may select, as the target preceding vehicle, the preceding vehicle closest to the host vehicle in the vehicle left-right direction from among the preceding vehicles detected in the host vehicle fixed detection range. Depending on the running situation, the preceding vehicle closest to the host vehicle in the vehicle left-right direction is preferably set as the target preceding vehicle. It is therefore possible to perform the inter-vehicle distance control suitable for the running situation. In this case, a condition that the preceding vehicle is second closest to the host vehicle in the vehicle front-rear direction may be added. When no preceding vehicles satisfy these two conditions, the preceding vehicle closest to the host vehicle in the vehicle front-rear direction may be selected as the target preceding vehicle.

Alternatively, the controller of the present invention may select, as the target preceding vehicle, the preceding vehicle closest to the center in the vehicle left-right direction of the host vehicle fixed detection range, from among the preceding vehicles detected in the host vehicle fixed detection range. Depending on the running situation, the preceding vehicle closest to the center in the vehicle left-right direction of the host vehicle fixed detection range is preferably set as the target preceding vehicle. It is therefore possible to perform the inter-vehicle distance control suitable for the running situation. In this case, a condition that the preceding vehicle is second closest to the host vehicle in the vehicle front-rear direction may be added. When no preceding vehicles satisfy these two conditions, the preceding vehicle closest to the host vehicle in the vehicle front-rear direction may be selected as the target preceding vehicle.

The above-described modification of the method of selecting one target preceding vehicle may be used for determining the first target preceding vehicle when the inter-vehicle distance control is performed based on two target preceding vehicles. In this case, the controller may select, as the second target preceding vehicle, the preceding vehicle closest to the host vehicle in the vehicle front-rear direction from among the preceding vehicles detected in the host vehicle fixed detection range.

### <Modification 2 of Method of Selecting Target Preceding Vehicle>

In Specific Example 1 of the embodiment, one or two target preceding vehicles TV is selected by the controller 40 from among at least one preceding vehicle detected in the host vehicle fixed detection range Ra.

Alternatively, in the present invention, at least one target preceding vehicle based simultaneously on which the inter-vehicle distance control is performed may be directly selected by the rider in the fourth selection operation by using the selection operation unit, from among at least one preceding vehicle detected in the host vehicle fixed detection range. In this case, the at least one target preceding vehicle TV based on which the inter-vehicle distance control is performed is a preceding vehicle directly selected by the rider by a combination of the first selection operation and the fourth selection operation, from among plural preceding vehicles in the detectable range of the preceding vehicle detector.

When the number of preceding vehicles detected in the host vehicle fixed detection range is one, that preceding vehicle may be automatically selected as the target preceding vehicle without needing the selection by the rider. When the number of preceding vehicles detected in the host vehicle fixed detection range is one, the rider may be allowed to select whether to select that preceding vehicle as the target preceding vehicle. The same applies to a case where the number of target preceding vehicles based on which the inter-vehicle distance control is controlled is two and the number of preceding vehicles detected in the host vehicle fixed detection range is two. When the number of preceding vehicles detected in the host vehicle fixed detection range is larger than the number of target preceding vehicles based on which the inter-vehicle distance control is performed, the rider selects at least one target preceding vehicle from among the preceding vehicles.

The selection operation unit used for the fourth selection operation may be a switch provided on the handle unit. This switch may or may not be a switch used for selecting the host vehicle fixed detection range. The selection operation unit used for the fourth selection operation may be a unit which is not a switch.

### «Specific Example 2 of Embodiment»

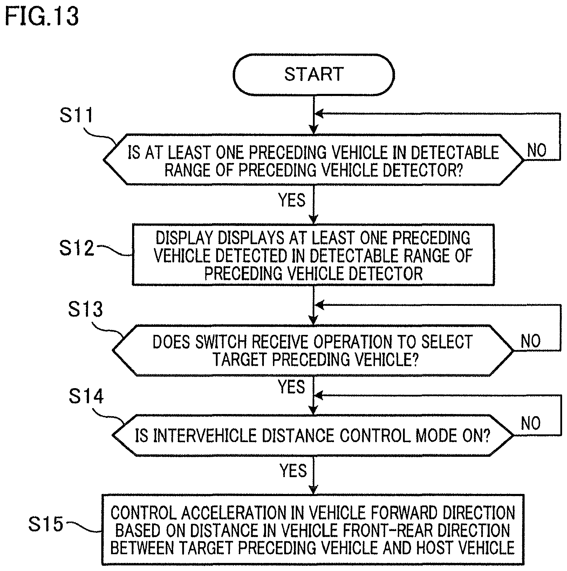

The following will describe Specific Example 2 of the embodiment with reference to FIG. 12 and FIG. 13. Basically, Specific Example 2 of the embodiment encompasses all features of the embodiment of the present invention described above. The following will describe arrangements which are different from those of Specific Example 1 of the embodiment described above.

The switch 20 is able to receive the second selection operation instead of the first selection operation. The second selection operation is an operation in which the rider directly selects one target preceding vehicle TV (second selection operation target preceding vehicle) from among at least one preceding vehicle detected in the detectable range R0. A vehicle which is determined to be an oncoming vehicle by the controller 40 is excluded from the options of the second selection operation in advance. The preceding vehicle detected in the detectable range R0 may include a preceding vehicle running in a lane next to the lane in which the host vehicle 1A runs. For example, FIG. 12(a) shows a situation in which three preceding vehicles 121, 122, and 123 are detected in the detectable range R0 and only the preceding vehicle 123 runs in a lane L2 which is next to the lane L1 in which the host vehicle 1A runs. The rider selects a preceding vehicle which is determined to run in the same lane as the host vehicle 1A as a target preceding vehicle TV. When at least one preceding vehicle detected in the detectable range R0 does not include any preceding vehicle running in the same lane as the host vehicle 1A, the rider does not select any preceding vehicle as the target preceding vehicle TV. When plural preceding vehicles are detected in the detectable range R0, the rider may select, as the target preceding vehicle TV, a preceding vehicle which runs in the same lane as the host vehicle 1A and is closest to the host vehicle 1A in the vehicle front-rear direction, from among the detected preceding vehicles. For example, the target preceding vehicle TV which satisfies this condition in FIG. 12(a) is the preceding vehicle 121 which is close to the host vehicle 1A in the vehicle front-rear direction, among the two preceding vehicles 121 and 122 running in the lane L1 in which the host vehicle 1A runs.

As shown in FIG. 12(b), for example, the display 12 displays options selectable in the second selection operation. FIG. 12(b) shows an example of an image displayed on the display 12. FIG. 12(b) shows part of an image on the display 12 in the running situation shown in FIG. 12(a). In FIG. 12(b), preceding vehicles detected in the detectable range R0 are represented by rectangles. In FIG. 12(b), the preceding vehicle TV selected as the target preceding vehicle TV is represented by a black rectangle. As long as target preceding vehicles TV are differentiated from other preceding vehicles, the vehicles may be represented in a different way. The display 12 may not simultaneously display all selectable options in the second selection operation. Because the display 12 displays options selectable in the second selection operation, the rider is able to perform the first selection operation by means of the switch 20 with reference to the information on the display 12. This helps the rider to perform the second selection operation.

Different images are displayed on the display 12 in accordance with the way of operating the switch 20. Before the second selection operation, the display 12 shows a state in which no preceding vehicle is selected as the target preceding vehicle TV. When the switch 20 is rotated by a predetermined angle or pressed once in this state, for example, a preceding vehicle closest to the host vehicle 1A in the vehicle front-rear direction may be selected as the target preceding vehicle TV from among selectable options (preceding vehicles). When the switch 20 is further rotated by a predetermined angle or pressed once in this state, for example, a preceding vehicle which is the second closest to the host vehicle 1A in the vehicle front-rear direction is selected as the target preceding vehicle TV. In accordance with this operation of the switch 20, the display 12 switches the image indicating the target preceding vehicle TV. The selection of the option may be confirmed by using the switch 20 or a switch different from the switch 20.

As the second selection operation, the switch 20 may be able to receive an operation to select two target preceding vehicles from among preceding vehicles detected in the detectable range R0. In this case, the controller 40 performs the inter-vehicle distance control based on the two target preceding vehicles. When the number of preceding vehicles in the detectable range R0 is three or more, the second selection operation is an operation in which the rider directly selects two target preceding vehicles TV from among the three or more preceding vehicles in the detectable range R0.

The switch 20 is able to receive the second selection operation only when the motorcycle 1A is running. No matter whether the inter-vehicle distance control mode is on or off, the switch 20 may be able to receive the second selection operation. Only when the inter-vehicle distance control mode is on, the switch 20 may be able to receive the second selection operation. The controller 40 may automatically switch the inter-vehicle distance control mode from off to on when the switch 20 receives the second selection operation while the vehicle is running. Only when the inter-vehicle distance control mode is off, the switch 20 may be able to receive the second selection operation.

When only one target preceding vehicle TV is selected by using the switch 20, the controller 40 controls the acceleration in the vehicle forward direction based on the distance D1 in the vehicle front-rear direction between the host vehicle 1A and the target preceding vehicle TV selected by the rider. This control is the inter-vehicle distance control. The details of the inter-vehicle distance control are identical with those in Specific Example 1 of the embodiment. The controller 40 may control the acceleration in the vehicle forward direction based on the distance D1 in the front-rear direction between the target preceding vehicle TV and the host vehicle 1A and the distance D2 in the vehicle left-right direction between the target preceding vehicle TV and the host vehicle 1A.

When the target preceding vehicle TV goes out from the detectable range R0 during the inter-vehicle distance control, the controller 40 stops the inter-vehicle distance control based on this target preceding vehicle TV. The controller 40 may send a notification to prompt the rider of selecting another preceding vehicle as a new target preceding vehicle TV. The notification may be made by sound or by an image on the display 12.

When two target preceding vehicles TV are selected by the using the switch 20, the controller 40 performs the inter-vehicle distance control based on the selected two target preceding vehicles. The controller 40 selects, as the first target preceding vehicle TV1, a preceding vehicle close to the host vehicle 1A in the vehicle front-rear direction, from among the selected two target preceding vehicles TV. The controller 40 may select, as the first target preceding vehicle TV1, a preceding vehicle close to the host vehicle 1A in the vehicle left-right direction, from among the selected two target preceding vehicles TV. The rider may be allowed to distinguish and select the first target preceding vehicle TV1 and the second target preceding vehicle TV2 by using the switch 20. The controller 40 controls the acceleration in the vehicle forward direction based on the distance D1 in the vehicle front-rear direction and the distance D2 in the vehicle left-right direction between the first target preceding vehicle TV1 and the host vehicle 1A and the distance in the vehicle front-rear direction and the distance in the vehicle left-right direction between the second target preceding vehicle TV2 and the host vehicle 1A. The details are identical with those in Specific Example 1 of the embodiment.

When one of the two target preceding vehicles TV goes out from the detectable range R0 during the inter-vehicle distance control, the controller 40 may perform the inter-vehicle distance control based on only the other target preceding vehicle TV. In this case, the controller 40 may send a notification to prompt the rider of selecting another preceding vehicle as a new target preceding vehicle TV. When one of the two target preceding vehicles TV goes out from the detectable range R0 during the inter-vehicle distance control, the controller 40 may stop the inter-vehicle distance control based on the two target preceding vehicles TV. In this case, the controller 40 may send a notification to prompt the rider of selecting another preceding vehicle as one or two new target preceding vehicles TV. When both of the two target preceding vehicles TV go out from the detectable range R0 during the inter-vehicle distance control, the controller 40 stops the inter-vehicle distance control based on the two target preceding vehicles TV. In this case, the controller 40 may send a notification to prompt the rider of selecting another preceding vehicle as one or two new target preceding vehicles TV.

Depending on the running situation, the controller 40 may automatically switch the inter-vehicle distance control mode from on to off. In this case, for example, by means of the display 12, the rider may be notified of the switch-off of the inter-vehicle distance control mode.

The following will describe an example of steps of the inter-vehicle distance control by the controller 40, with reference to a flow chart shown in FIG. 13. FIG. 13 is a flow chart when the inter-vehicle distance control is performed based on one target preceding vehicle.

While the motorcycle 1A is running, the controller 40 determines whether at least one preceding vehicle has been detected in the detectable range R0 of the preceding vehicle detector 30 (step S11). When at least one preceding vehicle has been detected in the detectable range R0 of the preceding vehicle detector 30, the display displays the at least one preceding vehicle detected in the detectable range R0 of the preceding vehicle detector (the step S11: Yes, the step S12). When the switch 20 receives an operation to select the target preceding vehicle TV, whether the inter-vehicle distance control mode is on is determined (the step S13: Yes, the step S14). When the inter-vehicle distance control mode is on, the controller 40 controls the acceleration in the vehicle forward direction based on the distance D1 in the vehicle front-rear direction between the host vehicle 1A and the target preceding vehicle TV selected by the rider (the step S14: Yes, the step S15).

In the step S15, the acceleration in the vehicle forward direction may be controlled based on the distance D1 in the vehicle front-rear direction and the distance D2 in the vehicle left-right direction between the target preceding vehicle TV and the host vehicle 1A. When two target preceding vehicles are selected in the step S13, the controller 40 controls, in the step S15, the acceleration in the vehicle forward direction based on the distance Dl in the vehicle front-rear direction and the distance D2 in the vehicle left-right direction between the first target preceding vehicle TV1 and the host vehicle 1A and the distance in the vehicle front-rear direction and the distance in the vehicle left-right direction between the second target preceding vehicle TV2 and the host vehicle 1A.

In regard to the arrangement identical with that of Specific Example 1 of the embodiment, Specific Example 2 of the embodiment exerts the same effects as Specific Example 1 of the embodiment. Also in Specific Example 2, the rider is allowed to select, in accordance with a running situation, the target preceding vehicle TV based on which the inter-vehicle distance control is performed, while maintaining the degree of freedom in the traveling line of the motorcycle 1A in the lane.

### <<Modifications of Specific Example 2 of Embodiment>>

The following will describe modifications of Specific Example 2 of the embodiment.

### <Modification of Range of Monitoring of Target Preceding Vehicle>

Wherever the position of the target preceding vehicle TV selected by the rider is in the detectable range R0, the controller 40 of Specific Example 2 of the embodiment performs the inter-vehicle distance control based on this target preceding vehicle TV.

Alternatively, only when a target preceding vehicle is in a target preceding vehicle monitoring range which is part of the detectable range of the preceding vehicle detector, the controller of the present invention may perform the inter-vehicle distance control based on this target preceding vehicle. When the target preceding vehicle goes out from the target preceding vehicle monitoring range, the controller stops the inter-vehicle distance control based on this target preceding vehicle. In this case, a notification may be made to notify that the inter-vehicle distance control based on the selected target preceding vehicle has been stopped. Alternatively, a notification may be made to prompt the rider to select another preceding vehicle.

When a target preceding vehicle selected by the rider moves to a lane next to the lane in which the host vehicle runs, the target preceding vehicle may be still in the detectable range but out of the target preceding vehicle monitoring range. In such a case, the inter-vehicle distance control based on this target preceding vehicle is stopped. As a result, even if the leaning vehicle does not include a means for detecting the lane or the leaning vehicle runs in a running situation in which the lane cannot be detected by a camera, the inter-vehicle distance control can be further performed precisely.

The target preceding vehicle monitoring range is set by the controller based on a position of at least one preceding vehicle when the at least one preceding vehicle is selected. The target preceding vehicle monitoring range is set to include the position at the time of the selection of the at least one target preceding vehicle. The position of the target preceding vehicle monitoring range relative to the target preceding vehicle is not fixed. The position of the target preceding vehicle monitoring range relative to the host vehicle is fixed. To put it differently, the position of the target preceding vehicle monitoring range is fixed relative to the detectable range of the preceding vehicle detector.

The target preceding vehicle monitoring range may be set based on the position of at least one target preceding vehicle and the position of at least one vehicle which is not the target preceding vehicle. The range may be one of the following three examples.

In a first example, when a switch (selection operation unit) receives the second selection operation, it is possible to receive an operation to select at least one vehicle not to be included in the target preceding vehicle monitoring range from among vehicles detected in the detectable range of the preceding vehicle detector. To put it differently, the switch (selection operation unit) is able to receive an operation to select at least one target preceding vehicle and at least one vehicle not to be included in the target preceding vehicle monitoring range, from among the vehicles detected in the detectable range of the preceding vehicle detector. The controller sets the target preceding vehicle monitoring range based on the position at the time of the selection of the at least one target preceding vehicle and the position at the time of the selection of the at least one vehicle which is not to be included in the target preceding vehicle monitoring range. The vehicles which are the options may be only preceding vehicles, and may not include a vehicle which is determined to be an oncoming vehicle by the controller. The target preceding vehicle monitoring range is set so as to include the position of the at least one target preceding vehicle when the at last one target preceding vehicle is selected and so as not to include the position of at least one vehicle which is not to be included in the target preceding vehicle monitoring range when the at least one vehicle is selected. For example, a target preceding vehicle monitoring range Rb indicated by two-dot chain lines in FIG. 12(a) is an example of a target preceding vehicle monitoring range which is set when a preceding vehicle 121 is selected as a target preceding vehicle TV and a vehicle 123 is selected as a vehicle not to be included in the target preceding vehicle monitoring range. The vehicle 123 is a preceding vehicle running in a lane L2 which is next to the lane L1 in which the host vehicle runs.

In a second example, when a switch (selection operation unit) receives the second selection operation, it is possible to receive an operation to select at least one vehicle which is not a target preceding vehicle and to be included in the target preceding vehicle monitoring range, from among vehicles detected in the detectable range of the preceding vehicle detector. To put it differently, the switch (selection operation unit) is able to receive an operation to select at least one target preceding vehicle and at least one vehicle which is not a target preceding vehicle and to be included in the target preceding vehicle monitoring range, from among the vehicles detected in the detectable range of the preceding vehicle detector. The controller sets the target preceding vehicle monitoring range based on the position at the time of the selection of the at least one target preceding vehicle and the position at the time of the selection of the at least one vehicle which is to be included in the target preceding vehicle monitoring range. The vehicles which are the options may be only preceding vehicles, and may not include a vehicle which is determined to be an oncoming vehicle by the controller. The target preceding vehicle monitoring range is set so as to include the position of the at least one target preceding vehicle when the at last one target preceding vehicle is selected and the position of the at least one vehicle which is to be included in the target preceding vehicle monitoring range when the at least one vehicle is selected. For example, a target preceding vehicle monitoring range Rb indicated by two-dot chain lines in FIG. 12(a) is an example of a target preceding vehicle monitoring range which is set when a preceding vehicle 121 is selected as a target preceding vehicle TV and a vehicle 122 is selected as a vehicle to be included in the target preceding vehicle monitoring range. The vehicle 122 is a preceding vehicle running in the lane L1 in which the host vehicle runs.

A third example is a combination of the first and second examples. In the third example, when a switch (selection operation unit) receives the second selection operation, it is possible to receive an operation to select at least one target preceding vehicle, at least one vehicle not to be included in the target preceding vehicle monitoring range, and at least one vehicle which is not a target preceding vehicle and to be included in the target preceding vehicle monitoring range, from among vehicles detected in the detectable range of the preceding vehicle detector. In other words, the switch (selection operation unit) is able to receive an operation to select at least one target preceding vehicle, at least one vehicle not to be included in the target preceding vehicle monitoring range, and at least one vehicle which is not a target preceding vehicle and to be included in the target preceding vehicle monitoring range, from among vehicles detected in the detectable range of the preceding vehicle detector. The controller sets the target preceding vehicle monitoring range based on the position at the time of the selection of the at least one target preceding vehicle, the position at the time of the selection of the at least one vehicle not to be included in the target preceding vehicle monitoring range, and the position at the time of the selection of the at least one vehicle which is to be included in the target preceding vehicle monitoring range. The vehicles which are the options may be only preceding vehicles, and may not include a vehicle which is determined to be an oncoming vehicle by the controller.

In all of the first, second, and third examples, it is possible to cause the both ends in the vehicle left-right direction of the target preceding vehicle monitoring range to be close to the respective ends of the lane, while suppressing the target preceding vehicle monitoring range from bulging out from the lane in which the host vehicle host vehicle runs. As a result, even if the leaning vehicle does not include a means for detecting the lane or the leaning vehicle runs in a running situation in which the lane cannot be detected by a camera, the inter-vehicle distance control can be further performed precisely.

The target preceding vehicle monitoring range may be set based on the position at the time of the selection of at least one target preceding vehicle, the position at the time of the selection of a vehicle which is not a target preceding vehicle, and the width in the vehicle left-right direction of the target preceding vehicle monitoring range set in advance. The width in the vehicle left-right direction of the target preceding vehicle monitoring range set in advance may be selectable by the rider using the selection operation unit. The selection of the width of the target preceding vehicle monitoring range may or may not be performed by using the selection operation unit used for selecting a target preceding vehicle.

### <<Specific Example 3 of Embodiment>>

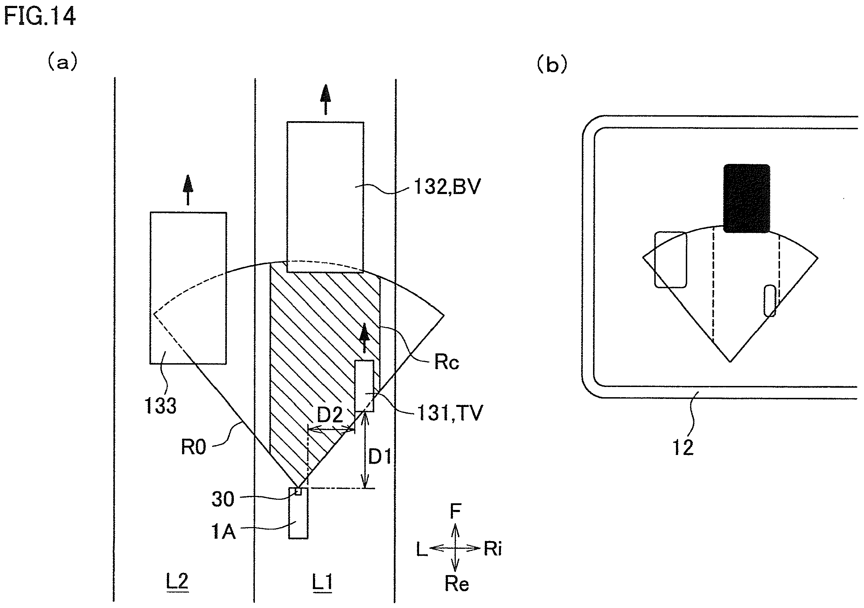

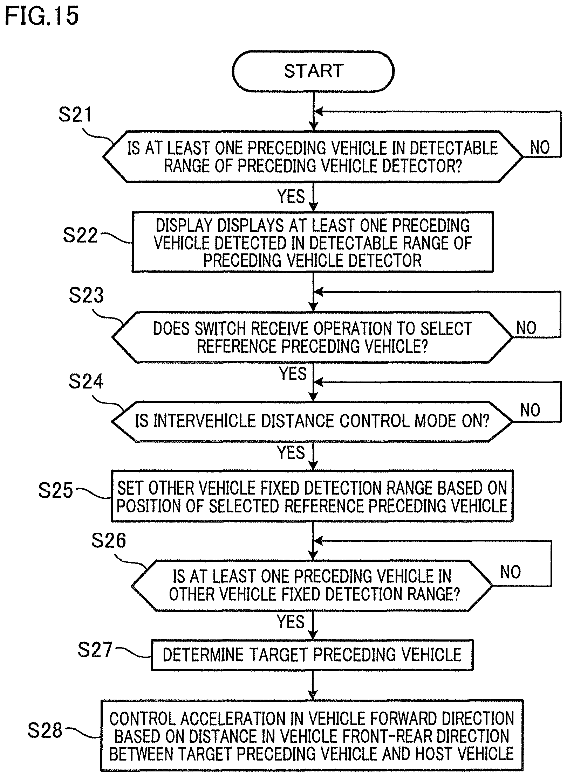

The following will describe Specific Example 3 of the embodiment with reference to FIG. 14 and FIG. 15. Basically, Specific Example 3 of the embodiment encompasses all features of the embodiment of the present invention described above. The following will describe arrangements which are different from those of Specific Example 1 of the embodiment described above.

The switch 20 is able to receive the third selection operation instead of the first selection operation. The third selection operation is an operation in which the rider selects one reference preceding vehicle BV from among at least one preceding vehicle detected in the detectable range R0. A vehicle which is determined to be an oncoming vehicle by the controller 40 is excluded from the options of the third selection operation in advance. The preceding vehicle detected in the detectable range R0 may include a preceding vehicle running in a lane next to the lane in which the host vehicle 1A runs. For example, FIG. 14(a) shows a situation in which three preceding vehicles 131, 132, and 133 are detected in the detectable range R0 and only the preceding vehicle 133 runs in a lane L2 which is next to the lane L1 in which the host vehicle 1A runs. The rider selects a preceding vehicle which is determined to run in the same lane as the host vehicle 1A, as a reference preceding vehicle BV. When at least one preceding vehicle detected in the detectable range R0 does not include any preceding vehicle running in the same lane as the host vehicle 1A, the rider does not select any preceding vehicle as the reference preceding vehicle BV. When plural preceding vehicles are detected in the detectable range R0, the rider may select, as the reference preceding vehicle BV, an automobile which runs in the same lane as the host vehicle 1A from among the detected preceding vehicles. The automobile encompasses a passenger vehicle, a bus, and a truck. For example, the reference preceding vehicle BV shown in FIG. 14(a) is a preceding vehicle 132 satisfying the condition above, and is a passenger vehicle running in the lane L1 in which the host vehicle 1 runs. The rider may select, as the reference preceding vehicle BV, a preceding vehicle which runs at a central portion of the lane in which the host vehicle 1A runs, from among the preceding vehicles detected in the detectable range R0.

As shown in FIG. 14(b), for example, the display 12 displays options selectable in the third selection operation. FIG. 14(b) shows an example of an image displayed on the display 12. FIG. 14(b) shows part of an image on the display 12 in the running situation shown in FIG. 14(a). In FIG. 14(b), preceding vehicles detected in the detectable range R0 are represented by rectangles. In FIG. 14(b), the preceding vehicle selected as the reference preceding vehicle BV is represented by a black rectangle. As long as the reference preceding vehicle BV is differentiated from other preceding vehicles, the vehicles may be represented in a different way. The display 12 may not simultaneously display all selectable options in the third selection operation. Because the display 12 displays options selectable in the third selection operation, the rider is able to perform the third selection operation by means of the switch 20 with reference to the information on the display 12. This helps the rider to perform the third selection operation.

Different images are displayed on the display 12 in accordance with the way of operating the switch 20. Before the second selection operation, the display 12 shows a state in which no preceding vehicle is selected as the reference preceding vehicle BV. When the switch 20 is rotated by a predetermined angle or pressed once in this state, for example, a preceding vehicle closest to the host vehicle 1A in the vehicle front-rear direction may be selected as the reference preceding vehicle BV from among selectable options (preceding vehicles). When the switch 20 is further rotated by a predetermined angle or pressed once in this state, for example, a preceding vehicle which is the second closest to the host vehicle 1A in the vehicle front-rear direction is selected as the reference preceding vehicle BV. In accordance with this operation of the switch 20, the display 12 switches the image indicating the reference preceding vehicle BV. In the same manner as in Specific Example 1 of the embodiment, the selection of the option may be confirmed by using the switch 20 or a switch different from the switch 20.

The switch 20 is able to receive the third selection operation only when the motorcycle 1A is running. No matter whether the inter-vehicle distance control mode is on or off, the switch 20 may be able to receive the third selection operation. Only when the inter-vehicle distance control mode is on, the switch 20 may be able to receive the third selection operation. The controller 40 may automatically switch the inter-vehicle distance control mode from off to on when the switch 20 receives the third selection operation while the vehicle is running. Only when the inter-vehicle distance control mode is off, the switch 20 may be able to receive the third selection operation.

The controller 40 sets another vehicle fixed detection range Rc for detecting one or two target preceding vehicles TV, based on the position of the reference preceding vehicle BV selected by the rider. The other vehicle fixed detection range Rc is part of the detectable range R0 of the preceding vehicle detector 30. The position of the other vehicle fixed detection range Rc is not fixed relative to the detectable range R0. The position of the other vehicle fixed detection range Rc relative to the reference preceding vehicle BV is fixed in the vehicle left-right direction. When the reference preceding vehicle BV moves in the vehicle rightward direction relative to the detectable range R0, the other vehicle fixed detection range Rc also moves in the vehicle rightward direction relative to the detectable range R0. The width in the vehicle left-right direction of the other vehicle fixed detection range Rc is shorter than the width WL (see fig, 1) of a typical lane. The maximum width in the vehicle left-right direction of the other vehicle fixed detection range Rc may be, for example, about 2.0 meters. The width of the vehicle left-right direction of the other vehicle fixed detection range Rc may be unchanged until the reference preceding vehicle BV is changed.

For example, as shown in FIG. 14(a), the other vehicle fixed detection range Rc is set so as to include the position of the reference preceding vehicle BV in the detectable range R0. In the descriptions below, the center in the vehicle left-right direction of the other vehicle fixed detection range Rc will be referred to as the center of the other vehicle fixed detection range Rc. The position of the center of the other vehicle fixed detection range Rc may be selectable by the rider. The width in the vehicle left-right direction of the other vehicle fixed detection range Rc may be selectable by the rider. The selection of the width and/or the position of the center of the other vehicle fixed detection range Rc may be performed by using the switch 20 or by a switch different from the switch 20.

When the controller 40 is able to acquire information indicating whether the reference preceding vehicle BV is a leaning vehicle or an automobile, the controller 40 may set the other vehicle fixed detection range Rc based on the reference preceding vehicle BV, by a method described below. This leaning vehicle is a concept encompassing both the leaning vehicle of the present invention and a known leaning vehicle. The automobile encompasses a passenger vehicle, a bus, and a truck and does not encompass a leaning vehicle. In the same manner as in the leaning vehicle of the present invention, the width in the vehicle left-right direction of the known leaning vehicle when the vehicle body frame stands upright is equal to or shorter than a half of the width of the lane. When the reference preceding vehicle BV is an automobile, the other vehicle fixed detection range Rc may be set so that the center of the other vehicle fixed detection range Rc passes through the reference preceding vehicle BV. For example, the other vehicle fixed detection range Rc may be set so that the center of the other vehicle fixed detection range Rc passes through the center or a substantial center of the reference preceding vehicle BV in the vehicle left-right direction of the motorcycle 1A. When the reference preceding vehicle BV is a leaning vehicle, the other vehicle fixed detection range Rc may be set so that the position of the reference preceding vehicle BV in the detectable range R0 is included.

The controller 40 may acquire information indicating whether the reference preceding vehicle BV is a leaning vehicle or an automobile, by the following method, for example. The controller 40 may detect the width of the reference preceding vehicle BV based on a signal from the preceding vehicle detector 30 and determine the type of the vehicle based on the width of the reference preceding vehicle BV. This width is, for example, the length of the motorcycle 1A in the vehicle left-right direction. Alternatively, a wireless communication device may receive information indicating the vehicle type of the reference preceding vehicle BV from the reference preceding vehicle BV by vehicle-to-vehicle communication. The controller 40 may acquire the information from a wireless communication device.

The method of setting the other vehicle fixed detection range Rc based on the position of the reference preceding vehicle BV may be always the same or may be selectable by the rider. The selection of the setting method by the rider may be confirmed by using the switch 20 or a switch different from the switch 20. As shown in FIG. 14(b), the display 12 may display the other vehicle fixed detection range Rc having been set. In the example shown in FIG. 14(b), the other vehicle fixed detection range Rc is indicated by dotted lines.

The controller 40 selects a preceding vehicle from objects detected in the other vehicle fixed detection range Rc by the preceding vehicle detector 30. The controller 40 then automatically selects one or two target preceding vehicles TV (third selection operation target preceding vehicle) based on which the inter-vehicle distance control is performed, from among the at least one preceding vehicle detected in the other vehicle fixed detection range Rc. The controller 40 may select only one target preceding vehicle TV or two target preceding vehicles TV, from among the at least one preceding vehicle detected in the other vehicle fixed detection range Rc. The one or two target preceding vehicles TV based on which the inter-vehicle distance control is performed is a preceding vehicle indirectly selected by the third selection operation performed by the rider using the switch 20, from among plural preceding vehicles in the detectable range R0 of the preceding vehicle detector 30.

To begin with, the following will describe a case where the controller 40 selects only one target preceding vehicle TV.

When the number of preceding vehicles detected in the other vehicle fixed detection range Rc is one, the controller 40 selects this preceding vehicle as the target preceding vehicle TV. When plural preceding vehicles are detected in the other vehicle fixed detection range Rc, the controller 40 select, as the target preceding vehicle TV, the preceding vehicle closest to the host vehicle 1A in the vehicle front-rear direction from among the preceding vehicles. This target preceding vehicle TV may be identical with or different from the reference preceding vehicle BV. Depending on the running situation, the preceding vehicle closest to the host vehicle 1A in the vehicle front-rear direction is preferably set as the target preceding vehicle TV. By this selection, it is possible to perform the inter-vehicle distance control suitable for the running situation. For example, FIG. 14(a) shows a situation in which a preceding vehicle 131 has been selected as the target preceding vehicle TV from among two preceding vehicles 131 and 132 detected in the other vehicle fixed detection range Rc. In this connection, the display 12 may display the selected target preceding vehicle to be distinguishable from other preceding vehicles.

The controller 40 controls the acceleration in the vehicle forward direction based on the distance D1 in the vehicle front-rear direction between the host vehicle 1A and the selected one target preceding vehicle TV. This control is the inter-vehicle distance control. The details of the inter-vehicle distance control are identical with those in Specific Example 1 of the embodiment. The controller 40 may control the acceleration in the vehicle forward direction based on the distance D1 in the vehicle front-rear direction and the distance D2 in the vehicle left-right direction between the target preceding vehicle TV and the host vehicle 1A.

When the target preceding vehicle TV goes out from the other vehicle fixed detection range Rc during the inter-vehicle distance control, the controller 40 newly selects a target preceding vehicle TV from among at least one preceding vehicle detected in the other vehicle fixed detection range Rc, and performs the inter-vehicle distance control. When the target preceding vehicle TV becomes not the preceding vehicle closest to the host vehicle 1A in the vehicle front-rear direction during the inter-vehicle distance control, the controller 40 changes the target preceding vehicle TV.

When the reference preceding vehicle BV goes out from the detectable range R0 during the inter-vehicle distance control, the controller 40 stops the inter-vehicle distance control based on the other vehicle fixed detection range Rc. In this case, the controller 40 may send a notification to prompt the rider to select another preceding vehicle as the reference preceding vehicle BV. The notification may be made by sound or by an image on the display 12.

Subsequent to the above, the following will describe a case where the controller 40 selects two target preceding vehicles TV.

The controller 40 automatically selects the first target preceding vehicle TV1 and the second target preceding vehicle TV2 from among plural preceding vehicles detected in the other vehicle fixed detection range Rc. The controller 40 selects, as the first target preceding vehicle TV1, the preceding vehicle closest to the host vehicle 1A in the vehicle front-rear direction from among the preceding vehicles detected in the other vehicle fixed detection range Rc. The controller 40 selects, as the second target preceding vehicle TV2, the preceding vehicle closest to the host vehicle 1A in the vehicle front-rear direction or the preceding vehicle closest to the center in the vehicle left-right direction of the other vehicle fixed detection range Rc, from among the preceding vehicles detected in the other vehicle fixed detection range Rc. The controller 40 controls the acceleration in the vehicle forward direction based on the distance D1 in the vehicle front-rear direction between the first target preceding vehicle TV1 and the host vehicle 1A, the distance D2 in the vehicle left-right direction between the first target preceding vehicle TV1 and the host vehicle 1A, the distance in the vehicle front-rear direction between the second target preceding vehicle TV2 and the host vehicle 1A, and the distance in the vehicle left-right direction between the second target preceding vehicle TV2 and the host vehicle 1A. The details are identical with those in Specific Example 1 of the embodiment.

When one of the two target preceding vehicles TV goes out from the other vehicle fixed detection range Rc during the inter-vehicle distance control, the controller 40 may perform the inter-vehicle distance control based on only the other target preceding vehicle TV. In this case, the controller 40 may newly select one target preceding vehicle TV from among at least one preceding vehicle detected in the other vehicle fixed detection range Rc, and perform the inter-vehicle distance control based on the two target preceding vehicles TV. When at least one of the two target preceding vehicles TV goes out from the other vehicle fixed detection range Rc during the inter-vehicle distance control, the controller 40 may stop the inter-vehicle distance control based on two target preceding vehicles TV. In this case, the controller 40 may newly select one or two target preceding vehicles TV from among at least one preceding vehicle detected in the other vehicle fixed detection range Rc, and perform the inter-vehicle distance control based on the one or two target preceding vehicles TV. When both of the two target preceding vehicles TV go out from the other vehicle fixed detection range Rc during the inter-vehicle distance control, the controller 40 stops the inter-vehicle distance control based on the two target preceding vehicles TV. In this case, the controller 40 may newly select one or two target preceding vehicles TV from among at least one preceding vehicle detected in the other vehicle fixed detection range Rc, and perform the inter-vehicle distance control based on the one or two target preceding vehicles TV.

Depending on the running situation, the controller 40 may automatically switch the inter-vehicle distance control mode from on to off. In this case, for example, by means of the display 12, the rider may be notified of the switch-off of the inter-vehicle distance control mode.

The following will describe an example of steps of the inter-vehicle distance control by the controller 40, with reference to a flow chart shown in FIG. 15. FIG. 15 is a flow chart when the inter-vehicle distance control is performed based on one target preceding vehicle.

While the motorcycle 1A is running, the controller 40 determines whether at least one preceding vehicle has been detected in the detectable range R0 of the preceding vehicle detector 30 (step S21). When at least one preceding vehicle has been detected in the detectable range R0 of the preceding vehicle detector 30, the display displays the at least one preceding vehicle detected in the detectable range R0 of the preceding vehicle detector (the step S21: Yes, the step S22). When the switch 20 receives an operation to select the reference preceding vehicle BV, whether the inter-vehicle distance control mode is on is determined (the step S23: Yes, the step S24). When the inter-vehicle distance control mode is on, the controller 40 sets the other vehicle fixed detection range Rc based on the position of the selected reference preceding vehicle BV (the step S24: Yes, the step S25). The controller 40 determines whether at least one preceding vehicle has been detected in the other vehicle fixed detection range Rc (step S26). When at least one preceding vehicle has been detected in the other vehicle fixed detection range Rc, the controller 40 selects one target preceding vehicle TV from among the at least one preceding vehicle (the step S26: Yes, the step S27). The controller 40 then controls the acceleration in the vehicle forward direction based on the distance D1 in the vehicle front-rear direction between the selected target preceding vehicle TV and the host vehicle 1A (step S28).

In the step S28, the acceleration in the vehicle forward direction may be controlled based on the distance D1 in the vehicle front-rear direction and the distance D2 in the vehicle left-right direction between the target preceding vehicle TV and the host vehicle 1A. In the step S27, the controller 40 may select two target preceding vehicles TV from among the preceding vehicles detected in the other vehicle fixed detection range Rc. In this case, in the step S28, the controller 40 controls the acceleration in the vehicle forward direction based on the distance D1 in the vehicle front-rear direction and the distance D2 in the vehicle left-right direction between the first target preceding vehicle TV1 and the host vehicle 1A and the distance in the vehicle front-rear direction and the distance in the vehicle left-right direction between the second target preceding vehicle TV2 and the host vehicle 1A.

In regard to the arrangement identical with that of Specific Example 1 of the embodiment, Specific Example 3 of the embodiment exerts the same effects as Specific Example 1 of the embodiment. Also in Specific Example 3, the rider is allowed to select, in accordance with a running situation, the target preceding vehicle based on which the inter-vehicle distance control is performed, while maintaining the degree of freedom in the traveling line of the motorcycle 1A in the lane.

### <<Modifications of Specific Example 3 of Embodiment>>

The following will describe modifications of Specific Example 3 of the embodiment.

### <Modification 1 of Method of Setting Other Vehicle Fixed Detection Range>

In Specific Example 3 of the embodiment, the other vehicle fixed detection range Rc is set based only on the position of the reference preceding vehicle BV, among the preceding vehicles detected in the detectable range R0. Alternatively, the other vehicle fixed detection range of the present invention may be set based on the position of the reference preceding vehicle and the position of a vehicle which is not the reference preceding vehicle. The position of the other vehicle fixed detection range relative to the reference preceding vehicle is fixed, but the position of the other vehicle fixed detection range relative to a vehicle other than the reference preceding vehicle is not fixed. The method of setting the other vehicle fixed detection range may be one of the following three examples.

In a first example, when a switch (selection operation unit) receives the third selection operation, the switch is able to receive an operation to select at least one vehicle not to be included in the other vehicle fixed detection range from among vehicles detected in the detectable range of the preceding vehicle detector 30. To put it differently, the switch (selection operation unit) is able to receive an operation to select the reference preceding vehicle and at least one vehicle not to be included in the other vehicle fixed detection range, from among the vehicles detected in the detectable range of the preceding vehicle detector 30. The controller then sets the other vehicle fixed detection range based on the position of the reference preceding vehicle and the position at the time of the selection of at least one vehicle not to be included in the other vehicle fixed detection range. The vehicles which are the options may be only preceding vehicles, and may not include a vehicle which is determined to be an oncoming vehicle by the controller. The other vehicle fixed detection range is set so as to include the position of the reference preceding vehicle and not to include the position at the time of the selection of at least one vehicle which is not to be included in the other vehicle fixed detection range. For example, the other vehicle fixed detection range Rc indicated by two-dot chain lines in FIG. 12(a) is an example of another vehicle fixed detection range which is set when a preceding vehicle 122 is selected as the reference preceding vehicle BV whereas a vehicle 123 is selected as a vehicle not to be included in the other vehicle fixed detection range. The vehicle 123 is a preceding vehicle running in a lane L2 which is next to the lane L1 in which the host vehicle runs.

In a second example, when a switch (selection operation unit) receives the third selection operation, the switch is able to receive an operation to select at least one vehicle which is not the reference preceding vehicle and to be included in the other vehicle fixed detection range from among vehicles detected in the detectable range of the preceding vehicle detector 30. To put it differently, the switch (selection operation unit) is able to receive an operation to select the reference preceding vehicle and at least one vehicle which is not the reference preceding vehicle and not to be included in the other vehicle fixed detection range, from among the vehicles detected in the detectable range of the preceding vehicle detector 30. The controller then sets the other vehicle fixed detection range based on the position of the reference preceding vehicle and the position at the time of the selection of at least one vehicle to be included in the other vehicle fixed detection range. The vehicles which are the options may be only preceding vehicles, and may not include a vehicle which is determined to be an oncoming vehicle by the controller. The other vehicle fixed detection range is set so as to include the position of the reference preceding vehicle and the position at the time of the selection of at least one vehicle which is to be included in the other vehicle fixed detection range. For example, the other vehicle fixed detection range Rc indicated by two-dot chain lines in FIG. 12(a) is an example of another vehicle fixed detection range which is set when a preceding vehicle 122 is selected as the reference preceding vehicle BV whereas a vehicle 121 is selected as a vehicle to be included in the other vehicle fixed detection range. The vehicle 121 is a preceding vehicle running in the lane L1 in which the host vehicle runs.

A third example is a combination of the first and second examples. In the third example, when a switch (selection operation unit) receives the third selection operation, the switch is able to receive an operation to select at least one vehicle not to be included in the other vehicle fixed detection range and at least one vehicle which is not the reference preceding vehicle and to be included in the other vehicle fixed detection range from among vehicles detected in the detectable range of the preceding vehicle detector 30. In other words, the switch (selection operation unit) is able to receive an operation to select the reference preceding vehicle, at least one vehicle not to be included in the other vehicle fixed detection range, and at least one vehicle which is not the reference preceding vehicle and to be included in the other vehicle fixed detection range from among vehicles detected in the detectable range of the preceding vehicle detector 30. The controller then sets the other vehicle fixed detection range based on the position of the reference preceding vehicle, the position at the time of the selection of at least one vehicle not to be included in the other vehicle fixed detection range, and the position at the time of the selection of at least one vehicle to be included in the other vehicle fixed detection range. The vehicles which are the options may be only preceding vehicles, and may not include a vehicle which is determined to be an oncoming vehicle by the controller.

In all of the first, second, and third examples, it is possible to cause the both ends in the vehicle left-right direction of the other vehicle fixed detection range to be close to the both ends of the lane, while suppressing the other vehicle fixed detection range from bulging out from the lane in which the host vehicle host vehicle runs. As a result, even if the leaning vehicle does not include a means for detecting the lane or the leaning vehicle runs in a running situation in which the lane cannot be detected by a camera, the inter-vehicle distance control can be further performed precisely.

### <Modification 2 of Method of Setting Other Vehicle Fixed Detection Range>

In Specific Example 3 of the embodiment, the other vehicle fixed detection range Rc is set so as to include the position of the reference preceding vehicle BV in the detectable range R0. Alternatively, the other vehicle fixed detection range of the present invention may be set so as not to include the position of the reference preceding vehicle. For example, the rider may select, as a reference preceding vehicle, a preceding vehicle running in a lane next to the lane in which the host vehicle runs.

### <Modification 1 of Method of Selecting Target Preceding Vehicle>

In Specific Example 3 of the embodiment, when only one target preceding vehicle TV is determined (selected) from among preceding vehicles detected in the other vehicle fixed detection range Re, the controller 40 selects, as the target preceding vehicle TV, the preceding vehicle closest to the host vehicle 1A in the vehicle front-rear direction from among the preceding vehicles.

Alternatively, the controller of the present invention may select, as the target preceding vehicle, the preceding vehicle closest to the host vehicle in the vehicle left-right direction from among the preceding vehicles detected in the other vehicle fixed detection range. Depending on the running situation, the preceding vehicle closest to the host vehicle in the vehicle left-right direction is preferably set as the target preceding vehicle. It is therefore possible to perform the inter-vehicle distance control suitable for the running situation. In this case, a condition that the preceding vehicle is second closest to the host vehicle in the vehicle front-rear direction may be added. When no preceding vehicles satisfy these two conditions, the preceding vehicle closest to the host vehicle in the vehicle front-rear direction may be selected as the target preceding vehicle.

Alternatively, the controller of the present invention may select, as the target preceding vehicle, the preceding vehicle closest to the center in the vehicle left-right direction of the preceding vehicle, from among the preceding vehicles detected in the other vehicle fixed detection range. Depending on the running situation, the preceding vehicle closest to the center in the vehicle left-right direction of the other vehicle fixed detection range is preferably set as the target preceding vehicle. It is therefore possible to perform the inter-vehicle distance control suitable for the running situation. In this case, a condition that the preceding vehicle is second closest to the host vehicle in the vehicle front-rear direction may be added. When no preceding vehicles satisfy these two conditions, the preceding vehicle closest to the host vehicle in the vehicle front-rear direction may be selected as the target preceding vehicle.

The above-described modification of the method of selecting the target preceding vehicle may be used for determining the first target preceding vehicle when the inter-vehicle distance control is performed based on two target preceding vehicles. When the inter-vehicle distance control is performed based on two target preceding vehicles, the controller may select, as the second target preceding vehicle, the preceding vehicle closest to the host vehicle in the vehicle front-rear direction from among the preceding vehicles detected in the other vehicle fixed detection range.

### <Modification 2 of Method of Selecting Target Preceding Vehicle>

In Specific Example 3 of the embodiment, the target preceding vehicle TV is selected by the controller 40 from among at least one preceding vehicle detected in the other vehicle fixed detection range Rc.

Alternatively, in the present invention, at least one target preceding vehicle based simultaneously on which the inter-vehicle distance control is performed may be directly selected by the rider in the fifth selection operation by using the selection operation unit, from among at least one preceding vehicle detected in the other vehicle fixed detection range. In this case, the at least one target preceding vehicle TV based on which the inter-vehicle distance control is performed is a preceding vehicle directly selected by the rider by a combination of the third selection operation and the fifth selection operation, from among plural preceding vehicles in the detectable range of the preceding vehicle detector.

When the number of preceding vehicles detected in the other vehicle fixed detection range is one, that preceding vehicle may be automatically selected as the target preceding vehicle without needing the selection by the rider. When the number of preceding vehicles detected in the other vehicle fixed detection range is one, the rider may be allowed to select whether to select that preceding vehicle as the target preceding vehicle. The same applies to a case where the number of target preceding vehicles based on which the inter-vehicle distance control is controlled is two and the number of preceding vehicles detected in the host vehicle fixed detection range is two. When the number of preceding vehicles detected in the other vehicle fixed detection range is larger than the number of target preceding vehicles based on which the inter-vehicle distance control is performed, the rider selects at least one target preceding vehicle from among the preceding vehicles.

The selection operation unit used for the fifth selection operation may be a switch provided on the handle unit. This switch may or may not be a switch used for selecting the host vehicle fixed detection range. The selection operation unit used for the fifth selection operation may be a unit which is not a switch.

### <<Modifications of Embodiment>>

The present invention is not limited to the above-described embodiment, Specific Examples 1 to 3 of the embodiment, and the modifications of Specific Examples 1 to 3, and various changes can be made within the scope of the claims. The following describes modifications of the embodiment of the present invention. Components having the same structure as those described above will be given the same reference numerals, and the description thereof will be omitted, if appropriate.

### <Modification 1 of Inter-Vehicle Distance Control>

The controller of the present invention may be configured to perform inter-vehicle distance control based on three or more target preceding vehicles. The inter-vehicle distance control based on three or more target preceding vehicles is basically identical with the inter-vehicle distance control based on two target preceding vehicles.

### <Modification 2 of Inter-Vehicle Distance Control>

The controller of the present invention may not be required to calculate the distance in the vehicle front-rear direction between a target preceding vehicle and a motorcycle, when the controller is able to calculate a parameter which allows the acceleration in the vehicle forward direction to be controlled based on the distance in the vehicle front-rear direction between the target preceding vehicle and the host vehicle. For example, the controller may calculate the distance in the vehicle front-rear direction between the target preceding vehicle and the preceding vehicle detector. Alternatively, for example, the controller may calculate an inter-vehicle time between the target preceding vehicle and the host vehicle in the traveling direction or the vehicle forward direction of the host vehicle. The inter-vehicle time between the target preceding vehicle and the host vehicle is a time between a time point when the target preceding vehicle passes through a particular position and a time point when the host vehicle passes through the same position. In the case of the inter-vehicle time in the vehicle forward direction of the host vehicle, the particular position is a line perpendicular to the vehicle forward direction. In the case of the inter-vehicle time in the traveling direction of the host vehicle, the particular position is a line perpendicular to the traveling direction. For example, the inter-vehicle time can be calculated based on a change over time of the distance in the vehicle front-rear direction between the target preceding vehicle and the host vehicle and a change over time of the relative speed of the target preceding vehicle in the traveling direction or the vehicle forward direction of the host vehicle. The same applies to the inter-vehicle distance control based on two or more target preceding vehicles.

When the inter-vehicle distance control is control of the acceleration in the vehicle forward direction based on the distance in the vehicle front-rear direction and the distance in the vehicle left-right direction between the target preceding vehicle and the host vehicle, the controller may not always be required to calculate the distance in the vehicle front-rear direction and the distance in the vehicle left-right direction between the target preceding vehicle and the motorcycle. In other words, the controller of the present invention may not be required to calculate the distance in the vehicle front-rear direction and the distance in the vehicle left-right direction between the target preceding vehicle and the motorcycle, when the controller is able to calculate a parameter which allows the acceleration in the vehicle forward direction to be controlled based on the distance in the vehicle front-rear direction and the distance in the vehicle left-right direction between the target preceding vehicle and the host vehicle. The same applies to the inter-vehicle distance control based on two or more target preceding vehicles.

### <Modification 3 of Inter-Vehicle Distance Control>

In the inter-vehicle distance control, the controller of the present invention may control an element different from the acceleration in the vehicle forward direction. For example, a notification for prompting the movement in the vehicle rightward direction or the vehicle leftward direction may be made based on the distance in the vehicle front-rear direction between the target preceding vehicle and the host vehicle. Alternatively, for example, the acceleration in the vehicle left-right direction may be controlled based on the distance in the vehicle front-rear direction between the target preceding vehicle and the host vehicle. To be more specific, for example, the acceleration in the vehicle left-right direction may be controlled by controlling the balance between the left and right front suspensions of the paired front forks 6. Alternatively, the acceleration in the vehicle left-right direction may be controlled by controlling the balance between the left and right paired rear suspensions which are provided between the swingarm 7 and the vehicle body frame 4. When the leaning vehicle is turning, for example, the acceleration in the vehicle left-right direction may be controlled by controlling the driving force or the braking force applied to at least one of the front wheel unit or the rear wheel unit. The same applies to the inter-vehicle distance control based on two or more target preceding vehicles.

### <Modification 4 of Inter-Vehicle Distance Control>

The selection operation unit of the leaning vehicle of the present invention may be configured to receive both the first selection operation and the second selection operation. The selection operation unit of the leaning vehicle of the present invention may be configured to receive both the first selection operation and the third selection operation. The selection operation unit of the leaning vehicle of the present invention may be configured to receive both the second selection operation and the third selection operation. The selection operation unit of the leaning vehicle of the present invention may be configured to receive the first selection operation, the second selection operation, and the third selection operation. The leaning vehicle of the present invention may include the features of both Specific Example 1 and Specific Example 2 of the embodiment. The leaning vehicle of the present invention may include the features of both Specific Example 1 and Specific Example 3 of the embodiment. The leaning vehicle of the present invention may include the features of both Specific Example 2 and Specific Example 3 of the embodiment. The leaning vehicle of the present invention may include the features of all of Specific Examples 1 to 3 of the embodiment.

### <Modifications of Display>

The display of the present invention may be a multifunction mobile terminal. The multifunction mobile terminal is detachably attached to the leaning vehicle. The multifunction mobile terminal is a smartphone. The multifunction mobile terminal has a touch panel function. The multifunction mobile terminal may display, on the touch panel, information of a target preceding vehicle selection operation received from the controller wirelessly.

### <Modifications of Selection Operation Unit>

The selection operation unit of the present invention may include plural selection operators each of which can be independently operated. When the selection operation unit is configured to receive both the first selection operation and the second selection operation, a selection operator receiving the first selection operation may be identical with or different from a selection operator receiving the second selection operation. When the selection operation unit is configured to receive both the first selection operation and the third selection operation, a selection operator receiving the first selection operation may be identical with or different from a selection operator receiving the third selection operation. When the selection operation unit is configured to receive both the second selection operation and the third selection operation, a selection operator receiving the second selection operation may be identical with or different from a selection operator receiving the third selection operation.

### <Modification 1 of Preceding Vehicle Detector>

The preceding vehicle detector of the present invention may be configured to detect only the shortest distance between an object and the preceding vehicle detector.

### <Modification 2 of Preceding Vehicle Detector>

The preceding vehicle detector 30 of Specific Example 1 does not determine whether an object detected in the detectable range is a preceding vehicle, an oncoming vehicle, or a still object. Alternatively, the preceding vehicle detector of the present invention may determine if an object detected in the detectable range is a preceding vehicle, an oncoming vehicle, or a still object.

### <Modification 3 of Preceding Vehicle Detector>

The preceding vehicle detector of the present invention may be a camera. The leaning vehicle of the present invention may be provided with a camera for detecting a preceding vehicle, in addition to the preceding vehicle detector of the present invention.

### <Modification Regarding Lane Detection>

The leaning vehicle of the present invention may include a means for detecting a lane.

The leaning vehicle of the present invention may include a camera used for detecting a lane. This camera may not be used for detecting a preceding vehicle. When the camera is used for detecting a lane, for example, the lane may be detected by detecting a mark on the lane in a photographed image. The lane may be detected by detecting a guard rail in a photographed image. The mark used for detecting the lane may be, for example, a mark provided at an edge of the lane, or a mark provided at a central part of the lane. When a lane is detected in a photographed image, the controller automatically determines a detection range based on the position of the detected lane. When plural preceding vehicles are detected in this detection range, the controller selects at least one target preceding vehicle from the preceding vehicles detected in the detection range. The number of the target preceding vehicles is smaller than the detected preceding vehicles. Alternatively, the rider may select, by using the selection operation unit, at least one target preceding vehicle from plural preceding vehicles detected in the detection range.

The leaning vehicle of the present invention may include a means for detecting a lane, which is not a camera. For example the position of a lane may be detected based on position data received by the wireless communication device and map information stored in the storage device of the controller.

### <Modification 1 of Driving Device of Leaning Vehicle>

In Specific Examples 1 to 3 of the embodiment, the driving device 50 applies driving force only to the rear wheel unit 3. In this regard, the driving device of the leaning vehicle of the present invention may apply driving force to the front wheel unit, may apply driving force to the rear wheel unit, and may apply driving force to both of the front wheel unit and the rear wheel unit. The leaning vehicle of the present invention always includes a driving device which applies driving force to at least one of the front wheel unit or the rear wheel unit.

### <Modification 2 of Driving Device of Leaning Vehicle>

In Specific Examples 1 to 3 of the embodiment, the driving source of the driving device 50 is an engine. In the present invention, however, the driving source of the driving device of the leaning vehicle of the present invention is not limited to the engine. The driving source may be constituted by at least one motor. The driving source may be constituted by an engine and at least one motor. The motor may be an in-wheel motor. A starter motor which rotates the crankshaft when starting engine is not a motor as the driving source.

### <Different Types of Leaning Vehicles>

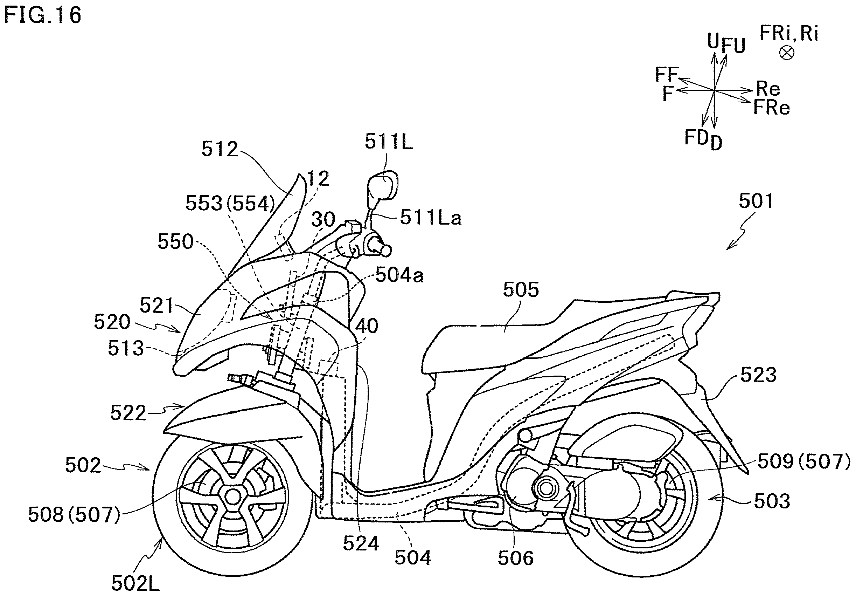

The leaning vehicle of the present invention may be of any type as long as the leaning vehicle includes a vehicle body frame which leans in the vehicle rightward direction when turning right and leans in the vehicle leftward direction when turning left. The leaning vehicle of the present invention is not limited to the motorcycle. The motorcycle includes a scooter, an engine-equipped bicycle, a moped, etc. The leaning vehicle of the present invention may be a motor tricycle or a motor four-wheeled vehicle. The leaning vehicle of the present invention may be a motor tricycle having two rear wheels. The leaning vehicle of the present invention may be a motor tricycle having two front wheels as shown in FIG. 16 to FIG. 19. The front wheel unit of the leaning vehicle of the present invention may include two or more front wheels. The rear wheel unit of the leaning vehicle of the present invention may include two or more rear wheels.

An example of a motor tricycle to which the leaning vehicle of the present invention is applicable will be detailed below with reference to FIG. 16 to FIG. 19. In the descriptions below, the definitions of the vehicle front-rear direction, the vehicle left-right direction, and the vehicle up-down direction are identical with those in the embodiment and Specific Example 1 above.

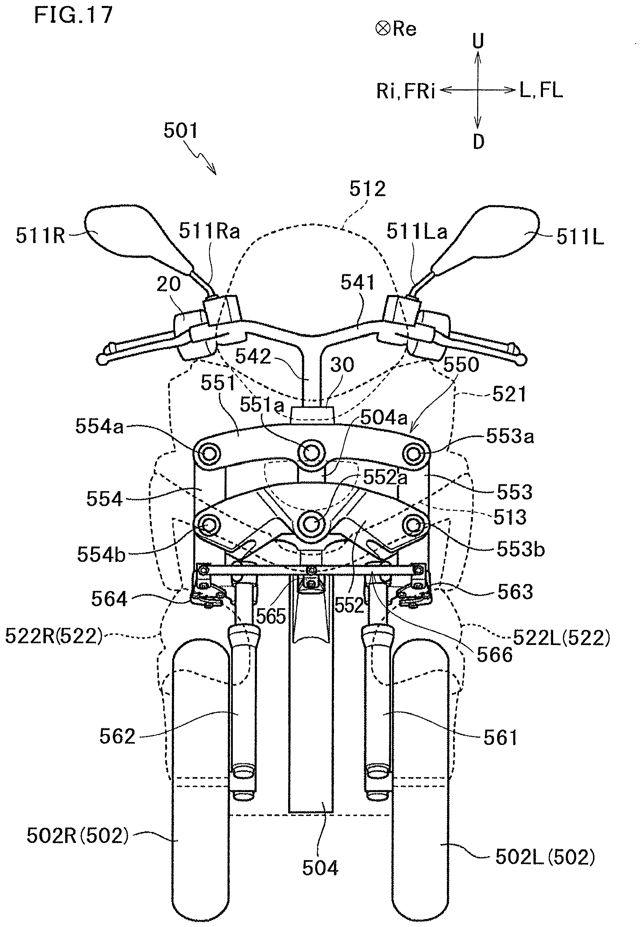

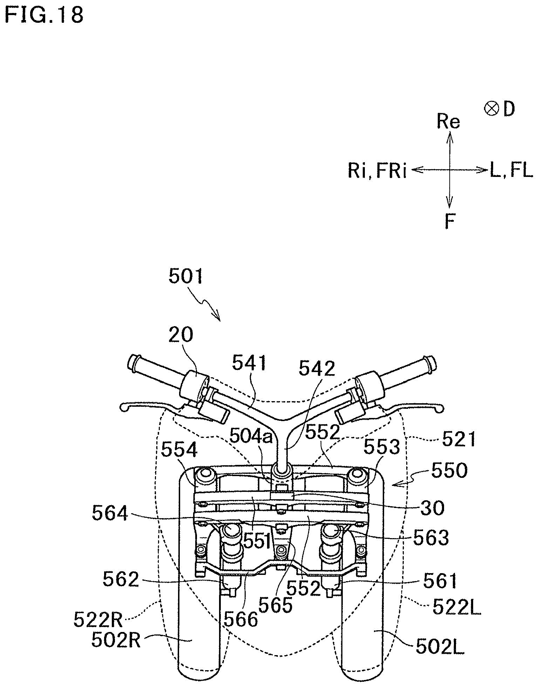

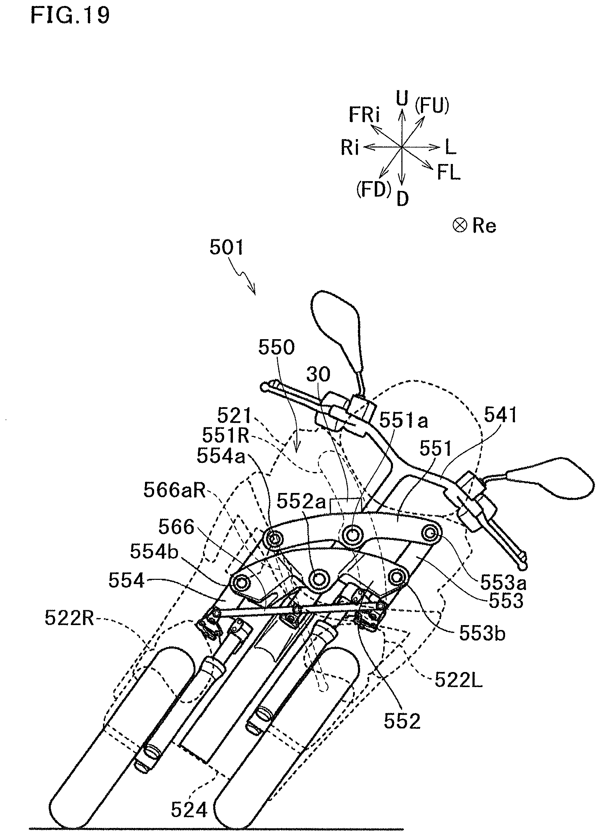

FIG. 16 is a left side view of a motor tricycle 501. FIG. 17 is a front view of the motor tricycle 501. FIG. 18 is a plan view of a part of the motor tricycle 501. FIG. 16 to FIG. 18 show the motor tricycle 501 in which a vehicle body frame 504 stands upright on a horizontal road surface. FIG. 19 is a front view of the motor tricycle 501 in which the vehicle body frame 504 leans.

As shown in FIG. 16, the motor tricycle 501 includes a preceding vehicle detector 30, a controller 40, and a display 12. As shown in FIG. 17, the motor tricycle includes a switch 20 (selection operation unit). The preceding vehicle detector 30, the controller 40, the display 12, and the switch 20 are structurally identical with the preceding vehicle detector 30, the controller 40 the display 12, and the switch 20 of the embodiment and Specific Examples 1 to 3 above, and are therefore not explained again.

As shown in FIG. 16, the motor tricycle 501 includes a front wheel unit 502, a rear wheel unit 503, and a vehicle body frame 504. The front wheel unit 502 and the rear wheel unit 503 are supported by the vehicle body frame 504. The front wheel unit 502 is constituted by a left front wheel 502L and a right front wheel 502R. The left front wheel 502L and the right front wheel 502R are provided to be lined up in the vehicle left-right direction. The rear wheel unit 503 is composed of one rear wheel. The rear wheel unit 503 is provided rearward of the front wheel unit 502 in the vehicle front-rear direction. The motor tricycle 501 includes a seat 505. The seat 505 is supported by the vehicle body frame 504. The rider is seated on the seat 505.

As shown in FIG. 19, the vehicle body frame 504 of the motor tricycle 501 leans in the vehicle leftward direction when turning left. The vehicle body frame 504 of the motor tricycle 501 leans in the vehicle rightward direction when turning left. Therefore, the width in the vehicle left-right direction of the motor tricycle 501 in which the vehicle body frame 504 stand upright is longer than the width in the vehicle left-right direction of the motor tricycle 501 in which the vehicle body frame 504 stands upright (see FIG. 17 and FIG. 19). The width in the vehicle left-right direction of the motor tricycle 501 in which the vehicle body frame 504 stands upright is equal to or less than a half of the width of the lane. The motor tricycle 501 runs at a rider's selected position selected in the vehicle left-right direction of the lane.

As shown in FIG. 16 to FIG. 18, the vehicle body frame 504 has a head pipe 504a provided at a front portion. A steering shaft 542 is rotatably inserted into the head pipe 504a. The steering shaft 542 is rotatable about a central steering axial line which is the central axis of the steering shaft 542, relative to the head pipe 504a. An upper end portion of the steering shaft 542 is connected to a handle unit 541.

In FIG. 16 to FIG. 19, an arrow FF indicates a frame forward direction. An arrow FRe indicates a frame rearward direction. An arrow FU indicates a frame upward direction. An arrow FD indicates a frame downward direction. An arrow FRi indicates a frame rightward direction. An arrow FL indicates a frame leftward direction. In FIG. 16 to FIG. 19, a frame up-down direction (FUFD direction), a frame left-right direction (FLFRi direction), and a frame front-rear direction (FFFRe direction) are directions fixed to the vehicle body frame 504. The frame up-down direction (FUFD direction) is parallel to the central axial line of the steering shaft 542. The frame left-right direction (FLFRi direction) is parallel to the vehicle left-right direction when the vehicle body frame 504 does not lean in the vehicle left-right direction. The frame front-rear direction (FFFRe direction) is orthogonal to both the frame up-down direction (FUFD direction) and the frame left-right direction (FLFRi direction). Hereinafter, a front portion of a member indicates a front portion in the vehicle forward direction. The same applies to a rear portion, an upper portion, a lower portion, a left portion, and a right portion.

The motor tricycle 501 includes a driving device 506. The driving device 506 is supported by the vehicle body frame 504. The driving device 506 includes a driving source and a torque transmission mechanism. The driving source generates driving source torque. The driving source is an engine. The engine is not limited to any particular type. The torque transmission mechanism is arranged to be able to transmit at least part of the driving source torque generated by the engine to the rear wheel unit 503. The torque transmission mechanism includes a transmission and a clutch. The transmission may be a continuously variable transmission. The clutch may be a centrifugal clutch. The driving device 506 is a swing-type engine unit. A front end portion of the driving device 506 is swingably supported by the vehicle body frame 504. A rear end portion of the driving device 506 supports the rear wheel unit 503. The rear wheel unit 503 is therefore indirectly supported by the vehicle body frame 504. The driving force applied to the rear wheel unit 503 by the driving device 506 is controllable by the controller 40.

The motor tricycle 501 includes a braking device 507. The braking device 507 includes a front brake 508 and a rear brake 509. The front brake 508 is provided at the front wheel unit 502. The front brake 508 is arranged to be able to apply braking force to the front wheel unit 502. The rear brake 509 is provided at the rear wheel unit 503. The rear brake 509 is arranged to be able to apply braking force to the rear wheel unit 503. Each of the front brake 508 and the rear brake 509 is, for example, a hydraulic brake. The braking force applied to the front wheel unit 502 by the front brake 508 is controllable by the controller 40. The braking force applied to the rear wheel unit 503 by the rear brake 509 is controllable by the controller 40.

The motor tricycle 501 includes a link mechanism 550. The link mechanism 550 is supported by the vehicle body frame 504. The link mechanism 550 supports the front wheel unit 502. The front wheel unit 502 is indirectly supported by the vehicle body frame 504 via the link mechanism 550. The link mechanism 550 will be detailed later. The motor tricycle 501 includes a vehicle body cover 520. The vehicle body cover 520 covers the vehicle body frame 504, etc. The vehicle body cover 520 includes a front cover 521, two front fenders 522, a rear fender 523, and a leg shield 524. The vehicle body cover 520 is made of synthetic resin.

The front cover 521 is provided forward of the seat 505 in the vehicle front-rear direction. The front cover 521 is supported by the vehicle body frame 504 so that the position of the front cover 521 relative to the vehicle body frame 504 is fixed. A headlight unit 513 is attached to the front cover 521. The headlight unit 513 is supported by the later-described link mechanism 550. The headlight unit 513 is provided forward of the link mechanism 550 in the vehicle front-rear direction. The headlight unit 513 emits light in the vehicle forward direction. A light source of the headlight unit 513 is, for example, a halogen lamp or a semiconductor light source. A screen 512 is provided at an upper portion of the front cover 521. The screen 512 is provided forward of the handle unit 541 in the vehicle front-rear direction. An upper portion of the front cover 521 is overlapped with a lower portion of the screen 512 when viewed in the vehicle forward direction. The part of the upper portion of the front cover 521, which overlaps the screen 512, is located rearward of the screen 512 in the vehicle front-rear direction. The screen 512 is made of, for example, transparent synthetic resin.

The two front fenders 522 include a left fender 522L and a right fender 522R. The two front fenders 522 are at least partially provided below the front cover 521 in the frame up-down direction. The two front fenders 522 are provided at least partially above the front wheel unit 502 in the frame up-down direction. The left fender 522L at least partially covers an upper portion of the left front wheel 502L. The right fender 522R at least partially covers an upper portion of the right front wheel 502R.

The leg shield 524 is provided rearward of the front wheel unit 502 and forward of the seat 505 in the vehicle front-rear direction. The leg shield 524 is positioned to be overlapped with at least part of a leg portion of the rider seated on the seat 505, when the vehicle 501 is viewed in the vehicle forward direction.

Mirror stays 511La and 511Ra are provided at the front portion of the motor tricycle 501. In the frame left-right direction, the mirror stays 511La and 511Ra are symmetrical about the center in the vehicle left-right direction of the vehicle body frame 504. The mirror stays 511La and 511Ra are attached to the handle unit 541. The mirror stays 511La and 511Ra may be attached to an upper portion of the front cover 521. The mirror stays 511La and 511Ra are made of metal or synthetic resin. The mirror stays 511La and 511Ra support back mirrors 511L and 511R, respectively. When the vehicle 501 is viewed in the vehicle rearward direction, the back mirrors 511L and 511R are not overlapped with the screen 512.

The left front wheel 502L is supported by a lower end portion of the left front fork 561. The left front fork 561 is provided rightward of the left front wheel 502L in the vehicle left-right direction. The left front fork 561 includes a front suspension which is configured to absorb impact in the frame up-down direction. An upper end portion of the left front fork 561 is connected to the link mechanism 550. The right front wheel 502R is supported by a lower end portion of the right front fork 562. The right front fork 562 is provided leftward of the right front wheel 502R in the vehicle left-right direction. The right front fork 562 includes a right front suspension which is configured to absorb impact in the frame up-down direction. An upper end portion of the right front fork 562 is connected to the link mechanism 550.

As shown in FIG. 17, the link mechanism 550 is provided below the handle unit 541 in the frame up-down direction. The link mechanism 550 is provided above the front wheel unit 502 in the frame up-down direction. The link mechanism 550 is at least partially covered with the front cover 521. The link mechanism 550 is a link mechanism of a parallel four-node link (parallelogram link) type. The link mechanism 550 is supported by the vehicle body frame 504. The link mechanism 550 includes an upper cross portion 551, a lower cross portion 552, a left front wheel supporting portion 553, and a right front wheel supporting portion 554.

An intermediate portion in the vehicle left-right direction of the upper cross portion 551 is connected to the head pipe 504a by the upper middle connection shaft 551a. The upper cross portion 551 is rotatable about the central axial line of the upper middle connection shaft 551a with respect to the head pipe 504a. The central axial line of the upper middle connection shaft 551a extends in a direction along the frame front-rear direction.

A left end portion of the upper cross portion 551 is connected to the left front wheel supporting portion 553 by the upper left connection shaft 553a. The upper cross portion 551 is rotatable about the central axial line of the upper left connection shaft 553a with respect to the left front wheel supporting portion 553. The central axial line of the upper left connection shaft 553a extends in a direction parallel to the central axial line of the upper middle connection shaft 551a. A right end portion of the upper cross portion 551 is connected to the right front wheel supporting portion 554 by the upper right connection shaft 554a. The upper cross portion 551 is rotatable about the central axial line of the upper right connection shaft 554a with respect to the right front wheel supporting portion 554. The central axial line of the upper right connection shaft 554a extends in a direction parallel to the central axial line of the upper middle connection shaft 551a.

The lower cross portion 552 is provided below the upper cross portion 551 in the frame up-down direction. An intermediate portion in the vehicle left-right direction of the lower cross portion 552 is connected to the head pipe 504a by the lower middle connection shaft 552a. The lower cross portion 552 is rotatable about the central axial line of the lower middle connection shaft 552a with respect to the head pipe 504a. The central axial line of the lower middle connection shaft 552a extends in a direction parallel to the central axial line of the upper middle connection shaft 551a.

A left end portion of the lower cross portion 552 is connected to the left front wheel supporting portion 553 by the lower left connection shaft 553b. The lower cross portion 552 is rotatable about the central axial line of the lower left connection shaft 553b with respect to the left front wheel supporting portion 553. The central axial line of the lower left connection shaft 553b extends in a direction parallel to the central axial line of the upper middle connection shaft 551a. A right end portion of the lower cross portion 552 is connected to the right front wheel supporting portion 554 by the lower right connection shaft 554b. The lower cross portion 552 is rotatable about the central axial line of the lower right connection shaft 554b with respect to the right front wheel supporting portion 554. The central axial line of the lower right connection shaft 554b extends in a direction parallel to the central axial line of the upper middle connection shaft 551a.

A lower end portion of the left front wheel supporting portion 553 is connected to an upper end portion of the left front fork 561 by the left bracket 563. An upper end portion of the left front fork 561 is fixed to the left bracket 563 so as not to be relatively rotatable. A lower end portion of the right front wheel supporting portion 554 is connected to an upper end portion of the right front fork 562 by the right bracket 564. An upper end portion of the right front fork 562 is fixed to the right bracket 564 so as not to be relatively rotatable.

When the vehicle 501 in which the vehicle body frame 504 is in the upright state and stands on a horizontal road surface is viewed in the vehicle rearward direction, the upper middle connection shaft 551a and the lower middle connection shaft 552a are on linear lines parallel to the frame up-down direction and the vehicle up-down direction. When the vehicle 501 in which the vehicle body frame 504 is in the upright state and stands on a horizontal road surface is viewed in the vehicle rearward direction, the upper left connection shaft 553a and the lower left connection shaft 553b are on linear lines parallel to the frame up-down direction and the vehicle up-down direction. When the vehicle 501 in which the vehicle body frame 504 is in the upright state and stands on a horizontal road surface is viewed in the vehicle rearward direction, the upper right connection shaft 554a and the lower right connection shaft 554b are on linear lines parallel to the frame up-down direction and the vehicle up-down direction.

When the vehicle 501 in which the vehicle body frame 504 is in the upright state and stands on a horizontal road surface is viewed in the vehicle rearward direction, the front end of the upper middle connection shaft 55 1a, the front end of the upper left connection shaft 553a, and the front end of the upper right connection shaft 554a are on linear lines parallel to the frame left-right direction and the vehicle left-right direction. When the vehicle 501 in which the vehicle body frame 504 is in the upright state and stands on a horizontal road surface is viewed in the vehicle rearward direction, the front end of the lower middle connection shaft 552a, the front end of the lower left connection shaft 553b, and the front end of the lower right connection shaft 554b are on linear lines parallel to the frame left-right direction and the vehicle left-right direction.

As shown in FIG. 17 and FIG. 18 the motor tricycle 501 includes a steering force transmission rod 566. Steering force by which the rider operates the handle unit 541 is transmitted to the front wheel unit 502 via the steering force transmission rod 566. The steering force transmission rod 566 is provided below the lower cross portion 552 in the frame up-down direction. An intermediate portion in the vehicle left-right direction of the steering force transmission rod 566 is connected to a lower portion of the steering shaft 542 via an intermediate bracket 565. The intermediate bracket 565 is rotatable together with the steering shaft 542. The intermediate portion in the frame left-right direction of the steering force transmission rod 566 is connected to the intermediate bracket 565 via two axis components. The steering force transmission rod 566 is rotatable relative to the intermediate bracket 565 about an axial line along the frame up-down direction and an axial line along the frame front-rear direction, on account of the two axis components.

A left end portion of the steering force transmission rod 566 is connected to the left front wheel supporting portion 553 via the left bracket 563.

The left bracket 563 is rotatable relative to the left front wheel supporting portion 553 about a left steering axial line which is parallel to the frame up-down direction. A left end portion of the steering force transmission rod 566 is connected to the left bracket 563 via two axis components. The steering force transmission rod 566 is rotatable relative to the left bracket 563 about an axial line along the frame up-down direction and an axial line along the frame front-rear direction, on account of the two axis components.

A right end portion of the steering force transmission rod 566 is connected to the right bracket 564. As described above, the right bracket 564 is connected to the right front wheel supporting portion 554. The right bracket 564 is rotatable relative to the right front wheel supporting portion 554 about a right steering axial line which is parallel to the frame up-down direction. The right end portion of the steering force transmission rod 566 is connected to the right bracket 564 via two axis components. The steering force transmission rod 566 is rotatable relative to the right bracket 564 about an axial line along the frame up-down direction and an axial line along the frame front-rear direction, on account of the two axis components.

As the rider rotates the steering shaft 542 about the central steering axial line by operating the handle unit 541, the intermediate bracket 565 rotates together with the steering shaft. As a result, the steering force transmission rod 566 moves in the frame leftward direction or in the frame rightward direction. Due to this, the left bracket 563 rotates about the left steering axial line relative to the left front wheel supporting portion 553. At the same time, the right bracket 564 rotates about the right steering axial line relative to the right front wheel supporting portion 554. Due to this, the left front fork 561 rotates about the left steering axial line, and at the same time, the right front fork 561 rotates about the right steering axial line. As a result, the left front wheel 502L rotates about the left steering axial line and the right front wheel 502R rotates about the right steering axial line.

FIG. 19 shows the motor tricycle 501 when the rider leans the vehicle body frame 504 in the vehicle leftward direction on a horizontal road surface. In the front view, the frame up-down direction is not a direction parallel to the plane of the drawing. The frame up-down direction (FUFD direction) in FIG. 19 indicates a frame up-down direction when viewed in the vehicle front-rear direction. When the vehicle body frame 504 leans in the vehicle leftward direction on a horizontal road surface, the upper cross portion 551, the lower cross portion 552, and the steering force transmission rod 566 move leftward and downward in the vehicle left-right direction and in the vehicle up-down direction, without leaning in the vehicle leftward direction or the vehicle rightward direction. At the same time, the left front wheel supporting portion 553 and the right front wheel supporting portion 554 lean in the vehicle leftward direction by the same angle as the leaning vehicle body frame 504. For this reason, the leaning vehicle body frame 504 leans in the vehicle leftward direction while both of the left front wheel 502L and the right front wheel 502R are in contact with the road surface. In other words, when the leaning vehicle body frame 504 leans in the vehicle leftward direction, the upper cross portion 551, the lower cross portion 552, and the steering force transmission rod 566 rotate counterclockwise relative to the head pipe 504a, when the vehicle 501 is viewed in the vehicle rearward direction.

When the vehicle body frame 504 leans in the vehicle rightward direction on a horizontal road surface, the movement of the motor tricycle 501 is symmetrical in the left-right direction with the movement when the vehicle body frame 504 leans in the vehicle leftward direction on a horizontal road surface. In FIG. 19, the relative positions of the upper cross portion 551 and the steering force transmission rod 566 with respect to the vehicle body frame 504, when the rider leans the vehicle body frame 504 leans in the vehicle rightward direction, are indicated by dotted lines.

As shown in FIG. 18 and FIG. 19, the preceding vehicle detector 30 is provided in the link mechanism 550. To be more specific, the preceding vehicle detector 30 is provided on the upper surface of the upper cross portion 551. The preceding vehicle detector 30 is covered with the front cover 521. When the vehicle body frame 504 turns left and leans in the vehicle leftward direction or the vehicle body frame 504 turns right and leans in the vehicle rightward direction, the upper cross portion 551 maintains the same posture as the upper cross portion 551 when the vehicle body frame 504 is in the upright state. Therefore, when the vehicle is turning and the vehicle body frame 504 leans in the vehicle leftward direction or in the vehicle rightward direction, the preceding vehicle detector 30 is able to detect an object forward of the host vehicle in the vehicle front-rear direction while keeping the same posture as the vehicle body frame 504 in the upright state. Therefore, even when the motor tricycle 501 is turning and the vehicle body frame 504 leans in the vehicle leftward direction or in the vehicle rightward direction, the motor tricycle 501 is able to accurately detect an object forward of the host vehicle in the vehicle front-rear direction.

The position of the preceding vehicle detector 30 in the motor tricycle 501 is not limited to the upper surface of the upper cross portion 551. The preceding vehicle detector 30 may be provided on the front surface of the upper cross portion 551 or another position of the upper cross portion 551. The preceding vehicle detector 30 may be provided on the lower cross portion 552 or the steering force transmission rod 566.

The position of the preceding vehicle detector 30 in the motor tricycle 501 may be applied to a motor tricycle which is structurally identical with the motor tricycle 501 except that the selection operation unit and the controller of the present invention are not included. In this case, the preceding vehicle detector 30 which detects an object forward of the host vehicle in the vehicle front-rear direction by utilizing an electromagnetic wave or an acoustic wave (sound wave) may not be used for detecting a preceding vehicle.

In the motor tricycle 501, the two front wheels 502L and 502R are supported by the link mechanism 550 which is a link mechanism of a parallel four-node link (parallelogram link) type. When the leaning vehicle of the present invention includes a link mechanism which supports two front wheels, the link mechanism may be of a different type. When the leaning vehicle of the present invention includes a link mechanism which supports two rear wheels, the link mechanism may be of the parallel four-node link type or a different type. Examples of the link mechanism of the other type include a double wishbone type link mechanism, a suspension tower type link mechanism, and a seesaw type link mechanism. When the leaning vehicle of the present invention has a link mechanism of the other type, the preceding vehicle detector is preferably provided at a location where the detector is able to keep its posture regardless of the inclination of the vehicle body frame. The position of the preceding vehicle detector in the leaning vehicle having the link mechanism of the other type may be applied to a leaning vehicle which does not include the selection operation unit and the controller of the present invention. In this case, the preceding vehicle detector which detects an object forward of the host vehicle in the vehicle front-rear direction by utilizing an electromagnetic wave or an acoustic wave may not be used for detecting a preceding vehicle.

### [Reference Signs List]

1 leaning vehicle
1A motorcycle (leaning vehicle)
501 motor tricycle (leaning vehicle)
2, 502 front wheel unit
3,503 rear wheel unit
4, 504 vehicle body frame
12 display
20 selection operation unit, switch
30 preceding vehicle detector
40 controller
R0 detectable range
Ra host vehicle fixed detection range
Ra1 reference detection range (left-right decreased detection range)
Ra2 right enlarged detection range (right shifted detection range)
Ra3 left enlarged detection range (left shifted detection range)
Ra4 left-right enlarged detection range (reference detection range)
Ra11 reference detection range
Ra12 right detection range
Ra13 left detection range
Rb target preceding vehicle monitoring range
Rc other vehicle fixed detection range
TV target preceding vehicle
BV reference preceding vehicle

## Claims

1. A leaning vehicle (1, 1A, 501) comprising:
a front wheel unit (2, 502) which includes at least one front wheel;
a rear wheel unit (3, 503) which includes at least one rear wheel and is disposed rearward of the front wheel unit (2, 502) in a vehicle front-rear direction;
a vehicle body frame (4, 504) which supports the front wheel unit (2, 502) and the rear wheel unit (3, 503), and is structured to lean in a vehicle rightward direction when turning right and lean in a vehicle leftward direction when turning left;
a preceding vehicle detector (30) configured to detect a preceding vehicle in a detectable range (R0) which is forward of the leaning vehicle (1, 1A, 501) in the vehicle front-rear direction; and
a controller (40) configured to control acceleration in a vehicle forward direction by controlling rotation of at least one of the front wheel unit (2, 502) and the rear wheel unit (3, 503), the controller (40) executing an inter-vehicle distance control which is a control of acceleration in the vehicle forward direction based on a distance in the vehicle front-rear direction between the preceding vehicle and the leaning vehicle (1, 1A, 501) detected by the preceding vehicle detector (30) when an inter-vehicle distance control mode is on, and the controller (40) not executing the inter-vehicle distance control when the inter-vehicle distance control mode is off,
the width of the leaning vehicle (1, 1A, 501) in a vehicle left-right direction when the vehicle body frame (4, 504) stands upright being half as long as or shorter than the width of a lane, and the leaning vehicle (1, 1A, 501) configured to run at a rider's selected position in the vehicle left-right direction in the lane,
the leaning vehicle (1, 1A, 501) further comprising a selection operation unit (20) configured to receive a target preceding vehicle selection operation by which the rider is allowed to directly or indirectly select at least one target preceding vehicle (TV) from among preceding vehicles in the detectable range (R0) of the preceding vehicle detector (30), the number of the at least one target preceding vehicle (TV) being smaller than the number of the preceding vehicles in the detectable range (R0), and
the controller (40) being configured to control, in the inter-vehicle distance control, the acceleration of the leaning vehicle (1, 1A, 501) in the vehicle forward direction based on a distance in the vehicle front-rear direction between the leaning vehicle (1, 1A, 501) and each of the at least one target preceding vehicle (TV) which is directly or indirectly selected in the target preceding vehicle selection operation by the rider using the selection operation unit (20), from among the preceding vehicles in the detectable range (R0) of the preceding vehicle detector (30),
the leaning vehicle being **characterized in that**,
the selection operation unit (20) is configured to receive at least one of:
(a) a first selection operation in which the rider directly selects a host vehicle fixed detection range (Ra) from among options, the host vehicle fixed detection range (Ra) being part of the detectable range (R0) of the preceding vehicle detector (30), the host vehicle fixed detection range (Ra) being positionally fixed relative to the leaning vehicle (1, 1A, 501), and the host vehicle fixed detection range (Ra) being used for detecting at least one first selection operation target preceding vehicle (TV) which is equivalent to the at least one target preceding vehicle (TV), and
(c) a third selection operation in which the rider selects a reference preceding vehicle (BV) from among the preceding vehicles detected in the detectable range (R0) of the preceding vehicle detector (30), the reference preceding vehicle (BV) being a reference for determining another vehicle fixed detection range (Rc) which is part of the detectable range (R0) of the preceding vehicle detector (30), the other vehicle fixed detection range (Rc) being positionally fixed in the vehicle left-right direction relative to the reference preceding vehicle (BV), and the reference preceding vehicle (BV) being used for detecting at least one third selection operation target preceding vehicle (TV) equivalent to the at least one target preceding vehicle (TV),
when the selection operation unit (20) receives the first selection operation, the controller (40) performs the inter-vehicle distance control based on the at least one first selection operation target preceding vehicle (TV) which is either automatically selected by the controller (40) or directly selected by the rider using the selection operation unit (20) in a fourth selection operation, from among at least one preceding vehicle detected in the host vehicle fixed detection range (Ra) selected by the rider in the first selection operation,
when the selection operation unit (20) receives the third selection operation, the controller (40) sets the other vehicle fixed detection range (Rc) based on a position of the reference preceding vehicle (BV) selected by the rider in the third selection operation and performs the inter-vehicle distance control based on the at least one third selection operation target preceding vehicle (TV) which is either automatically selected by the controller (40) or directly selected by the rider using the selection operation unit (20) in a fifth selection operation, from among at least one preceding vehicle detected in the other vehicle fixed detection range (Rc), and
the target preceding vehicle selection operation, by which the rider is allowed to indirectly select the at least one target preceding vehicle (TV) from among the preceding vehicles in the detectable range (R0) of the preceding vehicle detector (30), is any one of the first selection operation, a combination of the first selection operation and the fourth selection operation, the third selection operation, or a combination of the third selection operation and the fifth selection operation.

2. The leaning vehicle (1, 1A, 501) according to claim 1, wherein the preceding vehicle detector (30) is configured to emit an electromagnetic wave or an acoustic wave, and to detect the preceding vehicle in the detectable range (R0) by using the electromagnetic wave or the acoustic wave, without using a photographed image.

3. The leaning vehicle (1, 1A, 501) according to claim 1 or 2, wherein, the controller (40) is configured to control, in the inter-vehicle distance control, the acceleration in the vehicle forward direction based on both distance in the vehicle front-rear direction and distance in a vehicle left-right direction between the leaning vehicle (1, 1A, 501) and each of the at least one target preceding vehicle (TV) which is indirectly selected in the target preceding vehicle selection operation by the rider using the selection operation unit (20), from among the preceding vehicles in the detectable range (R0) of the preceding vehicle detector (30).

4. The leaning vehicle (1, 1A, 501) according to any one of claims 1 to 3, wherein
the selection operation unit (20) is configured to receive at least one of (a) the first selection operation and (c) the third selection operation and is configured to receive (b) a second selection operation in which the rider directly selects at least one second selection operation target preceding vehicle (TV) which is equivalent to the at least one target preceding vehicle (TV) from among the preceding vehicles detected in the detectable range (R0) of the preceding vehicle detector (30), wherein
when the selection operation unit (20) receives the second selection operation, the controller (40) performs the inter-vehicle distance control based on the at least one second selection operation target preceding vehicle (TV) which is directly selected by the rider in the second selection operation, and
the target preceding vehicle selection operation, by which the rider is allowed to directly or indirectly select the at least one target preceding vehicle (TV) from among the preceding vehicles in the detectable range (R0) of the preceding vehicle detector (30), is any one of the first selection operation, a combination of the first selection operation and the fourth selection operation, the second selection operation, the third selection operation, or a combination of the third selection operation and the fifth selection operation.

5. The leaning vehicle (1, 1A, 501) according to any one of claims 1 to 4, wherein
the selection operation unit (20) is configured to receive the first selection operation, and
the options in the first selection operation include:
(i) a reference detection range (Ra1, Ra4, Ra11) at a central portion in the vehicle left-right direction of the detectable range (R0),
(ii) at least one of:
a right shifted detection range (Ra2) in which, in the vehicle left-right direction, a right end is rightward of a right end of the reference detection range (Ra4) and a left end is rightward of a left end of the reference detection range (Ra4);
a right enlarged detection range (Ra2) in which, in the vehicle left-right direction, a right end is rightward of the right end of the reference detection range (Ra1) and a left end is identical in position with the left end of the reference detection range (Ra1); or
a right detection range (Ra12) in which, in the vehicle left-right direction, a right end is identical in position with the right end of the reference detection range (Ra11) and a left end is rightward of the left end of the reference detection range (Ra11), and
(iii) at least one of:
a left shifted detection range (Ra3) in which, in the vehicle left-right direction, a left end is leftward of the left end of the reference detection range (Ra4) and a right end is leftward of the right end of the reference detection range (Ra4);
a left enlarged detection range (Ra3) in which, in the vehicle left-right direction, a left end is leftward of the left end of the reference detection range (Ra1) and a right end is identical in position with the right end of the reference detection range (Ra1); or
a left detection range (Ra13) in which, in the vehicle left-right direction, a left end is identical in position with the left end of the reference detection range (Ra11) and a right end is leftward of the right end of the reference detection range (Ra11).

6. The leaning vehicle (1, 1A, 501) according to claim 5, wherein
the options in the first selection operation further include:
(iv) at least one of:
a left-right decreased detection range (Ra1) in which, in the vehicle left-right direction, a right end is leftward of the right end of the reference detection range (Ra4) and a left end is rightward of the left end of the reference detection range (Ra4); or
a left-right enlarged detection range (Ra4) in which, in the vehicle left-right direction, a right end is rightward of the right end of the reference detection range (Ra1) and a left end is leftward of the left end of the reference detection range (Ra1).

7. The leaning vehicle (1, 1A, 501) according to any one of claims 1 to 6, wherein
the selection operation unit (20) is configured to receive the first selection operation, and
the first selection operation is an operation to select the host vehicle fixed detection range (Ra), which is achieved by one of:
a rider's selection of at least one preceding vehicle not to be included in the host vehicle fixed detection range (Ra), from among the preceding vehicles detected in the detectable range (R0) of the preceding vehicle detector (30);
a rider's selection of at least one preceding vehicle to be included in the host vehicle fixed detection range (Ra), from among the preceding vehicles detected in the detectable range (R0) of the preceding vehicle detector (30); or
a rider' selection of both at least one preceding vehicle not to be included in the host vehicle fixed detection range (Ra) and at least one preceding vehicle to be included in the host vehicle fixed detection range (Ra), from among the preceding vehicles detected in the detectable range (R0) of the preceding vehicle detector (30).

8. The leaning vehicle (1, 1A, 501) according to any one of claims 1 to 7, wherein
when the selection operation unit (20) receives the first selection operation, the controller (40) selects, as one of the at least one first selection operation target preceding vehicle (TV), (I) a preceding vehicle closest to the leaning vehicle (1, 1A, 501) in the vehicle front-rear direction, (II) a preceding vehicle closest to the leaning vehicle (1, 1A, 501) in the vehicle left-right direction, or (III) a preceding vehicle closest to the center of the host vehicle fixed detection range (Ra) in the vehicle left-right direction, from among preceding vehicles detected in the host vehicle fixed detection range (Ra) selected by the rider in the first selection operation, and
when the selection operation unit (20) receives the third selection operation, the controller (40) sets the other vehicle fixed detection range (Rc) based on a position of the reference preceding vehicle (BV) selected by the rider in the third selection operation and selects, as one of the at least one third selection operation target preceding vehicle (TV), (I) a preceding vehicle closest to the leaning vehicle (1, 1A, 501) in the vehicle front-rear direction, (II) a preceding vehicle closest to the leaning vehicle (1, 1A, 501) in the vehicle left-right direction, or (III) a preceding vehicle closest to the center of the other vehicle fixed detection range (Rc) in the vehicle left-right direction, from among preceding vehicles detected in the other vehicle fixed detection range (Rc).

9. The leaning vehicle (1, 1A, 501) according to any one of claims 1 to 8, wherein
the selection operation unit (20) is configured to receive the first selection operation, and
the controller (40) is configured to control, in the inter-vehicle distance control, the acceleration in the vehicle forward direction based on both distance in the vehicle front-rear direction and distance in the vehicle left-right direction between the leaning vehicle (1, 1A, 501) and each of two first selection operation target preceding vehicles (TV) which are either automatically selected by the controller (40) or directly selected by the rider using the selection operation unit (20) in the fourth selection operation, from among preceding vehicles detected in the host vehicle fixed detection range (Ra) selected by the rider in the first selection operation.

10. The leaning vehicle (1, 1A, 501) according to any one of claims 4 to 9, wherein
the selection operation unit (20) is configured to receive the second selection operation,
the second selection operation is an operation in which the rider is allowed to directly select two second selection operation target preceding vehicles (TV) from among the preceding vehicles detected in the detectable range (R0) of the preceding vehicle detector (30), and
the controller (40) is configured to control, in the inter-vehicle distance control, the acceleration in the vehicle forward direction based on both distance in the vehicle front-rear direction and distance in the vehicle left-right direction between the leaning vehicle (1, 1A, 501) and each of the two second selection operation target preceding vehicles (TV) directly selected by the rider in the second selection operation.

11. The leaning vehicle (1, 1A, 501) according to any one of claims 1 to 10, wherein
the selection operation unit (20) is configured to receive the third selection operation,
the controller (40) is configured to set the other vehicle fixed detection range (Rc) based on a rider's selected position of the reference preceding vehicle (BV) in the third selection operation, and
the controller (40) is configured to control, in the inter-vehicle distance control, the acceleration in the vehicle forward direction based on both distance in the vehicle front-rear direction and distance in the vehicle left-right direction between the leaning vehicle (1, 1A, 501) and each of two third selection operation target preceding vehicles (TV) which are either automatically selected by the controller (40) from among preceding vehicles detected in the other vehicle fixed detection range (Rc) or directly selected by the rider using the selection operation unit (20) in the fifth selection operation.

12. The leaning vehicle (1, 1A, 501) according to any one of claims 4 to 11, wherein
the selection operation unit (20) is configured to receive the second selection operation,
the controller (40) is configured to set a target preceding vehicle monitoring range (Rb) which is part of the detectable range (R0) of the preceding vehicle detector (30) and is fixed in position relative to the leaning vehicle (1, 1A, 501), based on a position of the at least one second selection operation target preceding vehicle (TV) when the at least one second selection operation target preceding vehicle (TV) is selected in the second selection operation, and
when at least one of the at least one second selection operation target preceding vehicle (TV) selected in the second selection operation goes out from the target preceding vehicle monitoring range (Rb), the controller (40) stops the inter-vehicle distance control based on the second selection operation target preceding vehicle (TV) which goes out from the target preceding vehicle monitoring range (Rb).

13. The leaning vehicle (1, 1A, 501) according to claim 12, wherein
the selection operation unit (20) is configured to receive the second selection operation,
when receiving the second selection operation, the selection operation unit (20) is able to receive at least one of:
an operation to select at least one preceding vehicle not to be included in the target preceding vehicle monitoring range (Rb), from among the preceding vehicles detected in the detectable range (R0) of the preceding vehicle detector (30);
an operation to select at least one preceding vehicle which is not the at least one second selection operation target preceding vehicle (TV) and is to be included in the target preceding vehicle monitoring range (Rb), from among the preceding vehicles detected in the detectable range (R0) of the preceding vehicle detector (30); or
an operation to select at least one preceding vehicle not to be included in the target preceding vehicle monitoring range (Rb) and at least one preceding vehicle which is not the at least one second selection operation target preceding vehicle (TV) and is to be included in the target preceding vehicle monitoring range (Rb), from among the preceding vehicles detected in the detectable range (R0) of the preceding vehicle detector (30),
when the selection operation unit (20) receives the operation to select the at least one preceding vehicle not to be included in the target preceding vehicle monitoring range (Rb) together with the second selection operation, the controller (40) sets the target preceding vehicle monitoring range (Rb) based on a position at the time of the selection of the at least one second selection operation target preceding vehicle (TV) and a position at the time of the selection of the at least one preceding vehicle not to be included in the target preceding vehicle monitoring range (Rb),
when the selection operation unit (20) receives the operation to select the at least one preceding vehicle which is not the at least one second selection operation target preceding vehicle (TV) and to be included in the target preceding vehicle monitoring range (Rb) together with the second selection operation, the controller (40) sets the target preceding vehicle monitoring range (Rb) based on a position at the time of the selection of the at least one second selection operation target preceding vehicle (TV) and a position at the time of the selection of the at least one preceding vehicle to be included in the target preceding vehicle monitoring range (Rb), and
when the selection operation unit (20) receives the operation to select the at least one preceding vehicle not to be included in the target preceding vehicle monitoring range (Rb) and the at least one preceding vehicle which is not the at least one second selection operation target preceding vehicle (TV) and to be included in the target preceding vehicle monitoring range (Rb), together with the second selection operation, the controller (40) sets the target preceding vehicle monitoring range (Rb) based on a position at the time of the selection of the at least one second selection operation target preceding vehicle (TV), a position at the time of the selection of the at least one preceding vehicle not to be included in the target preceding vehicle monitoring range (Rb), and a position at the time of the selection of the at least one preceding vehicle to be included in the target preceding vehicle monitoring range (Rb).

14. The leaning vehicle (1, 1A, 501) according to any one of claims 1 to 13, further comprising:
a handle unit (5, 541) having two grips,
the selection operation unit (20) includes a switch which is operable by a finger of a hand holding one of the two grips.

15. The leaning vehicle (1, 1A, 501) according to any one of claims 1 to 14, wherein, the selection operation unit (20) includes a touch panel configured to receive the target preceding vehicle selection operation when the leaning vehicle (1, 1A, 501) is not running.

## Patentansprüche

1. Ein Neigungsfahrzeug (1, 1A, 501), das folgende Merkmale aufweist:
eine Vorderradeinheit (2, 502), die zumindest ein Vorderrad umfasst;
eine Hinterradeinheit (3, 503), die zumindest ein Hinterrad umfasst und rückwärtig von der Vorderradeinheit (2, 502) in einer Fahrzeug-Vorne-Hinten-Richtung angeordnet ist;
einen Fahrzeugkörperrahmen (4, 504), der die Vorderradeinheit (2, 502) und die Hinterradeinheit (3, 503) stützt und dahingehend strukturiert ist, sich beim Kurvenfahren nach rechts in einer Fahrzeug-Rechts-Richtung zu neigen, und sich beim Kurvenfahren nach links in einer Fahrzeug-Links-Richtung zu neigen;
einen Vorausfahrendes-Fahrzeug-Detektor (30), der dazu konfiguriert ist, ein vorausfahrendes Fahrzeug in einem detektierbaren Bereich (R0) zu detektieren, das in der Fahrzeug-Vorne-Hinten-Richtung vor dem Neigungsfahrzeug (1, 1A, 501) ist; und
eine Steuerung (40), die dazu konfiguriert ist, eine Beschleunigung in einer Fahrzeug-Vorwärts-Richtung zu steuern, indem eine Drehung der Vorderradeinheit (2, 502) und/oder der Hinterradeinheit (3, 503) gesteuert wird, wobei die Steuerung (40) eine Zwischenfahrzeugabstandssteuerung ausführt, die eine Steuerung einer Beschleunigung in der Fahrzeug-Vorwärts-Richtung auf der Basis eines Abstands in der Fahrzeug-Vorne-Hinten-Richtung zwischen dem vorausfahrenden Fahrzeug und dem Neigungsfahrzeug (1, 1A, 501), der detektiert wird durch den Vorausfahrendes-Fahrzeug-Detektor (30), ist, wenn ein Zwischenfahrzeugabstandssteuerungsmodus an ist, und wobei die Steuerung (40) die Zwischenfahrzeugabstandssteuerung nicht ausführt, wenn der Zwischenfahrzeugabstandssteuerungsmodus aus ist,
wobei die Breite des Neigungsfahrzeugs (1, 1A, 501) in einer Fahrzeug-Links-Rechts-Richtung, wenn der Fahrzeugkörperrahmen (4, 504) aufrecht steht, halb so lang oder kürzer als die Breite einer Spur ist, und wobei das Neigungsfahrzeug (1, 1A, 501) dazu konfiguriert ist, an einer von einem Fahrer ausgewählten Position in der Fahrzeug-Links-Rechts-Richtung in der Spur zu fahren,
wobei das Neigungsfahrzeug (1, 1A, 501) ferner eine Auswahlbetätigungseinheit (20) aufweist, die dazu konfiguriert ist, eine Ziel-Vorausfahrendes-Fahrzeug-Auswahlbetätigung zu empfangen, durch die es dem Fahrer ermöglicht wird, zumindest ein Ziel-Vorausfahrendes-Fahrzeug (TV) aus vorausfahrenden Fahrzeugen in dem detektierbaren Bereich (R0) des Vorausfahrendes-Fahrzeug-Detektors (30) direkt oder indirekt auszuwählen, wobei die Anzahl des zumindest einen Ziel-Vorausfahrendes-Fahrzeugs (TV) kleiner ist als die Anzahl der vorausfahrenden Fahrzeuge in dem detektierbaren Bereich (R0), und
wobei die Steuerung (40) dazu konfiguriert ist, in der Zwischenfahrzeugabstandssteuerung die Beschleunigung des Neigungsfahrzeugs (1, 1A, 501) in der Fahrzeug-Vorwärts-Richtung auf der Basis eines Abstands in der Fahrzeug-Vorne-Hinten-Richtung zwischen dem Neigungsfahrzeug (1, 1A, 501) und jedem des zumindest einen Ziel-Vorausfahrendes-Fahrzeuges (TV) zu steuern, das in der Ziel-Vorausfahrendes-Fahrzeug-Auswahlbetätigung durch den Fahrer unter Verwendung der Auswahlbetätigungseinheit (20) direkt oder indirekt aus den vorausfahrenden Fahrzeugen in dem detektierbaren Bereich (R0) des Vorausfahrendes-Fahrzeug-Detektors (30) ausgewählt wird,
wobei das Neigungsfahrzeug **dadurch gekennzeichnet ist, dass**
die Auswahlbetätigungseinheit (20) dazu konfiguriert ist, Folgendes zu empfangen:
(a) eine erste Auswahlbetätigung, bei der der Fahrer einen Hostfahrzeug-Festdetektionsbereich (Ra) aus Optionen direkt auswählt, wobei der Hostfahrzeug-Festdetektionsbereich (Ra) ein Teil des detektierbaren Bereichs (R0) des Vorausfahrendes-Fahrzeug-Detektors (30) ist, wobei der Hostfahrzeug-Festdetektionsbereich (Ra) positionsmäßig fest relativ zu dem Neigungsfahrzeug (1, 1A, 501) ist und wobei der Hostfahrzeug-Festdetektionsbereich (Ra) dazu verwendet wird, zumindest ein Erste-Auswahlbetätigung-Ziel-Vorausfahrendes-Fahrzeug (TV) zu detektieren, das dem zumindest einen Ziel-Vorausfahrendes-Fahrzeug (TV) entspricht, und/oder
(c) eine dritte Auswahlbetätigung, bei der der Fahrer ein Referenz-Vorausfahrendes-Fahrzeug (BV) aus den vorausfahrenden Fahrzeugen auswählt, die in dem detektierbaren Bereich (R0) des Vorausfahrendes-Fahrzeug-Detektors (30) detektiert werden, wobei das Referenz-Vorausfahrendes-Fahrzeug (BV) eine Referenz ist zum Bestimmen eines anderen Fahrzeug-Festdetektionsbereichs (Rc), welcher ein Teil des detektierbaren Bereichs (R0) des Vorausfahrendes-Fahrzeug-Detektors (30) ist, wobei der andere Fahrzeug-Festdetektionsbereich (Rc) positionsmäßig fest in der Fahrzeug-Links-Rechts-Richtung relativ zu dem Referenz-Vorausfahrendes-Fahrzeug (BV) ist und wobei das Referenz-Vorausfahrendes-Fahrzeug (BV) verwendet wird zum Detektieren zumindest eines Dritte-Auswahlbetätigung-Ziel-Vorausfahrendes-Fahrzeug (TV), das dem zumindest einen Ziel-Vorausfahrendes-Fahrzeug (TV) entspricht,
wobei dann, wenn die Auswahlbetätigungseinheit (20) die Erste-Auswahlbetätigung empfängt, die Steuerung (40) die Zwischenfahrzeugabstandssteuerung auf der Basis des zumindest einen Erste-Auswahlbetätigung-Ziel-Vorausfahrendes-Fahrzeug (TV) ausführt, das entweder automatisch durch die Steuerung (40) ausgewählt wird oder durch den Fahrer unter Verwendung der Auswahlbetätigungseinheit (20) in einer vierten Auswahlbetätigung direkt ausgewählt wird, aus dem zumindest einen vorausfahrenden Fahrzeug, das in dem Hostfahrzeug-Festdetektionsbereich (Ra) detektiert wird, der durch den Fahrer in der ersten Auswahlbetätigung ausgewählt wird,
wobei dann, wenn die Auswahlbetätigungseinheit (20) die dritte Auswahlbetätigung empfängt, die Steuerung (40) den anderen Fahrzeug-Festdetektionsbereich (Rc) auf der Basis einer Position des Referenz-Vorausfahrendes-Fahrzeugs (BV) einstellt, das durch den Fahrer in der dritten Auswahlbetätigung ausgewählt wird, und die Zwischenfahrzeugabstandssteuerung auf der Basis des zumindest einen Dritte-Auswahlbetätigung-Ziel-Vorausfahrendes-Fahrzeugs (TV) ausführt, das entweder automatisch durch die Steuerung (40) ausgewählt wird oder durch den Fahrer unter Verwendung der Auswahlbetätigungseinheit (20) in einer fünften Auswahlbetätigung direkt ausgewählt wird, aus zumindest einem vorausfahrenden Fahrzeug, das in dem anderen Fahrzeug-Festdetektionsbereich (Rc) detektiert wird, und
wobei die Ziel-Vorausfahrendes-Fahrzeug-Auswahlbetätigung, durch die es dem Fahrer ermöglicht wird, das zumindest eine Ziel-Vorausfahrendes-Fahrzeug (TV) aus den vorausfahrenden Fahrzeugen in dem detektierbaren Bereich (R0) des Vorausfahrendes-Fahrzeug-Detektors (30) indirekt auszuwählen, eine der Erste-Auswahlbetätigung, eine Kombination der Erste-Auswahlbetätigung und der vierten Auswahlbetätigung, die dritte Auswahlbetätigung oder eine Kombination der Dritte-Auswahlbetätigung und der fünften Auswahlbetätigung ist.

2. Das Neigungsfahrzeug (1, 1A, 501) gemäß Anspruch 1, wobei der Vorausfahrendes-Fahrzeug-Detektor dazu konfiguriert ist, eine elektromagnetische Welle oder eine akustische Welle auszusenden, und das vorausfahrende Fahrzeug in dem detektierbaren Bereich (R0) durch die Verwendung der elektromagnetischen Welle oder der akustischen Welle, ohne eines fotografierten Bilds, zu detektieren.

3. Das Neigungsfahrzeug (1, 1A, 501) gemäß Anspruch 1 oder 2, wobei die Steuerung (40) dazu konfiguriert ist, in der Zwischenfahrzeugabstandssteuerung die Beschleunigung in der Fahrzeug-Vorwärts-Richtung auf der Basis eines Abstands in der Fahrzeug-Vorne-Hinten-Richtung und eines Abstands in einer Fahrzeug-Links-Rechts-Richtung zwischen dem Neigungsfahrzeug (1, 1A, 501) und jedem des zumindest einen Ziel-Vorausfahrendes-Fahrzeugs (TV), das indirekt in der Ziel-Vorausfahrendes-Fahrzeug-Auswahlbetätigung durch den Fahrer unter Verwendung der Auswahlbetätigungseinheit (20) ausgewählt wird, aus den vorausfahrenden Fahrzeugen in dem detektierbaren Bereich (R0) des Vorausfahrendes-Fahrzeug-Detektors (30) zu steuern.

4. Das Neigungsfahrzeug (1, 1A, 501) gemäß einem der Ansprüche 1 bis 3,
wobei die Auswahlbetätigungseinheit (20) dazu konfiguriert ist, (a) die Erste-Auswahlbetätigung und/oder (c) die dritte Auswahlbetätigung zu empfangen, und dazu konfiguriert ist, (b) eine Zweite-Auswahlbetätigung zu empfangen, bei der der Fahrer zumindest ein zweites Auswahlbetätigung-Ziel-Vorausfahrendes-Fahrzeug (TV) auswählt, das äquivalent ist zu dem zumindest einen Ziel-Vorausfahrendes-Fahrzeug (TV), aus den vorausfahrenden Fahrzeugen, die in dem detektierbaren Bereich (R0) des Vorausfahrendes-Fahrzeug-Detektors (30) detektiert werden, wobei dann, wenn die Auswahlbetätigungseinheit (20) die Zweite-Auswahlbetätigung empfängt, die Steuerung (40) die Zwischenfahrzeugabstandssteuerung auf der Basis des zumindest einen Zweite-Auswahlbetätigung-Ziel-Vorausfahrendes-Fahrzeugs (TV) ausführt, das direkt durch den Fahrer in der Zweite-Auswahlbetätigung ausgewählt wird, und
die Ziel-Vorausfahrendes-Fahrzeug-Auswahlbetätigung, durch die es dem Fahrer ermöglicht wird, das zumindest eine Ziel-Vorausfahrendes-Fahrzeug (TV) aus den vorausfahrenden Fahrzeugen in dem detektierbaren Bereich (R0) des Vorausfahrendes-Fahrzeug-Detektors (30) auszuwählen, die Erste-Auswahlbetätigung, eine Kombination der Erste-Auswahlbetätigung und der vierten Auswahlbetätigung, die Zweite-Auswahlbetätigung, die dritte Auswahlbetätigung und/oder eine Kombination der Dritte-Auswahlbetätigung und der fünften Auswahlbetätigung ist.

5. Das Neigungsfahrzeug (1, 1A, 501) gemäß einem der Ansprüche 1 bis 4, wobei
die Auswahlbetätigungseinheit (20) dazu konfiguriert ist, die Erste-Auswahlbetätigung zu empfangen, und die Optionen in der Erste-Auswahlbetätigung Folgendes umfassen:
(i) einen Referenzdetektionsbereich (Ra1, Ra4, Ra11) an einer mittleren Position in der Fahrzeug-Links-Rechts-Richtung des detektierbaren Bereichs (R0),
(ii) zumindest einer der Folgenden:
ein Detektionsbereich (Ra2), bei dem, in der Fahrzeug-Links-Rechts-Richtung, ein rechtes Ende rechts von einem rechten Ende in dem Referenzdetektionsbereich (Ra4) ist und ein linkes Ende rechts von einem linken Ende des Referenzdetektionsbereichs (Ra4) ist;
ein rechts vergrößerter Detektionsbereich (Ra2), bei dem, in der Fahrzeug-Links-Rechts-Richtung, ein rechtes Ende rechts von dem rechten Ende des Referenzdetektionsbereichs (Ra1) ist und ein linkes Ende identisch zu einer Position des linken Endes des Referenzdetektionsbereichs (Ra1) ist; oder
ein Rechtsdetektionsbereich (Ra12), bei dem, in der Fahrzeug-Links-Rechts-Richtung, ein rechtes Ende identisch mit der Position des rechten Endes des Referenzdetektionsbereichs (Ra11) ist und ein linkes Ende rechts von dem linken Ende des Referenzdetektionsbereichs (Ra11) ist, und
(iii) zumindest einer der Folgenden:
ein links verschobener Detektionsbereich (Ra3), bei dem, in der Fahrzeug-Links-Rechts-Richtung, ein linkes Ende links von dem linken Ende des Referenzdetektionsbereichs (Ra4) ist und ein rechtes Ende links von dem rechten Ende des Referenzdetektionsbereichs (Ra4) ist;
ein links vergrößerter Detektionsbereich (Ra3), bei dem, in der Fahrzeug-Links-Rechts-Richtung, ein linkes Ende links von dem linken Ende des Referenzdetektionsbereichs (Ra1) ist und ein rechtes Ende identisch mit der Position des rechten Endes des Referenzdetektionsbereichs (Ra1) ist; oder
ein Linksdetektionsbereich (Ra13), bei dem, in der Fahrzeug-Links-Rechts-Richtung, ein linkes Ende identisch mit der Position des linken Endes des Referenzdetektionsbereichs (Ra11) ist und ein rechtes Ende links von dem rechten Ende des Referenzdetektionsbereichs (Ra11) ist.

6. Das Neigungsfahrzeug (1, 1A, 501) gemäß Anspruch 5, wobei
die Optionen in der Erste-Auswahlbetätigung ferner Folgendes umfassen:
(iv) zumindest einen der Folgenden:
einen links-rechts-vergrößerten Detektionsbereich (Ra1), bei dem, in der Fahrzeug-Links-Rechts-Richtung, ein rechtes Ende links von dem rechten Ende des Referenzdetektionsbereichs (Ra4) ist und ein linkes Ende rechts von dem linken Ende des Detektionsbereichs (Ra4) ist; oder
einen links-rechts-vergrößerten Detektionsbereich (Ra4), bei dem, in der Fahrzeug-Links-Rechts-Richtung, ein rechtes Ende rechts von dem rechten Ende des Referenzdetektionsbereichs (Ra1) ist und ein linkes Ende links von dem linken Ende des Referenzdetektionsbereichs (Ra1) ist.

7. Das Neigungsfahrzeug (1, 1A, 501) gemäß einem der Ansprüche 1 bis 6, wobei
die Auswahlbetätigungseinheit (20) dazu konfiguriert ist, die Erste-Auswahlbetätigung zu empfangen, und
die Erste-Auswahlbetätigung eine Betätigung ist, um den Hostfahrzeug-Festdetektionsbereich (Ra) auszuwählen, was durch Folgendes erzielt wird:
eine Auswahl, des Fahrers, von zumindest einem vorausfahrenden Fahrzeug, das nicht in dem Hostfahrzeug-Festdetektionsbereich (Ra) enthalten sein soll, aus den vorausfahrenden Fahrzeugen, die in dem detektierbaren Bereich (R0) des Vorausfahrendes-Fahrzeug-Detektors (30) detektiert werden;
eine Auswahl, des Fahrers, von zumindest einem vorausfahrenden Fahrzeug, das in dem Hostfahrzeug-Festdetektionsbereich (Ra) enthalten sein soll, aus den vorausfahrenden Fahrzeugen, die in dem detektierbaren Bereich (R0) des Vorausfahrendes-Fahrzeug-Detektors (30) detektiert werden; oder
eine Auswahl, eines Fahrers, zumindest eines vorausfahrenden Fahrzeugs, das nicht in dem Hostfahrzeug-Festdetektionsbereich (Ra) enthalten sein soll, und zumindest eines vorausfahrenden Fahrzeugs, das in dem Hostfahrzeug-Festdetektionsbereich (Ra) enthalten sein soll, aus den vorausfahrenden Fahrzeugen, die in dem detektierbaren Bereich (R0) des Vorausfahrendes-Fahrzeug-Detektors (30) detektiert werden.

8. Das Neigungsfahrzeug (1, 1A, 501) gemäß einem der Ansprüche 1 bis 7, wobei
dann, wenn die Auswahlbetätigungseinheit (20) die Erste-Auswahlbetätigung empfängt, die Steuerung (40) als eines des zumindest einen Erste-Auswahlbetätigung-Ziel-Vorausfahrendes-Fahrzeugs (TV) Folgendes auswählt: (I) ein vorausfahrendes Fahrzeug, das am nächsten zu dem Neigungsfahrzeug (1, 1A, 501) in der Fahrzeug-Vorne-Hinten-Richtung ist, (II) ein vorausfahrendes Fahrzeug, das am nächsten zu dem Neigungsfahrzeug (1, 1A, 501) in der Fahrzeug-Links-Rechts-Richtung ist, oder (III) ein vorausfahrendes Fahrzeug, das am nächsten zu der Mitte des Hostfahrzeug-Festdetektionsbereichs (Ra) in der Fahrzeug-Links-Rechts-Richtung ist, aus vorausfahrenden Fahrzeugen, die in dem Hostfahrzeug-Festdetektionsbereich (Ra), der durch den Fahrer in der Erste-Auswahlbetätigung ausgewählt wird, detektiert werden, und
dann, wenn die Auswahlbetätigungseinheit (20) die dritte Auswahlbetätigung empfängt, die Steuerung (40) den anderen Fahrzeug-Festdetektionsbereich (Rc) auf der Basis einer Position des Referenz-Vorausfahrendes-Fahrzeugs (BV), ausgewählt durch den Fahrer in der Dritte-Auswahlbetätigung, einstellt, und als eines des zumindest einen Dritte-Auswahlbetätigung-Ziel-Vorausfahrendes-Fahrzeugs (TV) Folgendes auswählt: (I) ein vorausfahrendes Fahrzeug, das am nächsten zu dem Neigungsfahrzeug (1, 1A, 501) in der Fahrzeug-Vorne-Hinten-Richtung ist, (II) ein vorausfahrendes Fahrzeug, das am nächsten zu dem Neigungsfahrzeug (1, 1A, 501) in der Fahrzeug-Links-Rechts-Richtung ist, oder (III) ein vorausfahrendes Fahrzeug, das am nächsten zu der Mitte des Anderes-Fahrzeug-Festdetektionsbereichs (Rc) in der Fahrzeug-Links-Rechts-Richtung ist, aus vorausfahrenden Fahrzeugen, die in dem Anderes-Fahrzeug-Festdetektionsbereich (Rc) detektiert werden.

9. Das Neigungsfahrzeug (1, 1A, 501) gemäß einem der Ansprüche 1 bis 8, wobei
die Auswahlbetätigungseinheit (20) dazu konfiguriert ist, die Erste-Auswahlbetätigung zu erhalten, und
die Steuerung (40) dazu konfiguriert ist, in der Zwischenfahrzeugabstandssteuerung die Beschleunigung in der Fahrzeug-Vorwärts-Richtung auf der Basis eines Abstands in der Fahrzeug-Vorne-Hinten-Richtung und eines Abstands in der Fahrzeug-Links-Rechts-Richtung zwischen dem Neigungsfahrzeug (1, 1A, 501) und jedem von zwei Erste-Auswahlbetätigung-Ziel-Vorausfahrende-Fahrzeugen (TV) zu steuern, die entweder automatisch durch die Steuerung (40) ausgewählt werden oder direkt durch den Fahrer unter Verwendung der Auswahlbetätigungseinheit (20) in der vierten Auswahlbetätigung ausgewählt werden, aus vorausfahrenden Fahrzeugen, die in dem Hostfahrzeug-Festdetektionsbereich (Ra) detektiert werden, ausgewählt durch den Fahrer in der Erste-Auswahlbetätigung.

10. Das Neigungsfahrzeug (1, 1A, 501) gemäß einem der Ansprüche 4 bis 9, wobei
die Auswahlbetätigungseinheit (20) dazu konfiguriert ist, die Zweite-Auswahlbetätigung zu empfangen,
wobei die Zweite-Auswahlbetätigung eine Betätigung ist, bei der es dem Fahrer ermöglicht wird, zwei Zweite-Auswahlbetätigung-Ziel-Vorausfahrende-Fahrzeuge (TV) aus den vorausfahrenden Fahrzeugen, die in dem detektierbaren Bereich (R0) des Vorausfahrendes-Fahrzeug-Detektors (30) detektiert werden, auszuwählen, und
die Steuerung (40) dazu konfiguriert ist, in der Zwischenfahrzeugabstandssteuerung die Beschleunigung in der Fahrzeug-Vorwärts-Richtung auf der Basis eines Abstands in der Fahrzeug-Vorne-Hinten-Richtung und eines Abstands in der Fahrzeug-Links-Rechts-Richtung zwischen dem Neigungsfahrzeug (1, 1A, 501) und jedem der zwei Zweite-Auswahlbetätigung-Ziel-Vorausfahrende-Fahrzeuge (TV) zu steuern, die direkt durch den Fahrer in der Zweite-Auswahlbetätigung ausgewählt werden.

11. Das Neigungsfahrzeug (1, 1A, 501) gemäß einem der Ansprüche 1 bis 10, wobei
die Auswahlbetätigungseinheit (20) dazu konfiguriert ist, die dritte Auswahlbetätigung zu empfangen,
wobei die Steuerung (40) dazu konfiguriert ist, den Anderes-Fahrzeug-Festdetektionsbereich (Rc) auf der Basis einer durch den Fahrer ausgewählten Position des Referenz-Vorausfahrendes-Fahrzeugs (BV) in der Dritte-Auswahlbetätigung einzustellen, und
die Steuerung (40) dazu konfiguriert ist, in der Zwischenfahrzeugabstandssteuerung die Beschleunigung in der Fahrzeug-Vorwärts-Richtung auf der Basis eines Abstands in der Fahrzeug-Vorne-Hinten-Richtung und eines Abstands in der Fahrzeug-Links-Rechts-Richtung zwischen dem Neigungsfahrzeug (1, 1A, 501) und jedem von zwei Dritte-Auswahlbetätigung-Ziel-Vorausfahrende-Fahrzeugen (TV), die entweder automatisch durch die Steuerung (40) aus vorausfahrenden Fahrzeugen, die in dem Anderes-Fahrzeug-Festdetektionsbereich (Rc) detektiert werden, oder direkt durch den Fahrer unter Verwendung der Auswahlbetätigungseinheit (20) in der fünften Auswahlbetätigung ausgewählt werden, zu steuern.

12. Das Neigungsfahrzeug (1, 1A, 501) gemäß einem der Ansprüche 4 bis 11, wobei
die Auswahlbetätigungseinheit (20) dazu konfiguriert ist, die Zweite-Auswahlbetätigung zu empfangen,
wobei die Steuerung (40) dazu konfiguriert ist, einen Ziel-Vorausfahrendes-Fahrzeug-Überwachungsbereich (Rb) einzustellen, der Teil des detektierbaren Bereichs (R0) des Vorausfahrendes-Fahrzeug-Detektors (30) ist und hinsichtlich seiner Position relativ zu dem Neigungsfahrzeug (1, 1A, 501) fest ist, auf der Basis einer Position des zumindest einen Zweite-Auswahlbetätigung-Ziel-Vorausfahrendes-Fahrzeug (TV), wenn das zumindest eine Zweite-Auswahlbetätigung-Ziel-Vorausfahrendes-Fahrzeug (TV) in der Zweite-Auswahlbetätigung ausgewählt wird, und
dann, wenn zumindest eines des zumindest einen Zweite-Auswahlbetätigung-Ziel-Vorausfahrendes-Fahrzeugs (TV), das in der Zweite-Auswahlbetätigung ausgewählt wird, den Ziel-Vorausfahrendes-Fahrzeug-Überwachungsbereich (Rb) verlässt, die Steuerung (40) die Zwischenfahrzeugabstandssteuerung auf der Basis des Zweite-Auswahlbetätigung-Ziel-Vorausfahrendes-Fahrzeugs (TV) stoppt, das den Ziel-Vorausfahrendes-Fahrzeug-Überwachungsbereich (Rb) verlässt.

13. Das Neigungsfahrzeug (1, 1A, 501) gemäß Anspruch 12, wobei
die Auswahlbetätigungseinheit (20) dazu konfiguriert ist, die Zweite-Auswahlbetätigung zu empfangen,
wobei dann, wenn dieselbe die Zweite-Auswahlbetätigung empfängt, die Auswahlbetätigungseinheit (20) dazu in der Lage ist, zumindest eine der Folgenden zu empfangen:
eine Betätigung, um zumindest ein vorausfahrendes Fahrzeug auszuwählen, das nicht in dem Ziel-Vorausfahrendes-Fahrzeug-Überwachungsbereich (Rb) enthalten sein soll, aus den vorausfahrenden Fahrzeugen, die in dem detektierbaren Bereich (R0) des Vorausfahrendes-Fahrzeug-Detektors detektiert werden;
eine Betätigung, um zumindest ein vorausfahrendes Fahrzeug auszuwählen, das nicht das zumindest eine Zweite-Auswahlbetätigung-Ziel-Vorausfahrendes-Fahrzeug (TV) ist und in dem Ziel-Vorausfahrendes-Fahrzeug-Überwachungsbereich (Rb) enthalten sein soll, aus den vorausfahrenden Fahrzeugen, die in dem detektierbaren Bereich (R0) des Vorausfahrendes-Fahrzeug-Detektors (30) detektiert werden; oder eine Betätigung, um zumindest ein vorausfahrendes Fahrzeug auszuwählen, das nicht in dem Ziel-Vorausfahrendes-Fahrzeug-Überwachungsbereich (Rb) enthalten sein soll, und zumindest ein vorausfahrendes Fahrzeug, das nicht das zumindest eine Zweite-Auswahlbetätigung-Ziel-Vorausfahrendes-Fahrzeug (TV) ist und in dem Ziel-Vorausfahrendes-Fahrzeug-Überwachungsbereich (Rb) enthalten sein soll, aus den vorausfahrenden Fahrzeugen, die in dem detektierbaren Bereich (R0) des Vorausfahrendes-Fahrzeug-Detektors (30) detektiert werden,
wobei dann, wenn die Auswahlbetätigungseinheit (20) die Betätigung empfängt, um das zumindest eine vorausfahrende Fahrzeug auszuwählen, das nicht in dem Ziel-Vorausfahrendes-Fahrzeug-Überwachungsbereich (Rb) enthalten sein soll, gemeinsam mit der Zweite-Auswahlbetätigung, die Steuerung (40) den Ziel-Vorausfahrendes-Fahrzeug-Überwachungsbereich (Rb) auf der Basis einer Position zu dem Zeitpunkt der Auswahl des zumindest einen Zweite-Auswahlbetätigung-Ziel-Vorausfahrendes-Fahrzeugs (TV) und einer Position zu dem Zeitpunkt der Auswahl des zumindest einen vorausfahrenden Fahrzeugs, das nicht in dem Ziel-Vorausfahrendes-Fahrzeug-Überwachungsbereich (Rb) enthalten sein soll, einstellt,
wobei dann, wenn die Auswahlbetätigungseinheit (20) die Betätigung empfängt, um das zumindest eine vorausfahrende Fahrzeug auszuwählen, das nicht das zumindest eine Zweite-Auswahlbetätigung-Ziel-Vorausfahrendes-Fahrzeug (TV) ist und in dem Ziel-Vorausfahrendes-Fahrzeug-Überwachungsbereich (Rb) enthalten sein soll, gemeinsam mit der Zweite-Auswahlbetätigung, die Steuerung (40) den Ziel-Vorausfahrendes-Fahrzeug-Überwachungsbereich (Rb) auf der Basis einer Position zu dem Zeitpunkt der Auswahl des zumindest einen Zweite-Auswahlbetätigung-Ziel-Vorausfahrendes-Fahrzeugs (TV) und einer Position zum Zeitpunkt der Auswahl des zumindest einen vorausfahrenden Fahrzeugs, das in dem Ziel-Vorausfahrendes-Fahrzeug-Überwachungsbereich (Rb) enthalten sein soll, einstellt, und
wobei dann, wenn die Auswahlbetätigungseinheit (20) die Betätigung empfängt, um das zumindest eine vorausfahrende Fahrzeug, das nicht in dem Ziel-Vorausfahrendes-Fahrzeug-Überwachungsbereich (Rb) enthalten sein soll, und das zumindest eine vorausfahrende Fahrzeug, das nicht das zumindest eine Zweite-Auswahlbetätigung-Ziel-Vorausfahrendes-Fahrzeug (TV) ist und in dem Ziel-Vorausfahrendes-Fahrzeug-Überwachungsbereich (Rb) enthalten sein soll, gemeinsam mit der Zweite-Auswahlbetätigung, auszuwählen, die Steuerung (40) den Ziel-Vorausfahrendes-Fahrzeug-Überwachungsbereich (Rb) auf der Basis einer Position zu dem Zeitpunkt der Auswahl des zumindest einen Zweite-Auswahlbetätigung-Ziel-Vorausfahrendes-Fahrzeugs (TV), einer Position zu dem Zeitpunkt der Auswahl des zumindest einen vorausfahrenden Fahrzeugs, das nicht in dem Ziel-Vorausfahrendes-Fahrzeug-Überwachungsbereich (Rb) enthalten sein soll, und einer Position zu dem Zeitpunkt der Auswahl des zumindest einen vorausfahrenden Fahrzeugs, das in dem Ziel-Vorausfahrendes-Fahrzeug-Überwachungsbereich (Rb) enthalten sein soll, einstellt.

14. Das Neigungsfahrzeug (1, 1A, 501) gemäß einem der Ansprüche 1 bis 13, das ferner Folgendes aufweist:
eine Lenkereinheit (5, 541) mit zwei Griffen,
wobei die Auswahlbetätigungseinheit (20) einen Schalter umfasst, der durch einen Finger einer Hand, die eine der zwei Griffe hält, bedienbar ist.

15. Das Neigungsfahrzeug (1, 1A, 501) gemäß einem der Ansprüche 1 bis 14, wobei die Auswahlbetätigungseinheit (20) ein Berührungsfeld umfasst, das dazu konfiguriert ist, die Ziel-Vorausfahrendes-Fahrzeug-Auswahlbetätigung zu empfangen, wenn das Neigungsfahrzeug (1, 1A, 501) nicht läuft.

## Revendications

1. Véhicule à inclinaison (1, 1A, 501) comprenant:
une unité de roue avant (2, 502) qui comporte au moins une roue avant;
une unité de roue arrière (3, 503) qui comporte au moins une roue arrière et est disposée à l'arrière de l'unité de roue avant (2, 502) dans une direction avant-arrière du véhicule;
un châssis de carrosserie de véhicule (4, 504) qui supporte l'unité de roue avant (2, 502) et l'unité de roue arrière (3, 503), et est structuré pour s'incliner dans une direction à droite du véhicule lors d'un virage à droite et pour s'incliner dans une direction à gauche du véhicule lors d'un virage à gauche;
un détecteur de véhicules précédents (30) configuré pour détecter un véhicule précédent dans une plage détectable (R0) qui se situe devant le véhicule à inclinaison (1, 1A, 501) dans la direction avant-arrière du véhicule; et
un moyen de commande (40) configuré pour commander l'accélération dans une direction vers l'avant du véhicule en commandant la rotation d'au moins l'une parmi l'unité de roue avant (2, 502) et l'unité de roue arrière (3, 503), le moyen de commande (40) exécutant une commande de distance entre véhicules qui est une commande d'accélération dans la direction vers l'avant du véhicule sur base d'une distance dans la direction avant-arrière du véhicule entre le véhicule précédent et le véhicule à inclinaison (1, 1A, 501) détectée par le détecteur de véhicules précédents (30) lorsqu'un mode de commande de distance entre véhicules est activé, et le moyen de commande (40) n'exécute pas la commande de distance entre véhicules lorsque le mode de commande de distance entre véhicules est désactivé,
la largeur du véhicule à inclinaison (1, 1A, 501) dans une direction gauche-droite du véhicule lorsque le châssis de carrosserie de véhicule (4, 504) est vertical étant deux fois moins longue ou plus courte que la largeur d'une voie, et le véhicule à inclinaison (1, 1A, 501) étant configuré pour circuler dans une position sélectionnée par un conducteur dans la direction gauche-droite du véhicule sur la voie,
le véhicule à inclinaison (1, 1A, 501) comprenant par ailleurs une unité d'opérations de sélection (20) configurée pour recevoir une opération de sélection de véhicule précédent cible par laquelle il est permis au conducteur de sélectionner directement ou indirectement au moins un véhicule précédent cible (TV) parmi les véhicules précédents dans la plage détectable (R0) du détecteur de véhicules précédents (30), le nombre des au moins un véhicule précédent cible (TV) étant inférieur au nombre des véhicules précédents dans la plage détectable (R0), et
le moyen de commande (40) étant configuré pour commander, lors de la commande de distance entre véhicules, l'accélération du véhicule à inclinaison (1, 1 A, 501) dans la direction vers l'avant du véhicule sur base d'une distance dans la direction avant-arrière du véhicule entre le véhicule à inclinaison (1, 1A, 501) et chacun des au moins un véhicule précédent cible (TV) qui est sélectionné directement ou indirectement dans l'opération de sélection de véhicule précédent cible par le conducteur à l'aide de l'unité d'opérations de sélection (20) parmi les véhicules précédents dans la plage de détection (R0) du détecteur de véhicules précédents (30),
le véhicule à inclinaison étant **caractérisé par le fait que**
l'unité d'opérations de sélection (20) est configurée pour recevoir au moins l'une parmi:
(a) une première opération de sélection dans laquelle le conducteur sélectionne directement une plage de détection fixe de véhicule hôte (Ra) parmi les options, la plage de détection fixe de véhicule hôte (Ra) faisant partie de la plage détectable (R0) du détecteur de véhicules précédents (30), la plage de détection fixe de véhicule hôte (Ra) étant fixe en position par rapport au véhicule à inclinaison (1, 1A, 501), et la plage de détection fixe de véhicule hôte (Ra) étant utilisée pour détecter au moins un véhicule précédent cible (TV) de la première opération de sélection qui est équivalent à l'au moins un véhicule précédent cible (TV), et
(c) une troisième opération de sélection dans laquelle le conducteur sélectionne un véhicule précédent de référence (BV) parmi les véhicules précédents détectés dans la plage détectable (R0) du détecteur de véhicules précédents (30), le véhicule précédent de référence (BV) étant une référence pour déterminer une plage de détection fixe d'un autre véhicule (Rc) qui fait partie de la plage détectable (R0) du détecteur de véhicules précédents (30), la plage de détection fixe de l'autre véhicule (Rc) étant fixée en position dans la direction gauche-droite du véhicule par rapport au véhicule précédent de référence (BV), et le véhicule précédent de référence (BV) étant utilisé pour détecter au moins un véhicule précédent cible (TV) de la troisième opération de sélection équivalent à l'au moins un véhicule précédent cible (TV),
lorsque l'unité d'opération de sélection (20) reçoit la première opération de sélection, le moyen de commande (40) effectue la commande de distance entre véhicules sur base de l'au moins un véhicule précédent cible (TV) de la première opération de sélection qui est soit sélectionné automatiquement par le moyen de commande (40), soit sélectionné directement par le conducteur à l'aide de l'unité d'opérations de sélection (20) lors d'une quatrième opération de sélection, parmi au moins un véhicule précédent détecté dans la plage de détection fixe de véhicule hôte (Ra) sélectionné par le conducteur lors de la première opération de sélection,
lorsque l'unité d'opérations de sélection (20) reçoit la troisième opération de sélection, le moyen de commande (40) règle la plage de détection fixe de l'autre véhicule (Rc) sur base d'une position du véhicule précédent de référence (BV) sélectionné par le conducteur lors de la troisième opération de sélection et effectue la commande de distance entre véhicules sur base de l'au moins un véhicule précédent cible (TV) de la troisième opération de sélection qui est soit sélectionné automatiquement par le moyen de commande (40), soit sélectionné directement par le conducteur à l'aide de l'unité d'opérations de sélection (20) lors d'une cinquième opération de sélection, parmi au moins un véhicule précédent détecté dans la plage de détection fixe de l'autre véhicule (Rc), et
l'opération de sélection de véhicule précédent cible, par laquelle il est permis au conducteur de sélectionner indirectement l'au moins un véhicule précédent cible (TV) parmi les véhicules précédents dans la plage détectable (R0) du détecteur de véhicules précédents (30), est l'une quelconque parmi la première opération de sélection, une combinaison de la première opération de sélection et de la quatrième opération de sélection, la troisième opération de sélection, ou une combinaison de la troisième opération de sélection et de la cinquième opération de sélection.

2. Véhicule à inclinaison (1, 1A, 501) selon la revendication 1, dans lequel le détecteur de véhicules précédents (30) est configuré pour émettre une onde électromagnétique ou une onde acoustique, et pour détecter le véhicule précédent dans la plage détectable (R0) à l'aide de l'onde électromagnétique ou de l'onde acoustique, sans utiliser d'image photographiée.

3. Véhicule à inclinaison (1, 1A, 501) selon la revendication 1 ou 2, dans lequel le moyen de commande (40) est configuré pour commander, lors de la commande de distance entre véhicules, l'accélération dans la direction vers l'avant du véhicule sur base tant de la distance dans la direction avant-arrière du véhicule que de la distance dans une direction gauche-droite du véhicule entre le véhicule à inclinaison (1, 1A, 501) et chacun des au moins un véhicule précédent cible (TV) qui est sélectionné indirectement lors de l'opération de sélection de véhicule précédent cible par le conducteur à l'aide de l'unité d'opérations de sélection (20), parmi les véhicules précédents dans la plage détectable (R0) du détecteur de véhicules précédents (30).

4. Véhicule à inclinaison (1, 1A, 501) selon l'une quelconque des revendications 1 à 3, dans lequel
l'unité d'opérations de sélection (20) est configurée pour recevoir au moins l'une parmi (a) la première opération de sélection et (c) la troisième opération de sélection et est configurée pour recevoir (b) une deuxième opération de sélection dans laquelle le conducteur sélectionne directement au moins un deuxième véhicule précédent cible (TV) de l'opération de sélection qui est équivalent à l'au moins un véhicule précédent cible (TV) parmi les véhicules précédents détectés dans la plage détectable (R0) du détecteur de véhicules précédents (30),
dans lequel
lorsque l'unité d'opérations de sélection (20) reçoit la deuxième opération de sélection, le moyen de commande (40) effectue la commande de distance entre véhicules sur base de l'au moins un deuxième véhicule précédent cible (TV) de l'opération de sélection qui est sélectionné directement par le conducteur lors de la deuxième opération de sélection, et
l'opération de sélection de véhicule précédent cible, par laquelle il est permis au conducteur de sélectionner directement ou indirectement l'au moins un véhicule précédent cible (TV) parmi les véhicules précédents dans la plage détectable (R0) du détecteur de véhicules précédents (30), est l'une quelconque parmi la première opération de sélection, une combinaison de la première opération de sélection et de la quatrième opération de sélection, la deuxième opération de sélection, la troisième opération de sélection, ou une combinaison de la troisième opération de sélection et de la cinquième opération de sélection.

5. Véhicule à inclinaison (1, 1A, 501) selon l'une quelconque des revendications 1 à 4, dans lequel
l'unité d'opérations de sélection (20) est configurée pour recevoir la première opération de sélection, et
les options dans la première opération de sélection comportent:
(i) une plage de détection de référence (Ra1, Ra4, Ra11) au niveau d'une partie centrale dans la direction gauche-droite du véhicule de la plage détectable (R0),
(ii) au moins l'une parmi:
une plage de détection décalée à droite (Ra2) dans laquelle, dans la direction gauche-droite du véhicule, une extrémité droite se situe à droite d'une extrémité droite de la plage de détection de référence (Ra4) et une extrémité gauche se situe à droite d'une extrémité gauche de la plage de détection de référence (Ra4);
une plage de détection élargie à droite (Ra2) dans laquelle, dans la direction gauche-droite du véhicule, une extrémité droite se situe à droite de l'extrémité droite de la plage de détection de référence (Ra1) et une extrémité gauche est identique en position à l'extrémité gauche de la plage de détection de référence (Ra1); ou
une plage de détection à droite (Ra12) dans laquelle, dans la direction gauche-droite du véhicule, une extrémité droite est identique en position à l'extrémité droite de la plage de détection de référence (Ra11) et une extrémité gauche se situe à droite de l'extrémité gauche de la plage de détection de référence (Ra11), et
(iii) au moins l'une parmi:
une plage de détection décalée à gauche (Ra3) dans laquelle, dans la direction gauche-droite du véhicule, une extrémité gauche se situe à gauche de l'extrémité gauche de la plage de détection de référence (Ra4) et une extrémité droite se situe à gauche de l'extrémité droite de la plage de détection de référence (Ra4);
une plage de détection élargie à gauche (Ra3) dans laquelle, dans la direction gauche-droite du véhicule, une extrémité gauche se situe à gauche de l'extrémité gauche de la plage de détection de référence (Ra1) et une extrémité droite est identique en position à l'extrémité droite de la plage de détection de référence (Ra1); ou
une plage de détection à gauche (Ra13) dans laquelle, dans la direction gauche-droite du véhicule, une extrémité gauche est identique en position à l'extrémité gauche de la plage de détection de référence (Ra11) et une extrémité droite se situe à gauche de l'extrémité droite de la plage de détection de référence (Ra11).

6. Véhicule à inclinaison (1, 1A, 501) selon la revendication 5, dans lequel
les options dans la première opération de sélection comportent par ailleurs:
(iv) au moins l'une parmi:
une plage de détection réduite gauche-droite (Ra1) dans laquelle, dans la direction gauche-droite du véhicule, une extrémité droite se situe à gauche de l'extrémité droite de la plage de détection de référence (Ra4) et une extrémité gauche se situe à droite de l'extrémité gauche de la plage de détection de référence (Ra4); ou
une plage de détection élargie gauche-droite (Ra4) dans laquelle, dans la direction gauche-droite du véhicule, une extrémité droite se situe à droite de l'extrémité droite de la plage de détection de référence (Ra1) et une extrémité gauche se situe à gauche de l'extrémité gauche de la plage de détection de référence (Ra1).

7. Véhicule à inclinaison (1, 1A, 501) selon l'une quelconque des revendications 1 à 6, dans lequel
l'unité d'opérations de sélection (20) est configurée pour recevoir la première opération de sélection, et
la première opération de sélection est une opération destinée à sélectionner la plage de détection fixe de véhicule hôte (Ra) qui est réalisée par l'une parmi:
une sélection par le conducteur d'au moins un véhicule précédent ne devant pas être inclus dans la plage de détection fixe de véhicule hôte (Ra), parmi les véhicules précédents détectés dans la plage détectable (R0) du détecteur de véhicules précédents (30);
une sélection par le conducteur d'au moins un véhicule précédent devant être inclus dans la plage de détection fixe de véhicule hôte (Ra), parmi les véhicules précédents détectés dans la plage détectable (R0) du détecteur de véhicules précédents (30); ou
une sélection par le conducteur tant d'au moins un véhicule précédent ne devant pas être inclus dans la plage de détection fixe de véhicule hôte (Ra) et d'au moins un véhicule précédent devant être inclus dans la plage de détection fixe de véhicule hôte (Ra), parmi les véhicules précédents détectés dans la plage de détection (R0) du détecteur de véhicules précédents (30).

8. Véhicule à inclinaison (1, 1A, 501) selon l'une quelconque des revendications 1 à 7, dans lequel
lorsque l'unité d'opérations de sélection (20) reçoit la première opération de sélection, le moyen de commande (40) sélectionne, comme l'un parmi les au moins un véhicule précédent cible de la première opération de sélection (TV), (I) un véhicule précédent le plus proche du véhicule à inclinaison (1, 1A, 501) dans la direction avant-arrière du véhicule, (II) un véhicule précédent le plus proche du véhicule à inclinaison (1, 1A, 501) dans la direction gauche-droite du véhicule, ou (III) un véhicule précédent le plus proche du centre de la plage de détection fixe de véhicule hôte (Ra) dans la direction gauche-droite du véhicule, parmi les véhicules précédents détectés dans la plage de détection fixe de véhicule hôte (Ra) sélectionnée par le conducteur lors de la première opération de sélection, et
lorsque l'unité d'opérations de sélection (20) reçoit la troisième opération de sélection, le moyen de commande (40) règle la plage de détection fixe de l'autre véhicule (Rc) sur base d'une position du véhicule précédent de référence (BV) sélectionnée par le conducteur lors de la troisième opération de sélection et sélectionne, comme l'un des au moins un véhicule précédent cible (TV) de la troisième opération de sélection, (1) un véhicule précédent le plus proche du véhicule à inclinaison (1, 1A, 501) dans la direction avant-arrière du véhicule, (II) un véhicule précédent le plus proche du véhicule à inclinaison (1, 1A, 501) dans la direction gauche-droite du véhicule, ou (III) un véhicule précédent le plus proche du centre de la plage de détection fixe de l'autre véhicule (Rc) dans la direction gauche-droite du véhicule, parmi les véhicules précédents détectés dans la plage de détection fixe de l'autre véhicule (Rc).

9. Véhicule à inclinaison (1, 1A, 501) selon l'une quelconque des revendications 1 à 8, dans lequel
l'unité d'opérations de sélection (20) est configurée pour recevoir la première opération de sélection, et
le moyen de commande (40) est configuré pour commander, lors de la commande de distance entre véhicules, l'accélération dans la direction vers l'avant du véhicule sur base tant de la distance dans la direction avant-arrière du véhicule que de la distance dans la direction gauche-droite du véhicule entre le véhicule à inclinaison (1, 1A, 501) et chacun de deux véhicules précédents cibles (TV) de la première opération de sélection qui sont soit sélectionnés automatiquement par le moyen de commande (40), soit sélectionnés directement par le conducteur à l'aide de l'unité d'opérations de sélection (20) lors de la quatrième opération de sélection, parmi les véhicules précédents détectés dans la plage de détection fixe de véhicule hôte (Ra) sélectionnée par le conducteur lors de la première opération de sélection.

10. Véhicule à inclinaison (1, 1A, 501) selon l'une quelconque des revendications 4 à 9, dans lequel
l'unité d'opérations de sélection (20) est configurée pour recevoir la deuxième opération de sélection,
la deuxième opération de sélection est une opération dans laquelle il est permis au conducteur de sélectionner directement deux véhicules précédents cibles (TV) de la deuxième opération de sélection parmi les véhicules précédents détectés dans la plage détectable (R0) du détecteur de véhicules précédents (30), et
le moyen de commande (40) est configuré pour commander, lors de la commande de distance entre véhicules, l'accélération dans la direction vers l'avant du véhicule sur base tant de la distance dans la direction avant-arrière du véhicule que de la distance dans la direction gauche-droite du véhicule entre le véhicule à inclinaison (1, 1A, 501) et chacun des deux véhicules précédents cibles (TV) de la deuxième opération de sélection directement sélectionnés par le conducteur lors de la deuxième opération de sélection.

11. Véhicule à inclinaison (1, 1A, 501) selon l'une quelconque des revendications 1 à 10, dans lequel
l'unité d'opérations de sélection (20) est configurée pour recevoir la troisième opération de sélection,
le moyen de commande (40) est configuré pour régler la plage de détection fixe de l'autre véhicule (Rc) sur base d'une position sélectionnée par le conducteur du véhicule précédent de référence (BV) dans la troisième opération de sélection, et
le moyen de commande (40) est configuré pour commander, lors de la commande de distance entre véhicules, l'accélération dans la direction vers l'avant du véhicule sur base tant de la distance dans la direction avant-arrière du véhicule que de la distance dans la direction gauche-droite du véhicule entre le véhicule à inclinaison (1, 1A, 501) et chacun des deux véhicules précédents cibles (TV) de la troisième opération de sélection qui sont soit sélectionnés automatiquement par le moyen de commande (40) parmi les véhicules précédents détectés dans l'autre plage de détection fixe de véhicule (Rc), soit sélectionnés directement par le conducteur à l'aide de l'unité d'opérations de sélection (20) dans la cinquième opération de sélection.

12. Véhicule à inclinaison (1, 1A, 501) selon l'une quelconque des revendications 4 à 11, dans lequel
l'unité d'opérations de sélection (20) est configurée pour recevoir la deuxième opération de sélection,
le moyen de commande (40) est configuré pour régler une plage de surveillance de véhicule précédent cible (Rb) qui fait partie de la plage détectable (RO) du détecteur de véhicules précédents (30) et est fixe en position par rapport au véhicule à inclinaison (1, 1A, 501), sur base d'une position de l'au moins un deuxième véhicule précédant cible (TV) de l'opération de sélection lorsque l'au moins un deuxième véhicule précédant cible (TV) de l'opération de sélection est sélectionné lors de la deuxième opération de sélection, et
lorsqu'au moins l'un des au moins un deuxième véhicule précédent cible (TV) de l'opération de sélection sélectionné lors de la deuxième opération de sélection sort de la plage de surveillance de véhicule précédent cible (Rb), le moyen de commande (40) arrête le commande de distance entre véhicules sur base du véhicule précédent cible (TV) de la deuxième opération de sélection qui sort de la plage de surveillance du véhicule précédent cible (Rb).

13. Véhicule à inclinaison (1, 1A, 501) selon la revendication 12, dans lequel
l'unité d'opérations de sélection (20) est configurée pour recevoir la deuxième opération de sélection,
lors de la réception de la deuxième opération de sélection, l'unité d'opérations de sélection (20) est à même de recevoir au moins l'une parmi:
une opération destinée à sélectionner au moins un véhicule précédent à ne pas inclure dans la plage de surveillance de véhicule précédent cible (Rb), parmi les véhicules précédents détectés dans la plage détectable (RO) du détecteur de véhicules précédents (30);
une opération destinée à sélectionner au moins un véhicule précédent qui n'est pas l'au moins un véhicule précédent cible (TV) de la deuxième opération de sélection et qui doit être inclus dans la plage de surveillance de véhicule précédent cible (Rb), parmi les véhicules précédents détectés dans la plage détectable (RO) du détecteur de véhicules précédents (30); ou
une opération destinée à sélectionner au moins un véhicule précédent à ne pas inclure dans la plage de surveillance de véhicule précédent cible (Rb) et au moins un véhicule précédent qui n'est pas l'au moins un véhicule précédent cible (TV) de la deuxième opération et qui doit être inclus dans la plage de surveillance de véhicule précédent cible (Rb), parmi les véhicules précédents détectés dans la plage détectable (RO) du détecteur de véhicules précédents (30),
lorsque l'unité d'opérations de sélection (20) reçoit l'opération destinée à sélectionner l'au moins un véhicule précédent à ne pas inclure dans la plage de surveillance de véhicule précédent cible (Rb) ensemble avec la deuxième opération de sélection, le moyen de commande (40) règle la plage de surveillance de véhicule précédent cible (Rb) sur base d'une position au moment de la sélection de l'au moins un véhicule précédant cible (TV) de la deuxième opération de sélection et d'une position au moment de la sélection de l'au moins un véhicule précédent à ne pas inclure dans la plage de surveillance de véhicule précédent cible (Rb),
lorsque l'unité d'opérations de sélection (20) reçoit l'opération destinée à sélectionner l'au moins un véhicule précédent qui n'est pas l'au moins un véhicule précédent cible (TV) de la deuxième opération de sélection et à inclure dans la plage de surveillance de véhicule précédent cible (Rb) ensemble avec la deuxième opération de sélection, le moyen de commande (40) règle la plage de surveillance de véhicule précédent cible (Rb) sur base d'une position au moment de la sélection de l'au moins un véhicule précédent cible (TV) de la deuxième opération de sélection et d'une position au moment de la sélection de l'au moins un véhicule précédent à inclure dans la plage de surveillance de véhicule précédent cible (Rb), et
lorsque l'unité d'opérations de sélection (20) reçoit l'opération destinée à sélectionner l'au moins un véhicule précédent à ne pas inclure dans la plage de surveillance de véhicule précédent cible (Rb) et l'au moins un véhicule précédent qui n'est pas l'au moins un véhicule précédent cible (TV) de la deuxième opération de sélection et à inclure dans la plage de surveillance de véhicule précédent cible (Rb) ensemble avec la deuxième opération de sélection, le moyen de commande (40) règle la plage de surveillance de véhicule précédent cible (Rb) sur base d'une position au moment de la sélection de l'au moins un véhicule précédant cible (TV) de la deuxième opération de sélection, d'une position au moment de la sélection de l'au moins un véhicule précédent à ne pas inclure dans la plage de surveillance de véhicule précédent cible (Rb), et d'une position au moment de la sélection de l'au moins un véhicule précédent à inclure dans la plage de surveillance de véhicule précédent cible (Rb).

14. Véhicule à inclinaison (1, 1A, 501) selon l'une quelconque des revendications 1 à 13, comprenant par ailleurs:
une unité de poignée (5, 541) présentant deux poignées,
l'unité d'opérations de sélection (20) comporte un commutateur qui peut être actionné par un doigt d'une main tenant l'une des deux poignées.

15. Véhicule à inclinaison (1, 1A, 501) selon l'une quelconque des revendications 1 à 14, dans lequel l'unité d'opérations de sélection (20) comporte un panneau tactile configuré pour recevoir l'opération de sélection de véhicule précédent cible lorsque le véhicule à inclinaison (1, 1A, 501) ne circule pas.
